# EUROPEAN PATENT APPLICATION

(11) **EP 4 675 592 A1**
(43) Date of publication of application: **07.01.2026**
(21) Application number: 24763792.9
(22) Date of filing: 22.02.2024
(51) Int. Cl.: G08G 1/16, B60W 30/095, G01C 21/36, G16Y 10/40, G16Y 20/20, G16Y 40/30

(54) **DRIVING ASSISTANCE DEVICE AND COMPUTER PROGRAM**

(30) Priority: 27.02.2023 JP 2023028623
(71) Applicant: AISIN CORPORATION, Kariya-shi, Aichi 448-8650 (JP)
(72) Inventor: OGAWA, Keita, Kariya-shi, Aichi 448-8650 (JP); NIMURA, Mitsuhiro, Kariya-shi, Aichi 448-8650 (JP); NAGASAKA, Hidenori, Kariya-shi, Aichi 448-8650 (JP)
(74) Representative: Winter, Brandl - Partnerschaft mbB
(86) International application number: PCT/JP2024/006587
(87) International publication number: WO 2024/181312

(57) **Abstract**

A planned travel path along which a vehicle travels is obtained. Obstacle information about an obstacle present on the planned travel path is also obtained. When, upon traveling along the planned travel path, there is included a turn segment where the vehicle travels with a turn, orientations of the vehicle taken when the vehicle reaches a starting point and an end point of the turn segment are set based on the planned travel path. A travel course that avoids the obstacle on the turn segment and that is recommended for the vehicle to travel along on the turn segment is generated using the obstacle information, on condition that the orientations of the vehicle upon reaching the starting point and the end point of the turn segment coincide with the set orientations. Driving assistance for the vehicle is provided based on the generated travel course.

## Description

### TECHNICAL FIELD

The present invention relates to a driving assistance device and a computer program that provide assistance in driving a vehicle.

### BACKGROUND ART

In recent years, as a vehicle's travel mode, there has been newly proposed an autonomous driving assistance system that aids a user in driving a vehicle by allowing a vehicle side to perform some or all of user's driving operations, in addition to manual travel in which the vehicle travels based on user's driving operations. The autonomous driving assistance system, for example, detects a current location of the vehicle, a lane in which the vehicle travels, and the locations of other vehicles around the vehicle whenever necessary, and autonomously performs control of the vehicle such as steering, a drive source, and a brake such that the vehicle travels along a preset path.

In addition, when travel by the above-described autonomous driving assistance is performed or when various other types of driving assistance for a vehicle are provided, a travel course recommended for the vehicle to travel along is generated in advance for roads on which the vehicle travels, based on a planned travel path of the vehicle, map information, etc. Here, for a technique of generating the above-described travel course for, particularly, a segment where the vehicle travels with a turn such as a curved road (hereinafter, referred to as turn segment), for example, JP 2017-100652 A discloses a technique of generating a travel course that has improved vehicle's ride comfort by generating, as a travel course, a course with a larger radius of curvature of a turn portion than a course that goes along a center line of a road. In addition, there is also disclosed a technique in which when the generated travel course is close to an obstacle such as another vehicle, the travel course is modified to keep a predetermined safe distance between the vehicle and the obstacle.

### CITATIONS LIST

### PATENT LITERATURE

Patent Literature 1: JP 2017-100652 A (paragraphs 0037 to 0040 and FIGS. 5 to 7)

### SUMMARY OF INVENTION

### TECHNICAL PROBLEMS

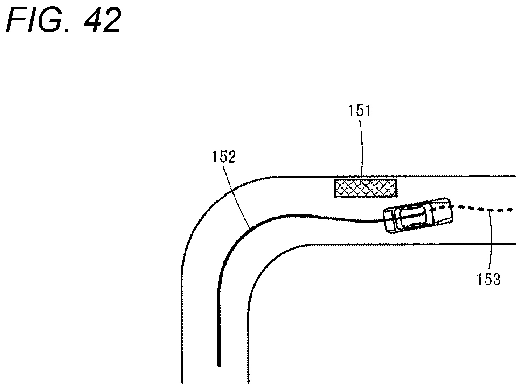

However, in the above-described Patent Literature 1, upon making the above-described modification to the travel course based on the obstacle, the orientations of the vehicle at a starting point and an end point of a turn segment are not taken into account. Thus, there is a case in which as a result of modifying a travel course to avoid an obstacle, the orientations of the vehicle at a starting point and an end point of a turn segment taken when the vehicle travels along the modified travel course do not coincide with recommended orientations. For example, an example shown in FIG. 42 shows a travel course 152 for a turn segment including a curved road that has been modified to avoid an obstacle 151. When a vehicle travels along the travel course 152, at an end point of the turn segment, the orientation (angle) of a vehicle body of the vehicle does not coincide with an orientation that goes along a straight-ahead road that continues from the turn segment, and the vehicle is not in a neutral steering state, either, and thus, a modified course 153 is required to make a modification such that the orientation of the vehicle body is identical to a straight-ahead direction on the road and the vehicle is in a neutral steering state. As a result, smooth vehicle behavior is not obtained, causing a sudden speed change or lateral acceleration, and thus, there has been a problem that a travel course recommended for the vehicle is not obtained. Note that although FIG. 42 shows a portion where the end point of the turn segment is connected to the road that continues from the turn segment, the same problem may occur in a portion where a starting point of the turn segment is connected to a road present before the turn segment.

The present invention is made to solve the above-described conventional problem, and provides a driving assistance device and a computer program that enable, when, particularly, a travel course that avoids an obstacle is generated for a turn segment, generation of a travel course recommended for a vehicle that prevents the vehicle from performing unnatural behavior at at least one of a starting point and an end point of the turn segment, by which a sudden speed change or lateral acceleration is suppressed.

### SOLUTIONS TO PROBLEMS

To provide the above-described driving assistance device and computer program, a driving assistance device according to the present invention includes: planned travel path obtaining means for obtaining a planned travel path along which a vehicle travels; turn travel segment obtaining means for obtaining a turn segment where the vehicle travels with a turn upon traveling along the planned travel path; obstacle information obtaining means for obtaining obstacle information about an obstacle present on the planned travel path; orientation setting means for setting an orientation of the vehicle taken when the vehicle reaches a target point including at least one of a starting point and an end point of the turn segment, based on the planned travel path; travel course generating means for generating, using the obstacle information, a travel course that avoids the obstacle on the turn segment and that is recommended for the vehicle to travel along on the turn segment, on condition that an orientation of the vehicle upon reaching the target point coincides with the orientation set by the orientation setting means; and driving assistance means for providing driving assistance for the vehicle, based on the travel course generated by the travel course generating means.

Note that the "turn segment where a vehicle travels with a turn" includes, for example, a segment that bends at a predetermined angle such as a right angle and an intersection (junction) segment where the vehicle is to make a left or right turn, in addition to a segment of a road that curves at a predetermined curvature in an arc-shaped manner (also including a shape of a road whose curvature changes). Furthermore, the "turn segment where a vehicle travels with a turn" also includes a segment where the vehicle travels with a turn not only on a public road but also within a facility such as a parking lot, a segment where the vehicle makes a turn to enter or exit a parking space, a segment where the vehicle travels with a turn to enter a facility from a public road or to enter the public road from within the facility, or the like.

In addition, the "orientation of a vehicle" may be the orientation (angle) of a vehicle body of the vehicle or may be a traveling direction of the vehicle (the orientation of tires or steering angle).

In addition, a computer program according to the present invention is a program that generates assistance information used for driving assistance provided on a vehicle. Specifically, the computer program causes a computer to function as: planned travel path obtaining means for obtaining a planned travel path along which a vehicle travels; turn travel segment obtaining means for obtaining a turn segment where the vehicle travels with a turn upon traveling along the planned travel path; obstacle information obtaining means for obtaining obstacle information about an obstacle present on the planned travel path; orientation setting means for setting an orientation of the vehicle taken when the vehicle reaches a target point including at least one of a starting point and an end point of the turn segment, based on the planned travel path; travel course generating means for generating, using the obstacle information, a travel course that avoids the obstacle on the turn segment and that is recommended for the vehicle to travel along on the turn segment, on condition that an orientation of the vehicle upon reaching the target point coincides with the orientation set by the orientation setting means; and driving assistance means for providing driving assistance for the vehicle, based on the travel course generated by the travel course generating means.

### ADVANTAGEOUS EFFECTS OF INVENTION

According to the driving assistance device and the computer program according to the present invention that have the above-described configurations, when, particularly, a travel course that avoids an obstacle is generated for a turn segment, it becomes possible to generate a travel course recommended for a vehicle that prevents the vehicle from performing unnatural behavior at at least one of a starting point and an end point of the turn segment, by which a sudden speed change or lateral acceleration is suppressed. As a result, it becomes possible to provide appropriate driving assistance that does not impose a burden on a vehicle's occupant.

### BRIEF DESCRIPTION OF DRAWINGS

FIG. 1 is a schematic configuration diagram showing a driving assistance system according to the present embodiment.
FIG. 2 is a block diagram showing a configuration of the driving assistance system according to the present embodiment.
FIG. 3 is a diagram showing an example of obstacle information managed by a server device according to the present embodiment.
FIG. 4 is a block diagram showing a navigation device according to the present embodiment.
FIG. 5 is a flowchart of an autonomous driving assistance program according to the present embodiment.
FIG. 6 is a diagram showing an area for which high-precision map information is obtained.
FIG. 7 is a diagram that describes a method of calculating a dynamic travel course.
FIG. 8 is a flowchart of a subprocess program of a static travel course generating process.
FIG. 9 is a diagram showing an example of a planned travel path of a vehicle.
FIG. 10 is a diagram showing an example of a lane network constructed for the planned travel path shown in FIG. 9.
FIG. 11 is a flowchart of a subprocess program of a travel course generating process for a turn segment.
FIG. 12 is a diagram showing an example of a turn segment including a curved road.
FIG. 13 is a diagram that describes a case in which a reference travel course overlaps an obstacle.
FIG. 14 is a flowchart of a subprocess program of a reference travel course generating process.
FIG. 15 is a diagram showing an example of orientations of the vehicle set at a starting point and an end point of the turn segment.
FIG. 16 is a diagram that describes a method of setting a clipping point.
FIG. 17 is a diagram that describes an example of generating a plurality of start vectors and end vectors.
FIG. 18 is a diagram that describes a case in which an arc with the largest radius of curvature that passes through a start vector and an end vector in traveling directions of the respective vectors is included in a lane in which the vehicle travels.
FIG. 19 is a diagram that describes a case in which an arc with the largest radius of curvature that passes through a start vector and an end vector in traveling directions of the respective vectors is not included in a lane in which the vehicle travels.
FIG. 20 is a diagram showing candidates for travel courses generated for the turn segment.
FIG. 21 is a diagram showing a method of generating a second travel course and a third travel course.
FIG. 22 is a diagram showing exemplary corrections for smoothing a travel course.
FIG. 23 is a flowchart of a subprocess program of a first avoidance travel course generating process.
FIG. 24 is a diagram that describes an example of generating a plurality of start vectors and end vectors.
FIG. 25 is a flowchart of a subprocess program of a second avoidance travel course generating process.
FIG. 26 is a diagram showing a guide line set along a center line of a lane.
FIG. 27 is a diagram showing an area where the center line of the lane overlaps an obstacle.
FIG. 28 is a diagram showing a target overlapping segment.
FIG. 29 is a diagram of after modifying the guide line such that the target overlapping segment does not overlap the obstacle.
FIG. 30 is a diagram showing the guide line and a moving average line for the guide line.
FIG. 31 is a diagram showing candidates for a passing point through which the vehicle passes and which are set at boundaries by which the target overlapping segment is divided.
FIG. 32 is a diagram showing passing vectors that identify orientations of the vehicle which are recommended upon passing through the passing points.
FIG. 33 is a flowchart of a subprocess program of a third avoidance travel course generating process.
FIG. 34 is a diagram showing a guide line set along a reference travel course.
FIG. 35 is a diagram showing an area where the reference travel course overlaps an obstacle.
FIG. 36 is a diagram showing a target overlapping segment.
FIG. 37 is a diagram of after modifying the guide line such that the target overlapping segment does not overlap the obstacle.
FIG. 38 is a diagram showing an example of a travel course generated when an intersection (junction) segment where the vehicle is to make a left or right turn serves as a turn segment.
FIG. 39 is a diagram showing an example of a travel course generated when a segment where the vehicle makes a turn to enter (entering) or exit (exiting) a parking space serves as a turn segment.
FIG. 40 is a diagram showing an example of a travel course generated when a segment where the vehicle travels with a turn to enter a facility from a public road or to enter the public road from within the facility serves as a turn segment.
FIG. 41 is a diagram showing examples of a course that connects between two vectors (a start vector and an end vector) set at any two points.
FIG. 42 is a diagram that describes a problem of conventional art.

### DESCRIPTION OF EMBODIMENTS

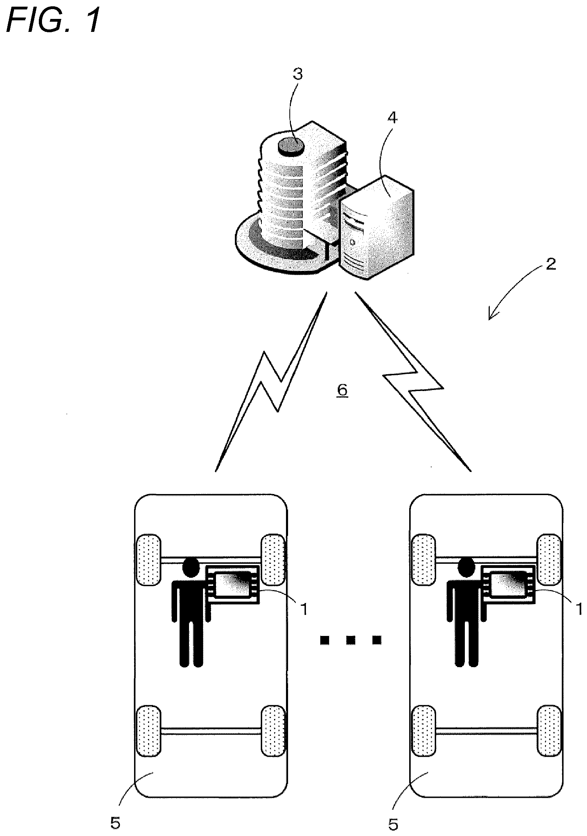

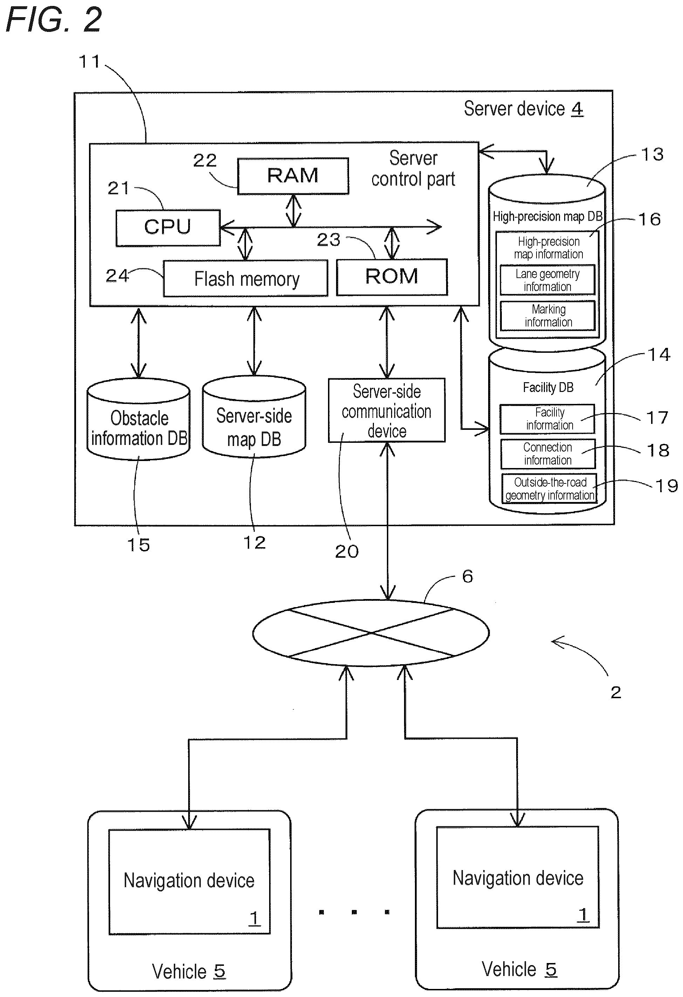

One embodiment in which a driving assistance device according to the present invention is embodied into a navigation device 1 will be described in detail below with reference to the drawings. First, a schematic configuration of a driving assistance system 2 including navigation devices 1 according to the present embodiment will be described using FIGS. 1 and 2. FIG. 1 is a schematic configuration diagram showing the driving assistance system 2 according to the present embodiment. FIG. 2 is a block diagram showing a configuration of the driving assistance system 2 according to the present embodiment.

As shown in FIG. 1, the driving assistance system 2 according to the present embodiment basically includes a server device 4 provided in an information delivery center 3; and navigation devices 1 that are mounted on vehicles 5 to provide various types of assistance in autonomous driving of the vehicles 5. In addition, it is configured such that the server device 4 and the navigation devices 1 can perform transmission and reception of electronic data with each other through a communication network 6. Note that instead of the navigation device 1, any other in-vehicle device mounted on the vehicle 5 or a vehicle control device that performs control on the vehicle 5 may be used.

Here, the vehicle 5 is a vehicle that can perform assistance travel by autonomous driving assistance in which the vehicle autonomously travels along a preset path or along a road independently of user's driving operations, in addition to manual driving travel in which the vehicle travels based on user's driving operations.

In addition, it may be configured such that autonomous driving assistance is provided for all road segments or only while the vehicle travels on a specific road segment (e.g., an expressway having a gate at a boundary (it does not matter whether or not there is a person or whether or not a toll is collected)). The following description is made assuming that autonomous driving segments in which autonomous driving assistance for the vehicle is provided include parking lots, in addition to all road segments including general roads and expressways, and that autonomous driving assistance is basically provided during a period from when the vehicle starts traveling until the vehicle finishes traveling (until the vehicle is parked). Note, however, that it is desirable that when the vehicle travels on autonomous driving segments, instead of always providing autonomous driving assistance, autonomous driving assistance be provided only in a situation in which a user has selected provision of autonomous driving assistance (e.g., an autonomous driving start button is turned on) and it is determined that the vehicle is allowed to travel by autonomous driving assistance. On the other hand, the vehicle 5 may be a vehicle that can only perform assistance travel by autonomous driving assistance.

In vehicle control performed by autonomous driving assistance, for example, a current location of the vehicle, a lane in which the vehicle travels, and locations of obstacles around the vehicle are detected whenever necessary, and as will be described later, control of the vehicle such as steering, a drive source, and a brake is autonomously performed such that the vehicle travels along a travel course generated by the navigation device 1 and at speeds in accordance with a speed plan created likewise. Note that in assistance travel by autonomous driving assistance of the present embodiment, for lane changes, left and right turns, and parking operations, too, the vehicle travels by performing the above-described vehicle control by autonomous driving assistance, but a configuration may be adopted in which special travel such as lane changes, left and right turns, and parking operations is performed by manual driving instead of performing travel by autonomous driving assistance.

Meanwhile, the navigation device 1 is an in-vehicle device mounted on the vehicle 5 to display a map of an area around the location of the vehicle 5 based on map data provided in the navigation device 1 or map data obtained from an external source, or to allow a user to input a destination, or to display a current location of the vehicle on a map image, or to provide guidance on movement along a set guidance path. In the present embodiment, particularly, when the vehicle performs assistance travel by autonomous driving assistance, various types of assistance information about the autonomous driving assistance are generated. The assistance information includes, for example, a travel course recommended for the vehicle to travel along (including a recommended way of moving into lanes), selection of a parking location where the vehicle is parked at a destination, and a speed plan indicating vehicle speeds at which the vehicle travels. Note that details of the navigation device 1 will be described later.

In addition, the server device 4 performs a path search in response to a request from a navigation device 1. Specifically, information required for a path search such as a place of departure and a destination is transmitted together with a path search request from a navigation device 1 to the server device 4 (note, however, that in a case of re-searching, information about a destination does not necessarily need to be transmitted). Then, the server device 4 having received the path search request performs a path search using map information provided in the server device 4, to identify a recommended path from the place of departure to the destination. Thereafter, the identified recommended path is transmitted to the navigation device 1 which is a source of the request. The navigation device 1 can provide a user with information about the received recommended path and can also generate, using the recommended path, various types of assistance information about autonomous driving assistance as will be described later.

Furthermore, the server device 4 has high-precision map information which is map information with higher precision and facility information, separately from normal map information used for the above-described path search. The high-precision map information includes, for example, information about the lane geometries of roads (lane-by-lane road geometries, curvatures, bending angles, lane widths, etc.) and markings (centerlines, lane lines, edge lines, guide lines, etc.) painted on the roads. In addition to such information, the high-precision map information also includes information about intersections, etc. Furthermore, the high-precision map information also includes, for entities (hereinafter, referred to as regulatory objects) that regulate vehicle's travel (more specifically, request a stop or deceleration) such as speed limits set for roads, traffic lights, crosswalks, railroad crossings, and stop road signs, regulatory information that identifies the types and locations of the regulatory objects. On the other hand, the facility information is more detailed information about facilities that is stored separately from information about facilities included in the map information. The facility information includes, for example, information about facility floor plans and the entrances and exits of parking lots, layout information of passages (vehicle roads) and parking spaces that are provided in the parking lots, information on makings that mark off the parking spaces and the vehicle roads, and connection information indicating a connection relationship between the entrance and exit of a parking lot and a lane.

Furthermore, the server device 4 also has, for an obstacle present on a road or in a parking lot, obstacle information that identifies the type and location of the obstacle (when the obstacle is present over an area, a shape (occupied region)). Here, the obstacle corresponds, for example, to a vehicle parked or stopped on a road, a sign or a fence placed at a construction site on a road, a bump and a dip in a road surface, or a structure such as a pole or a block. Note that the type and location of an obstacle can be identified by, for example, collecting camera images captured by vehicles that actually travel on a road or in a parking lot, or results of detection by sensors of the vehicles.

In response to a request from a navigation device 1, the server device 4 delivers high-precision map information, facility information, or obstacle information, and the navigation device 1 generates various types of assistance information about autonomous driving assistance as will be described later, using the high-precision map information, facility information, or obstacle information delivered from the server device 4. Note that the high-precision map information is basically map information for only a road (link) and an area around the road (link), but may be map information that also includes an area other than the area around the road.

Note, however, that the above-described path search process does not necessarily need to be performed by the server device 4, and if the navigation device 1 has map information, then the navigation device 1 may perform the path search process. In addition, high-precision map information and facility information may be provided in advance in the navigation device 1, instead of being delivered from the server device 4.

In addition, the communication network 6 includes multiple base stations placed all over the country; and telecommunications companies that manage and control their base stations, and is formed by connecting the base stations to the telecommunications companies by wire (optical fiber, ISDN, etc.) or wirelessly. Here, the base stations each have a transceiver and an antenna that perform communication with navigation devices 1. While the base station performs radio communication with a corresponding telecommunications company, the base station serves as an end of the communication network 6 and plays a role in relaying communication of navigation devices 1 present in an area (cell) where radio waves from the base station reach, to the server device 4.

Next, a configuration of the server device 4 in the driving assistance system 2 will be described in more detail using FIG. 2. The server device 4 includes, as shown in FIG. 2, a server control part 11, a server-side map DB 12 connected to the server control part 11 and serving as information recording means, a high-precision map DB 13, a facility DB 14, an obstacle information DB 15, and a server-side communication device 20.

The server control part 11 is a control unit (an MCU, an MPU, etc.) that performs overall control of the server device 4, and includes a CPU 21 serving as a computing device and a control device; and internal storage devices such as a RAM 22 used as a working memory when the CPU 21 performs various types of arithmetic processing, a ROM 23 having recorded therein a program for control, etc., and a flash memory 24 that stores a program read from the ROM 23. Note that the server control part 11 has various types of means serving as processing algorithms with an ECU of a navigation device 1 which will be described later.

Meanwhile, the server-side map DB 12 is storage means for storing server-side map information which is the latest version of map information registered based on input data from an external source or based on input operations. Here, the server-side map information includes a road network and various types of information required for a path search, path guidance, and map display. The server-side map information includes, for example, network data including nodes and links that represent a road network, link data about roads (links), node data about node points, intersection data about each intersection, point data about points such as facilities, map display data for displaying a map, search data for searching for a path, and retrieval data for retrieving a point.

In addition, the high-precision map DB 13 is storage means for storing high-precision map information 16 which is map information with higher precision than the above-described server-side map information. The high-precision map information 16 is, particularly, map information that stores more detailed information about roads on which vehicles are to travel. In the present embodiment, the high-precision map information 16 includes, for example, for a road, information about lane geometries (lane-by-lane road geometries, curvatures, lane widths, etc.) and markings (centerlines, lane lines, edge lines, guide lines, etc.) painted on the road. Furthermore, the high-precision map information 16 records therein data representing road gradients, cants, banks, merge areas, a location where the number of lanes decreases, a location where the road width becomes narrower, railroad crossings, etc., and records therein: for a curve, data representing the radius of curvature and the bending angle; data representing intersections and junctions such as T-junctions; for road attributes, data representing downhill slopes, uphill slopes, etc.; and for the types of road, data representing general roads such as national highways, prefectural highways, and narrow streets, and toll roads such as national expressways, urban expressways, automobile roads, general toll roads, and toll bridges. Furthermore, the high-precision map information 16 also includes, for entities (regulatory objects) that regulate vehicle's travel such as speed limits set for roads, traffic lights, crosswalks, railroad crossings, and stop road signs, regulatory information that identifies the types and locations of the regulatory objects. In addition, for the information about markings, there is stored information that identifies what type of marking is placed on a road in what way. Note that in the following description, it is assumed that the "curve" includes a shape of a road that bends at a predetermined angle such as a right angle (e.g., an L-junction), in addition to a shape of a road that curves at a predetermined curvature in an arc-shaped manner (also including a shape of a road whose curvature changes). Note also that there is also stored information that identifies a passage segment in a traveling direction for each lane and a connection to a road for each lane (specifically, a correspondence between a lane included in a road before passing through an intersection and a lane included in a road after passing through the intersection), in addition to the number of lanes on a road.

Meanwhile, the facility DB 14 is storage means for storing more detailed information about facilities than information about facilities stored in the above-described server-side map information. Specifically, the facility DB 14 includes, as facility information 17, particularly, for a parking lot where a vehicle is to be parked (including both a parking lot belonging to a facility and an independent parking lot), information that identifies the location of the entrance and exit of the parking lot, information that identifies a layout of parking spaces in the parking lot, information about markings that mark off the parking spaces and vehicle roads, etc. Note that for the vehicle roads, there are included at least information that identifies the geometries of the vehicle roads (i.e., regions in the parking lot where vehicles can travel); and, if there are entities (regulatory objects) on the vehicle roads that regulate vehicle's travel such as speed limits, regulatory information that identifies the types and locations of the regulatory objects. For a facility other than parking lots, there is included information that identifies a floor plan of the facility. The floor plan includes, for example, information that identifies the locations of entrances and exits, passages, stairs, elevators, and escalators. In addition, for a complex commercial facility having a plurality of tenants, there is included information that identifies the location of each tenant that occupies the complex commercial facility. The facility information 17 may be, particularly, information generated by 3D modeling of a parking lot or a facility. Furthermore, the facility DB 14 also includes connection information 18 indicating a connection relationship between a lane included in an entry road facing the entrance and exit of a parking lot and the entrance and exit of the parking lot; and outside-the-road geometry information 19 that identifies a region between the entry road and the entrance and exit of the parking lot, through which vehicles can pass.

Note that the high-precision map information 16 is basically map information for only a road (link) and an area around the road (link), but may be map information that also includes an area other than the area around the road. In addition, although in the example shown in FIG. 2, the server-side map information stored in the server-side map DB 12 and the information stored in the high-precision map DB 13 and the facility DB 14 are different pieces of map information, the information stored in the high-precision map DB 13 and the facility DB 14 may be a part of the server-side map information. In addition, the high-precision map DB 13 and the facility DB 14 may be a single database instead of being separated from each other.

In addition, the obstacle information DB 15 is storage means for cumulatively storing information about obstacles (obstacle information) that is generated by conducting statistics or an analysis on probe information collected from each vehicle. Note that the obstacles are objects that cause interference to travel of a vehicle that travels on a road or within a facility such as a parking lot, and correspond, for example, to vehicles parked or stopped on roads, signs or fences placed at construction sites on roads, bumps and dips in road surfaces, and structures such as poles and blocks. Note that in the present embodiment, the probe information collected from vehicles includes, particularly, (a) results of detection of obstacles obtained by using in-vehicle cameras or other sensors provided on the vehicles; and (b) the coordinates of the locations and vehicle speeds of the vehicles. By conducting statistics or an analysis on those pieces of probe information, the types and locations of obstacles present on roads or within facilities such as parking lots across the country are managed by a server device 4 side and stored in the obstacle information DB 15. Note, however, that information about obstacles may be obtained from a source other than the probe information.

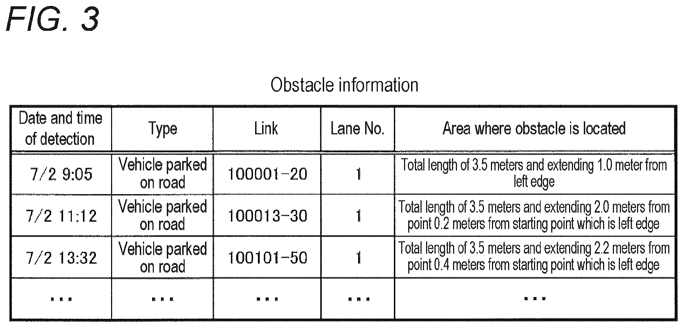

FIG. 3 is a diagram showing an example of obstacle information stored in the obstacle information DB 15. As shown in FIG. 3, the obstacle information includes information that identifies the date and time of detection of an obstacle, the type of the obstacle, and information that identifies the location of the obstacle. Furthermore, the location of the obstacle is identified by a link ID of a link where the obstacle is located, a distance from a starting point of the link, a lane in which the obstacle is located, and an area in the lane where the obstacle is located. For example, the example shown in FIG. 3 shows that a parked vehicle is located at a location 20 meters from a starting point of a link with the link ID "100001" and in an area having a total length (in a traveling direction on a road) of 3.5 meters and extending 1 meter from a left edge of the leftmost lane. In addition, the example shows that a parked vehicle is located at a location 30 meters from a starting point of a link with the link ID "100013" and in an area having a total length (in a traveling direction on a road) of 3.5 meters and extending 2.0 meters from a point 0.2 meters from a starting point which is a left edge of the leftmost lane. In addition, the example shows that a parked vehicle is located at a location 50 meters from a starting point of a link with the link ID "100101" and in an area having a total length (in a traveling direction on a road) of 3.5 meters and extending 2.2 meters from a point 0.4 meters from a starting point which is a left edge of the leftmost lane. Note that the "Lane No." specifies, for example, a plurality of lanes included in a link as 1, 2, 3... in this order from left.

In response to a request from a navigation device 1, the server device 4 delivers obstacle information stored in the obstacle information DB 15 to the navigation device 1. On the other hand, the navigation device 1 having the obstacle information delivered thereto generates various types of assistance information about autonomous driving assistance as will be described later, using the delivered obstacle information.

Meanwhile, the server-side communication device 20 is a communication device for performing communication with the navigation device 1 of each vehicle 5 through the communication network 6. In addition, besides the navigation devices 1, it is also possible to receive traffic information including pieces of information such as traffic congestion information, regulatory information, and traffic accident information that are transmitted from an Internet network, traffic information centers, e.g., a VICS (registered trademark: Vehicle Information and Communication System) center, etc.

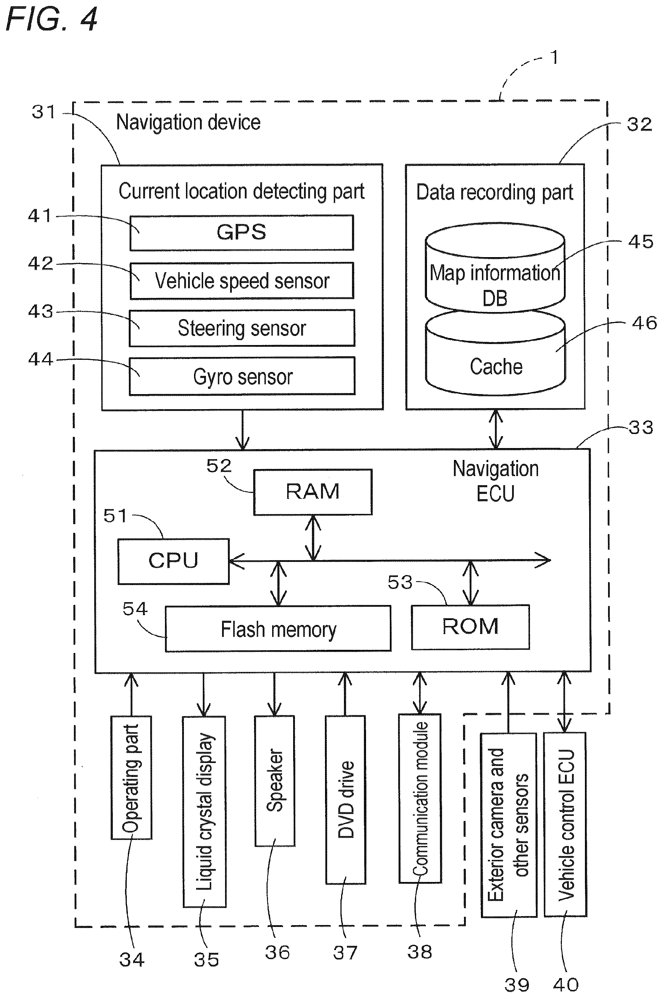

Next, a schematic configuration of the navigation device 1 mounted on the vehicle 5 will be described using FIG. 4. FIG. 4 is a block diagram showing the navigation device 1 according to the present embodiment.

As shown in FIG. 4, the navigation device 1 according to the present embodiment includes a current location detecting part 31 that detects a current location of a vehicle having the navigation device 1 mounted thereon; a data recording part 32 having various types of data recorded therein; a navigation ECU 33 that performs various types of arithmetic processing based on inputted information; an operating part 34 that accepts operations from a user; a liquid crystal display 35 that displays to the user a map of an area around the vehicle, information about a guidance path (a planned travel path of the vehicle) set on the navigation device 1, etc.; a speaker 36 that outputs voice guidance about path guidance; a DVD drive 37 that reads a DVD which is a storage medium; and a communication module 38 that performs communication with information centers such as a probe center and a VICS center. In addition, an exterior camera 39 and various types of sensors that are installed on the vehicle having the navigation device 1 mounted thereon are connected to the navigation device 1 through an in-vehicle network such as a CAN. Furthermore, the navigation device 1 is also connected to a vehicle control ECU 40 that performs various types of control on the vehicle having the navigation device 1 mounted thereon, such that the navigation device 1 and the vehicle control ECU 40 can perform two-way communication.

The components included in the navigation device 1 will be described one by one below.

The current location detecting part 31 includes a GPS 41, a vehicle speed sensor 42, a steering sensor 43, a gyro sensor 44, etc., and can detect the current location and orientation of the vehicle, a vehicle's travel speed, a current time, etc. Here, particularly, the vehicle speed sensor 42 is a sensor for detecting a vehicle's moving distance and vehicle speed, and generates pulses according to the rotation of vehicle's drive wheels and outputs a pulse signal to the navigation ECU 33. Then, the navigation ECU 33 counts the generated pulses, thereby calculating the rotational speed of the drive wheels and a moving distance. Note that the navigation device 1 does not need to include all of the above-described four types of sensors, and may be configured to include only one or a plurality of types of sensors among those sensors.

In addition, the data recording part 32 includes a hard disk (not shown) serving as an external storage device and a recording medium; and a recording head (not shown) which is a driver for reading a map information DB 45 recorded on the hard disk, a cache 46, a predetermined program, etc., and for writing predetermined data to the hard disk. Note that the data recording part 32 may include a flash memory, a memory card, or an optical disc such as a CD or a DVD, instead of a hard disk. Note also that, in the present embodiment, as described above, the server device 4 searches for a path to a destination, and thus, the map information DB 45 may be omitted. Even if the map information DB 45 is omitted, it is also possible to obtain map information from the server device 4 as necessary.

Here, the map information DB 45 is storage means having stored therein, for example, link data about roads (links), node data about node points, search data used in processes related to a path search or change, facility data about facilities, map display data for displaying a map, intersection data about each intersection, and retrieval data for retrieving a point.

Meanwhile, the cache 46 is storage means for saving high-precision map information 16, facility information 17, connection information 18, outside-the-road geometry information 19, and obstacle information that have been delivered from the server device 4 in the past. A saving period can be set as appropriate, and may be, for example, a predetermined period (e.g., one month) after storage or a period until a vehicle's ACC power supply (accessory power supply) is turned off. In addition, after the amount of data stored in the cache 46 has reached an upper limit, the data may be sequentially deleted in order of oldest to newest. The navigation ECU 33 generates various types of assistance information about autonomous driving assistance, using the high-precision map information 16, facility information 17, connection information 18, outside-the-road geometry information 19, and obstacle information stored in the cache 46. Details will be described later.

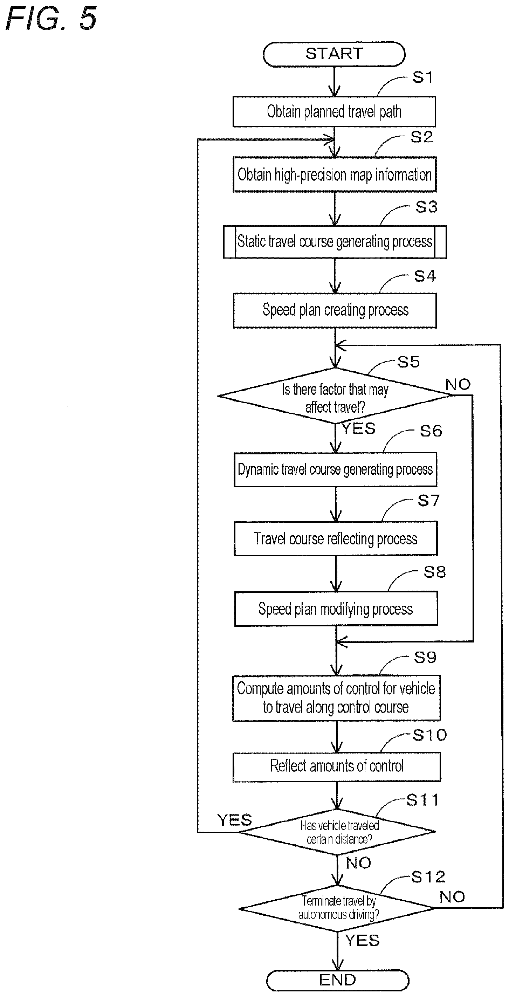

Meanwhile, the navigation ECU (electronic control unit) 33 is an electronic control unit that performs overall control of the navigation device 1, and includes a CPU 51 serving as a computing device and a control device; and internal storage devices such as a RAM 52 that is used as a working memory when the CPU 51 performs various types of arithmetic processing and that stores path data obtained when a path has been searched, etc., a ROM 53 having recorded therein a program for control, an autonomous driving assistance program (see FIG. 5) which will be described later, etc., and a flash memory 54 that stores a program read from the ROM 53. Note that the navigation ECU 33 has various types of means serving as processing algorithms. For example, planned travel path obtaining means obtains a planned travel path along which the vehicle travels. Turn travel segment obtaining means obtains a turn segment where the vehicle travels with a turn upon traveling along the planned travel path. Obstacle information obtaining means obtains obstacle information about obstacles present on the planned travel path. Orientation setting means sets an orientation of the vehicle taken when the vehicle reaches a target point including at least one of a starting point and an end point of the turn segment, based on the planned travel path. Travel course generating means generates, using the obstacle information, a travel course that avoids an obstacle on the turn segment and that is recommended for the vehicle to travel along on the turn segment, on condition that an orientation of the vehicle upon reaching the target point coincides with the orientation set by the orientation setting means. Driving assistance means provides driving assistance for the vehicle, based on the travel course generated by the travel course generating means.

The operating part 34 is operated, for example, upon inputting a place of departure which is a travel start point and a destination which is a travel end point, and includes a plurality of operating switches such as various types of keys and buttons (not shown). Based on a switch signal outputted by, for example, depression of a given switch, the navigation ECU 33 performs control to perform a corresponding one of various types of operation. Note that the operating part 34 may include a touch panel provided on the front of the liquid crystal display 35. Note also that the operating part 34 may include a microphone and a voice recognition device.

In addition, on the liquid crystal display 35 there are displayed a map image including roads, traffic information, operation guidance, an operation menu, guidance on keys, information on guidance in accordance with a guidance path (planned travel path), news, weather forecasts, time, e-mails, TV programs, etc. Note that instead of the liquid crystal display 35, a HUD or an HMD may be used.

In addition, the speaker 36 outputs voice guidance that provides guidance on travel along a guidance path (planned travel path) or guidance on traffic information, based on an instruction from the navigation ECU 33.

In addition, the DVD drive 37 is a drive that can read data recorded on a recording medium such as a DVD or a CD. Based on the read data, for example, music or video is played back or the map information DB 45 is updated. Note that instead of the DVD drive 37, a card slot for performing reading and writing on a memory card may be provided.

In addition, the communication module 38 is a communication device for receiving traffic information, probe information, weather information, etc., that are transmitted from traffic information centers, e.g., a VICS center and a probe center, and corresponds, for example, to a mobile phone or a DCM. In addition, the communication module 38 also includes a vehicle-to-vehicle communication device that performs communication between vehicles and a roadside-device-to-vehicle communication device that performs communication with a roadside device. In addition, the communication module 38 is also used to transmit and receive to/from the server device 4 path information searched by the server device 4, high-precision map information 16, facility information 17, connection information 18, outside-the-road geometry information 19, obstacle information, etc.

In addition, the exterior camera 39 includes, for example, a camera that uses a solid-state imaging device such as a CCD, and is attached to the upper side of a vehicle's front bumper and is placed such that its optical-axis direction faces downward at a predetermined angle relative to the horizontal. When the vehicle travels on an autonomous driving segment, the exterior camera 39 captures an image of an area ahead in a traveling direction of the vehicle. In addition, the navigation ECU 33 performs image processing on the captured image having been captured, thereby detecting markings painted on a road on which the vehicle travels, or obstacles such as other vehicles around the vehicle, and generates various types of assistance information about autonomous driving assistance, based on results of the detection. For example, when an obstacle has been detected, a new travel course where the vehicle travels avoiding or following the obstacle is generated. Furthermore, when an obstacle has been detected that causes interference to travel of the vehicle, such as a vehicle parked or stopped on a road, a sign or a fence placed at a construction site on a road, a bump and a dip in a road surface, or a structure such as a pole or a block, information that identifies the location and type of the detected obstacle is transmitted as probe information to the server device 4. Note that the exterior camera 39 may be configured to be disposed on the rear or side of the vehicle other than the front. Note also that for means for detecting obstacles, a sensor such as millimeter-wave radar or a laser sensor, vehicle-to-vehicle communication, or roadside-device-to-vehicle communication may be used instead of a camera.

In addition, the vehicle control ECU 40 is an electronic control unit that controls the vehicle having the navigation device 1 mounted thereon. In addition, vehicle's driving parts such as steering, a brake, and an accelerator are connected to the vehicle control ECU 40, and in the present embodiment, particularly, after the vehicle starts autonomous driving assistance, each driving part is controlled, by which autonomous driving assistance for the vehicle is provided. In addition, when an override has been performed by the user during autonomous driving assistance, the fact that the override has been performed is detected.

Here, the navigation ECU 33 transmits, after starting traveling, various types of assistance information about autonomous driving assistance generated by the navigation device 1 to the vehicle control ECU 40 through the CAN. Then, using the received various types of assistance information, the vehicle control ECU 40 provides autonomous driving assistance to be provided after starting traveling. The assistance information includes, for example, a travel course recommended for the vehicle to travel along and a speed plan indicating vehicle speeds at which the vehicle travels.

Next, an autonomous driving assistance program executed by the CPU 51 in the navigation device 1 according to the present embodiment that has the above-described configuration will be described based on FIG. 5. FIG. 5 is a flowchart of the autonomous driving assistance program according to the present embodiment. Here, the autonomous driving assistance program is a program that is executed when vehicle's travel by autonomous driving assistance has started after turning on the vehicle's ACC power supply (accessory power supply) and that performs assistance travel by autonomous driving assistance in accordance with assistance information generated by the navigation device 1. In addition, programs shown in flowcharts of the following FIGS. 5, 8, 11, 14, 23, 25 and 33 are stored in the RAM 52 or the ROM 53 included in the navigation device 1, and are executed by the CPU 51.

First, in the autonomous driving assistance program, at step (hereinafter, abbreviated as S) 1, the CPU 51 obtains a path along which the vehicle is planning to travel in the future (hereinafter, referred to as planned travel path). Note that the planned travel path of the vehicle is, for example, a recommended path to a destination that is searched by the server device 4 in response to the user setting the destination. Note that when a destination is not set, a path where the vehicle travels along a road from a current location of the vehicle may serve as a planned travel path.

In addition, when a recommended path is searched, first, the CPU 51 transmits a path search request to the server device 4. Note that the path search request includes a terminal ID that identifies the navigation device 1 which is a sender of the path search request; and information that identifies a place of departure (e.g., a current location of the vehicle) and a destination. Note that upon re-searching, information that identifies a destination is not necessarily needed. Thereafter, the CPU 51 receives searched-path information transmitted from the server device 4 in response to the path search request. The searched-path information is information that identifies a recommended path (center route) from the place of departure to the destination (e.g., a series of links included in the recommended path) which is searched by the server device 4 based on the transmitted path search request and using the latest version of map information. The search is performed using, for example, the publicly known Dijkstra's algorithm.

Note that in the above-described search for a recommended path, it is desirable to select a parking location (parking space) recommended for the vehicle to be parked in a parking lot at the destination, and search for a recommended path to the selected parking location. Namely, it is desirable that a recommended path to be searched also include, in addition to a path to the parking lot, a path indicating vehicle's movement in the parking lot. For example, from among open parking spaces in the parking lot, a parking space that is easy for the user to stop the vehicle (e.g., a parking space near the entrance and exit of the parking lot or a parking space with no other vehicles parked on the left and right sides thereof) is determined to be a candidate for a parking location recommended for the user to park the vehicle. In addition, for selection of a parking location, it is desirable to select a parking location with a less burden on the user, taking into account movement on foot after parking the vehicle or vehicle's movement upon exiting the parking location when leaving, in addition to vehicle's movement to the parking location.

In addition, a plurality of candidates for a parking location recommended for the vehicle to be parked may be selected. In addition, when a plurality of candidates for a parking location recommended for the vehicle to be parked have been selected, at the above-described S1, a recommended path to each parking location is obtained as a planned travel path, i.e., a plurality of candidates for a planned travel path are obtained. Furthermore, even when only one recommended parking location has been selected, if there are a plurality of possible recommended paths to the parking location, then a plurality of candidates for a planned travel path may be obtained. Note that when a plurality of candidates for a planned travel path have been obtained at the above-described S1, at S25 which will be described later, ways of moving into lanes are compared between the plurality of planned travel paths to determine one recommended way of moving into lanes, by which one parking location and one planned travel path are also determined.

In addition, when a traveling direction in which the vehicle can enter a parking lot where the user parks the vehicle from a road facing the entrance and exit of the parking lot (hereinafter, referred to as entry road) is limited (e.g., only an entry by a left turn is allowed), which is found out by the server device 4 referring to connection information 18 indicating a connection relationship between a lane included in the entry road and the entrance and exit of the parking lot, the server device 4 performs the above-described search for a planned travel path, taking also into account an entry direction. Note that for a method of searching for a route, search means other than Dijkstra's algorithm may be used. Note also that a search for a planned travel path at the above-described S1 may be performed by the navigation device 1 instead of the server device 4.

Then, at S2, the CPU 51 obtains high-precision map information 16 for areas that start from the current location of the vehicle and include the planned travel path obtained at the above-described S1.

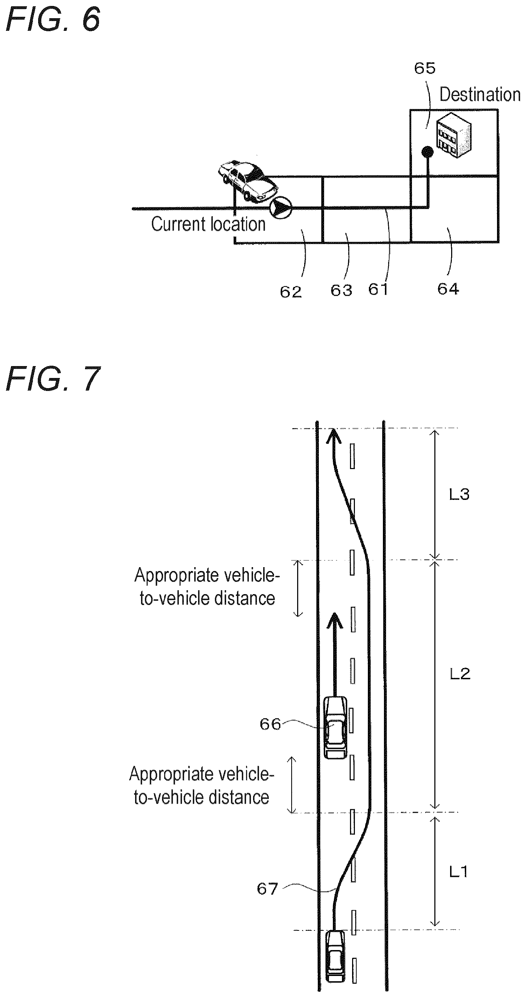

Here, as shown in FIG. 6, the high-precision map information 16 is sectioned into rectangular portions (e.g., 500 m × 1 km) and stored in the high-precision map DB 13 of the server device 4. Thus, for example, as shown in FIG. 6, when a path 61 is obtained as a planned travel path of the vehicle, high-precision map information 16 is obtained for areas 62 to 65 that include the path 61. Note, however, that when the distance to a destination is particularly far, for example, high-precision map information 16 may be obtained for only a secondary mesh in which the vehicle is currently located, or high-precision map information 16 may be obtained for only areas within a predetermined distance (e.g., within 3 km) from the current location of the vehicle.

The high-precision map information 16 includes, for example, information about the lane geometries of roads and markings (centerlines, lane lines, edge lines, guide lines, etc.) painted on the roads. Furthermore, for entities (regulatory objects) that regulate vehicle's travel (more specifically, request a stop or deceleration) such as speed limits set for roads or vehicle roads, traffic lights, crosswalks, railroad crossings, and stop road signs, there is also included regulatory information that identifies the types and locations of the regulatory objects. In addition to such information, there are also included information about intersections, information about parking lots, etc. The high-precision map information 16 is basically obtained from the server device 4 in the above-described units of rectangular areas, but when there is high-precision map information 16 for an area that is already stored in the cache 46, the high-precision map information 16 is obtained from the cache 46. In addition, the high-precision map information 16 obtained from the server device 4 is temporarily stored in the cache 46.

In addition, at the above-described S2, the CPU 51 also likewise obtains connection information 18 indicating a connection relationship between a lane included in an entry road facing the entrance and exit of a parking lot where the user parks the vehicle and the entrance and exit of the parking lot, outside-the-road geometry information 19 that identifies a region between the entry road and the entrance and exit of the parking lot where the user parks the vehicle, through which the vehicle can pass, and obstacle information about obstacles present on the planned travel path (including both on roads and within facilities such as parking lots).

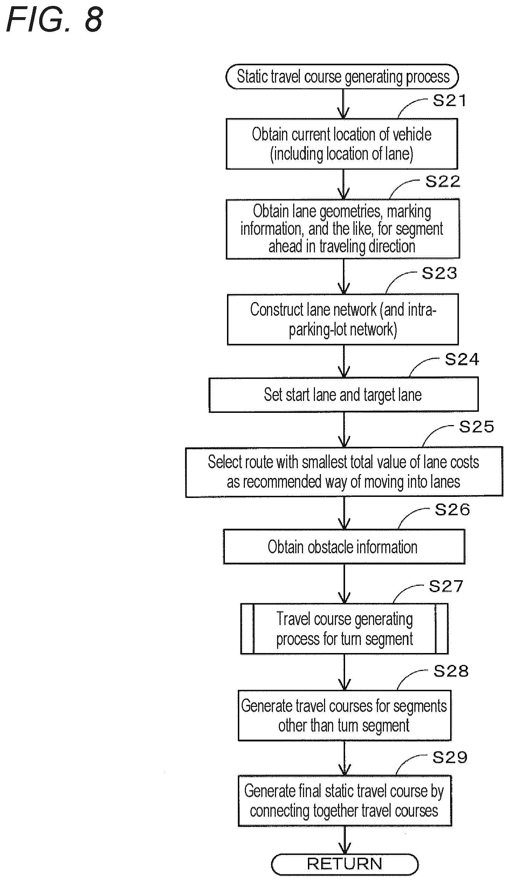

Thereafter, at S3, the CPU 51 performs a static travel course generating process (FIG. 8) which will be described later. Here, the static travel course generating process is a process of generating, for roads included in the planned travel path, a static travel course which is a travel course recommended for the vehicle to travel along, based on the planned travel path of the vehicle and the high-precision map information 16 obtained at the above-described S2. Particularly, the CPU 51 generates, as a static travel course, a travel course that identifies not only a lane recommended for the vehicle to travel in, but also a specific travel location in the lane that is recommended for the vehicle to travel through. In addition, for an obstacle managed by the obstacle information DB 15, by obtaining obstacle information from the server device 4, a travel course that avoids the obstacle is generated. Note that when the distance to a destination is particularly far, only a static travel course may be generated for a segment from a current location of the vehicle to a point a predetermined distance ahead in a traveling direction (e.g., within a secondary mesh in which the vehicle is currently located). Note that the predetermined distance can be changed as appropriate, but a static travel course is generated for a region including at least an area outside an area (detection area) in which road conditions around the vehicle can be detected by the exterior camera 39 and other sensors.

Then, at S4, the CPU 51 creates a vehicle's speed plan used upon traveling along the static travel course generated at the above-described S3, based on the high-precision map information 16 obtained at the above-described S2. For example, vehicle's travel speeds recommended upon traveling along the static travel course are calculated taking into account speed limit information and speed change points (e.g., intersections, curves, railroad crossings, and crosswalks) present on the planned travel path.

Then, the speed plan created at the above-described S4 is stored in the flash memory 54, etc., as assistance information used for autonomous driving assistance. In addition, an acceleration plan indicating the acceleration and deceleration of the vehicle required to implement the speed plan created at the above-described S4 may also be created as assistance information used for autonomous driving assistance.

Subsequently, at S5, the CPU 51 determines, as road conditions around the vehicle, particularly, whether or not a factor that affects vehicle's travel is present around the vehicle, by performing image processing on a captured image having been captured with the exterior camera 39. Here, the "factor that affects vehicle's travel" to be determined at the above-described S5 is a dynamic factor that changes in real time, and static factors based on road structures are excluded. The factor that affects vehicle's travel corresponds, for example, to another vehicle that travels or is parked ahead in a traveling direction of the vehicle, vehicles stuck in a traffic jam, a pedestrian located ahead in the traveling direction of the vehicle, or a construction zone present ahead in the traveling direction of the vehicle. On the other hand, intersections, curves, railroad crossings, merge areas, lane reduction areas, etc., are excluded. In addition, even when there is another vehicle, a pedestrian, or a construction zone, if there is no possibility of them overlapping a future travel course of the vehicle (e.g., if they are located away from the future travel course of the vehicle), then they are excluded from the "factor that affects vehicle's travel". Thus, as will be described later, for an obstacle (an obstacle managed by the obstacle information DB 15) that is to be avoided upon generation of a static travel course (S3), the travel course that avoids the obstacle is already generated and the obstacle does not overlap the current travel course and thus is excluded from the "factor that affects vehicle's travel". In addition, for means for detecting a factor that may affect vehicle's travel, a sensor such as millimeter-wave radar or a laser sensor, vehicle-to-vehicle communication, or roadside-device-to-vehicle communication may be used instead of a camera.

In addition, the determination process at the above-described S5 may be performed by, for example, managing, by an external server, the real-time locations of vehicles traveling on roads across the country, etc., and obtaining, by the CPU 51, the location of another vehicle located around the vehicle from the external server.

If it is determined that a factor that affects vehicle's travel is present around the vehicle (S5: YES), then processing transitions to S6. On the other hand, if it is determined that a factor that affects vehicle's travel is not present around the vehicle (S5: NO), then processing transitions to S9.

At S6, the CPU 51 generates, as a dynamic travel course, a new course for the vehicle to travel along from the current location of the vehicle, avoiding or following the "factor that affects vehicle's travel" detected at the above-described S5, and then travel back to the static travel course. Note that the dynamic travel course is generated for a segment including the "factor that affects vehicle's travel". Note also that the length of the segment varies depending on what the factor is. For example, when the "factor that affects vehicle's travel" is another vehicle (vehicle ahead) traveling ahead of the vehicle, as a dynamic travel course 67, an avoidance course is generated which is a course where, as shown in FIG. 7, the vehicle changes its lane to the right to pass a vehicle ahead 66 and then changes its lane to the left to move back into the original lane. Note that as a dynamic travel course, a following course may be generated which is a course where the vehicle travels following the vehicle ahead 66 from behind with a predetermined distance therebetween (or travels side by side with the vehicle ahead 66) without passing the vehicle ahead 66. Furthermore, a plurality of candidates for a dynamic travel course may be generated, and in that case, from among the plurality of candidates, a candidate with the lowest cost is selected at S7 which will be described later.

A method of calculating the dynamic travel course 67 shown in FIG. 7 will be described as an example. The CPU 51 first calculates a first course L1 required for the vehicle to move into a right lane by starting turning of the steering and for the steering position to return to a straight-ahead direction. Note that for the first course L1, a course that is as smooth as possible and has the shortest possible distance required for a lane change is calculated using clothoid curves or an arc on conditions that lateral acceleration (lateral G) occurring upon making a lane change does not interfere with autonomous driving assistance and does not exceed an upper limit value (e.g., 0.2 G) at which a vehicle's occupant is not given a feeling of discomfort, and the amount of change in lateral G per unit of time does not likewise exceed an upper limit value (e.g., 0.6 m/s³), the lateral G being calculated based on the current vehicle speed of the vehicle. In addition, another condition is that an appropriate vehicle-to-vehicle distance N or more is maintained between the vehicle and the vehicle ahead 66.

Then, a second course L2 is calculated where the vehicle travels in the right lane with a speed limit being an upper limit, to pass the vehicle ahead 66 and keeps traveling until maintaining an appropriate vehicle-to-vehicle distance N or more between the vehicle and the vehicle ahead 66. Note that the second course L2 is basically a straight course, and the length of the course is calculated based on the vehicle speed of the vehicle ahead 66 and the speed limit for the road.

Subsequently, a third course L3 is calculated that is required for the vehicle to move back into the left lane by starting turning of the steering and for the steering position to return to the straight-ahead direction. Note that for the third course L3, a course that is as smooth as possible and has the shortest possible distance required for a lane change is calculated using clothoid curves or an arc on conditions that lateral acceleration (lateral G) occurring upon making a lane change does not interfere with autonomous driving assistance and does not exceed an upper limit value (e.g., 0.2 G) at which a vehicle's occupant is not given a feeling of discomfort, and the amount of change in lateral G per unit of time does not likewise exceed an upper limit value (e.g., 0.6 m/s³), the lateral G being calculated based on the current vehicle speed of the vehicle. In addition, another condition is that an appropriate vehicle-to-vehicle distance N or more is maintained between the vehicle and the vehicle ahead 66.

Note that a dynamic travel course is generated based on road conditions around the vehicle which are obtained using the exterior camera 39 and other sensors, and thus, a region for which a dynamic travel course is to be generated is at least within an area (detection area) in which road conditions around the vehicle can be detected using the exterior camera 39 and other sensors.

Subsequently, at S7, the CPU 51 reflects the dynamic travel course which is newly generated at the above-described S6 in the static travel course generated at the above-described S3. Specifically, a cost is calculated for each of the static travel course and the dynamic travel course (there may be a plurality of candidates for a dynamic travel course), starting from the current location of the vehicle to the end of a segment including the "factor that affects vehicle's travel", and a travel course with the lowest cost is selected. Consequently, a part of the static travel course is replaced by the dynamic travel course as necessary. Note that there is a case in which depending on the situation, replacement by the dynamic travel course is not performed, i.e., a case in which even if the dynamic travel course has been reflected, there has been no change in the static travel course generated at the above-described S3. Furthermore, there is a case in which when the dynamic travel course and the static travel course are identical courses, even if replacement has been performed, there has been no change in the static travel course generated at the above-described S3.

Then, at S8, the CPU 51 modifies, for the static travel course in which the dynamic travel course has been reflected at the above-described S7, the vehicle's speed plan created at the above-described S4, based on changes made by the reflected dynamic travel course. Note that when there has been no change in the static travel course generated at the above-described S3 as a result of reflecting the dynamic travel course, the process at S8 may be omitted.

Subsequently, at S9, the CPU 51 computes the amounts of control for the vehicle to travel along the static travel course generated at the above-described S3 (when the dynamic travel course has been reflected at the above-described S7, a course obtained after the reflection) at speeds in accordance with the speed plan created at the above-described S4 (when the speed plan has been modified at the above-described S8, a plan obtained after the modification). Specifically, each of the amounts of control of an accelerator, a brake, a gear, and steering is computed. Note that the processes at S9 and S10 may be performed by the vehicle control ECU 40 that controls the vehicle, instead of the navigation device 1.

Thereafter, at S10, the CPU 51 reflects the amounts of control computed at S9. Specifically, the computed amounts of control are transmitted to the vehicle control ECU 40 through the CAN. The vehicle control ECU 40 performs vehicle control of each of the accelerator, the brake, the gear, and the steering based on the received amounts of control. As a result, it becomes possible to perform travel assistance control for the vehicle to travel along the static travel course generated at the above-described S3 (when the dynamic travel course has been reflected at the above-described S7, a course obtained after the reflection) at speeds in accordance with the speed plan created at the above-described S4 (when the speed plan has been modified at the above-described S8, a plan obtained after the modification).

Then, at S11, the CPU 51 determines whether or not the vehicle has traveled a certain distance since the generation of a static travel course at the above-described S3. For example, the certain distance is 1 km.

If it is determined that the vehicle has traveled a certain distance since the generation of a static travel course at the above-described S3 (S11: YES), then processing returns to S2. Thereafter, a static travel course is generated again for a segment within a predetermined distance from a current location of the vehicle that goes along the planned travel path (S2 to S4). Note that, in the present embodiment, every time the vehicle has traveled a certain distance (e.g., 1 km), a static travel course is repeatedly generated for a segment within a predetermined distance from a current location of the vehicle that goes along the planned travel path, but when the distance to a destination is short, static travel courses to the destination may be generated at once at the time of starting traveling.

On the other hand, if it is determined that the vehicle has not traveled a certain distance since the generation of a static travel course at the above-described S3 (S11: NO), then it is determined whether or not to terminate the assistance travel by autonomous driving assistance (S12). A case of terminating the assistance travel by autonomous driving assistance includes a case in which the travel by autonomous driving assistance is intentionally canceled (override) by the user operating a control panel provided on the vehicle or by the user performing a steering wheel operation, a brake operation, etc., in addition to a case in which the vehicle has reached the destination.

If it is determined to terminate the assistance travel by autonomous driving assistance (S12: YES), then the autonomous driving assistance program is terminated. On the other hand, if it is determined to continue the assistance travel by autonomous driving assistance (S12: NO), then processing returns to S5.

Next, a subprocess of the static travel course generating process performed at the above-described S3 will be described based on FIG. 8. FIG. 8 is a flowchart of a subprocess program of the static travel course generating process.

First, at S21, the CPU 51 obtains a current location of the vehicle detected by the current location detecting part 31. Note that it is desirable to specifically identify a current location of the vehicle using, for example, high-precision GPS information or a high-precision location technique. Here, the high-precision location technique is a technique in which white lines and road surface painting information that are captured with a camera installed on the vehicle are detected by image recognition, and furthermore, the detected white lines and road surface painting information are checked against, for example, high-precision map information 16, by which a driving lane and a high-precision vehicle location can be detected. Furthermore, when the vehicle travels on a road having a plurality of lanes, a lane in which the vehicle travels is also identified. In addition, when the vehicle is located in a parking lot, a specific location in the parking lot (e.g., a parking space where the vehicle is located) and the attitude of the vehicle (e.g., a traveling direction of the vehicle, or when the vehicle is located in a parking space, in which orientation the vehicle is parked with respect to the parking space) are also identified.

Then, at S22, the CPU 51 obtains lane geometries, marking information, information about intersections, etc., particularly, for a segment ahead in a traveling direction of the vehicle for which a static travel course is to be generated (e.g., a portion of the planned travel path within a predetermined distance from the current location of the vehicle), based on the high-precision map information 16 obtained at the above-described S2. In addition, for entities (regulatory objects) that regulate vehicle's travel (more specifically, request a stop or deceleration) such as speed limits set for roads and vehicle roads, traffic lights, crosswalks, railroad crossings, and stop road signs, there is also obtained regulatory information that identifies the types and locations of the regulatory objects. In addition, when a segment for which a static travel course is to be generated includes an area in a parking lot, there are included information that identifies the location of the entrance and exit of the parking lot, information that identifies a layout of parking spaces in the parking lot, information about markings that mark off (vehicle roads) the parking spaces and vehicle roads, etc. Note that for the vehicle roads, there is also included information that identifies the geometries of the vehicle roads (i.e., regions in the parking lot where the vehicle can travel). Note that the lane geometries and marking information obtained at the above-described S22 include, particularly, information that identifies how a lane that can be selected as a lane in which the vehicle is to travel is placed on a road, and further include, for example, information that identifies the number of lanes, the types and layout of markings that mark off the lanes, the curvature of the road (lanes), lane widths, how and at which location the number of lanes increases or decreases when there is an increase or decrease in the number of lanes, and a passage segment in a traveling direction for each lane and a connection to a road for each lane (specifically, a correspondence between a lane included in a road before passing through an intersection and a lane included in a road after passing through the intersection).

Subsequently, at S23, the CPU 51 constructs a lane network for the segment ahead in a traveling direction of the vehicle for which a static travel course is to be generated, based on the lane geometries and marking information obtained at the above-described S22. Here, the lane network is a network representing movement into lanes that can be selected by the vehicle.

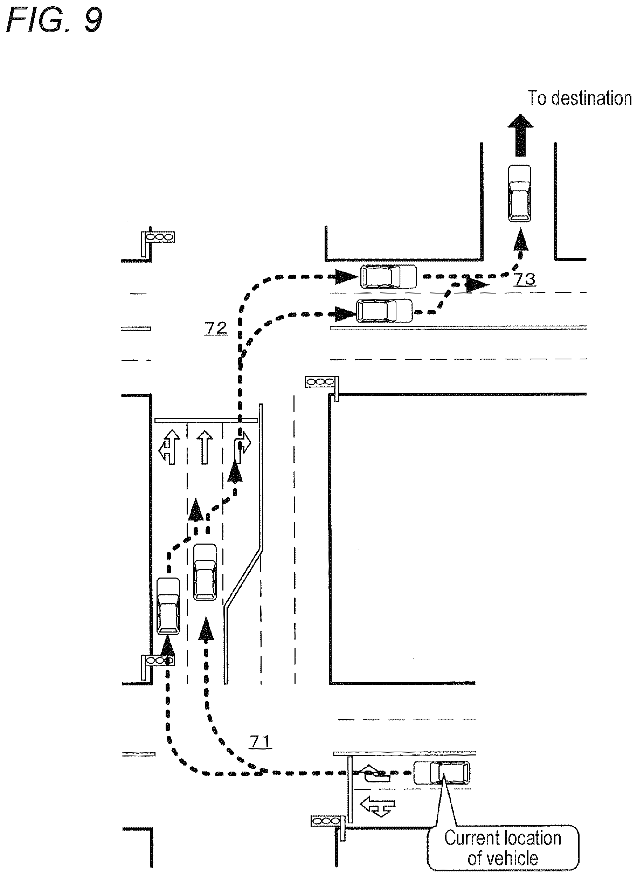

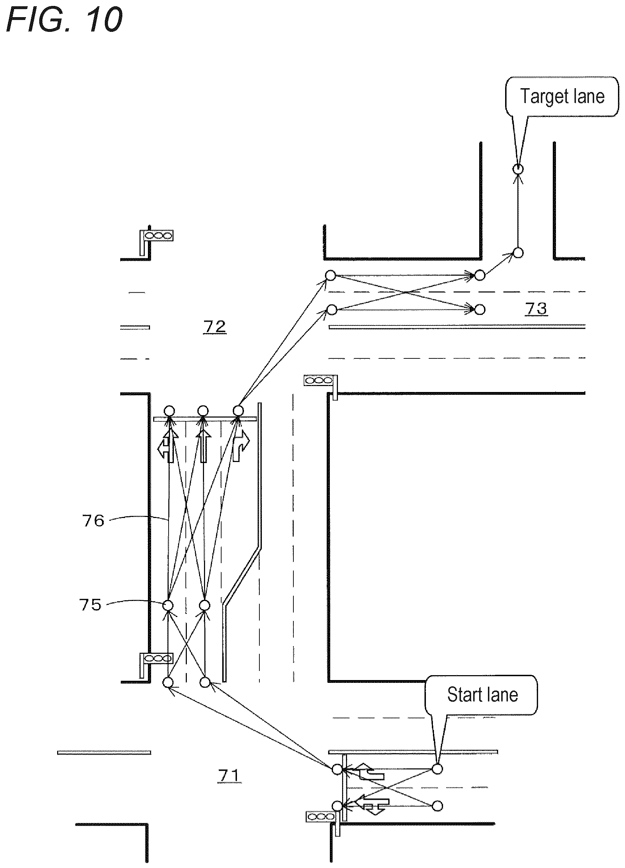

Here, as an example of constructing a lane network at the above-described S23, for example, a case in which the vehicle travels along a planned travel path shown in FIG. 9 will be described as an example. The planned travel path shown in FIG. 9 is a path where after the vehicle travels straight ahead from its current location, the vehicle turns right at a next intersection 71 and further turns right at a next intersection 72, too, and turns left at a next intersection 73. In the planned travel path shown in FIG. 9, for example, when the vehicle turns right at the intersection 71, the vehicle can enter a right lane or can also enter a left lane. Note, however, that since the vehicle needs to turn right at the next intersection 72, the vehicle needs to move into the rightmost lane at the time of entering the intersection 72. In addition, when the vehicle turns right at the intersection 72, too, the vehicle can enter a right lane or can also enter a left lane. Note, however, that since the vehicle needs to turn left at the next intersection 73, the vehicle needs to move into the leftmost lane at the time of entering the intersection 73. A lane network constructed for a segment that allows such movement into lanes is shown in FIG. 10.

As shown in FIG. 10, in the lane network, a segment ahead in a traveling direction of the vehicle for which a static travel course is to be generated is divided into a plurality of blocks (groups). Specifically, the segment is divided into blocks, with a location where the vehicle enters an intersection, a location where the vehicle exits the intersection, and a location where the number of lanes increases or decreases being boundaries. A node point (hereinafter, referred to as lane node) 75 is set at a point in each lane located at a boundary between the divided blocks. Furthermore, a link (hereinafter, referred to as lane link) 76 that connects between lane nodes 75 is set. Note that the lane link 76 is basically set in the center of a lane when the lane link 76 does not cross lanes.

In addition, the above-described lane network includes, particularly, information that identifies, by a connection of lane nodes to a lane link at an intersection, a correspondence between a lane included in a road before passing through the intersection and a lane included in a road after passing through the intersection, i.e., a lane into which the vehicle can move after passing through the intersection from a lane in which the vehicle travels before passing through the intersection. Specifically, the lane network indicates that the vehicle can move between lanes corresponding to lane nodes that are connected by a lane link among lane nodes set on a road on which the vehicle travels before passing through an intersection and lane nodes set on a road on which the vehicle travels after passing through the intersection. To generate such a lane network, high-precision map information 16 stores, for each road connected to an intersection, lane flags indicating a correspondence between lanes and set for each combination of a road that enters the intersection and a road that exits the intersection. Upon constructing a lane network at the above-described S23, the CPU 51 forms a connection of lane nodes to a lane link at an intersection by referring to the lane flags.

Note that although FIG. 10 shows an example of a lane network constructed for roads, if a segment for which a static travel course is to be generated includes an area in a parking lot, then a similar network is also constructed for the area in the parking lot (hereinafter, referred to as intra-parking-lot network). The intra-parking-lot network includes parking lot nodes and parking lot links. The parking lot nodes are set at the entrance and exit of the parking lot, an intersection at which passages through which the vehicle can pass intersect each other and a curved corner of a passage through which the vehicle can pass (i.e., a connecting point between passages), and an end point of a passage. On the other hand, the parking lot links each are set on a passage between parking lot nodes, through which the vehicle can pass.

Note that when a plurality of candidates for a planned travel path have been obtained at the above-described S1, the above-described lane network and intra-parking-lot network are constructed for the plurality of planned travel paths.

Then, at S24, for the lane network constructed at the above-described S23 (if the segment for which a static travel course is to be generated includes an area in a parking lot, then an intra-parking-lot network is also included; the same also applies hereinafter), the CPU 51 sets a start lane (departure node), in which the vehicle starts moving, at a lane node located at a starting point of the lane network, and sets a target lane (target node), which is a target to which the vehicle moves, at a lane node located at an end point of the lane network. Note that when the starting point of the lane network is a road with a plurality of lanes in each direction, a lane node corresponding to a lane in which the vehicle is currently located serves as a start lane. On the other hand, when the end point of the lane network is a road with a plurality of lanes in each direction, a lane node corresponding to the leftmost lane (in a case of left-hand traffic) serves as a target lane. In addition, when the starting point or end point of the lane network is in a parking lot, a start lane is set in a parking space or on a passage in the intra-parking-lot network where the vehicle is currently located, and a target lane is set in a parking space where the vehicle is to be parked or on a passage that allows the vehicle to enter the parking space.

Thereafter, at S25, the CPU 51 derives a route with the lowest lane cost (hereinafter, referred to as recommended route) among routes each continuously connecting the start lane to the target lane, by referring to the lane network constructed at the above-described S23. For example, using Dijkstra's algorithm, a route is searched from a target-lane side. Note, however, that search means other than Dijkstra's algorithm may be used if a route that continuously connects the start lane to the target lane can be searched. The derived recommended route is a way of moving into lanes by the vehicle that is recommended upon vehicle's movement (information that identifies lanes recommended for the vehicle to travel in and recommended locations for moving into the lanes).

In addition, a lane cost used for the above-described route search is provided for each lane link 76. The lane cost provided to each lane link 76 has, as a reference value, the length of the lane link 76 or the time required to move on the lane link 76. Particularly, in the present embodiment, the length of a lane link (in units of meters) is used as the reference value of the lane cost. In addition, for a lane link having a lane change, a lane change cost (e.g., 50) is added to the above-described reference value. Note that the value of the lane change cost may be changed according to the number of lane changes or a location where a lane change is made. For example, when a lane change is made at a location near an intersection or when a lane change over two lanes is made, the lane change cost to be added can be set to a larger value.

Note that when a plurality of candidates for a planned travel path have been obtained at the above-described S1, a recommended route with the lowest lane cost is derived from among the plurality of planned travel paths. By the derived recommended route, one planned travel path is also determined.

Subsequently, at S26, the CPU 51 obtains, for the planned travel path along which the vehicle travels, obstacle information about obstacles present on the planned travel path from the server device 4. Note that the obstacles are objects that cause interference to travel of the vehicle that travels on roads or within facilities such as parking lots, and correspond, for example, to vehicles parked or stopped on roads, signs or fences placed at construction sites on roads, bumps and dips in road surfaces, and structures such as poles and blocks. Note also that obstacle information includes, specifically, information that identifies the date and time of detection of an obstacle, the type of the obstacle, and information that identifies the location of the obstacle. Particularly, for the location of the obstacle, there are identified a link ID of a link where the obstacle is located; a distance from a starting point of the link; a lane in which the obstacle is located; and an area in the lane where the obstacle is located. The above-described obstacle information is managed by the server device 4 in advance, based on probe information collected from each vehicle that travels across the country, and is stored in the obstacle information DB 15 provided in the server device 4 (FIG. 3). Thus, at the above-described S26, it becomes also possible to obtain information on obstacles that are present outside an area (detection area) in which road conditions around the vehicle can be detected by the exterior camera 39 and other sensors of the vehicle.

Meanwhile, at the above-described S26, the CPU 51 may also obtain information on obstacles present in a detection area that are identified by detecting road conditions around the vehicle by the exterior camera 39 and other sensors of the vehicle (i.e., information about obstacles detected by the vehicle).

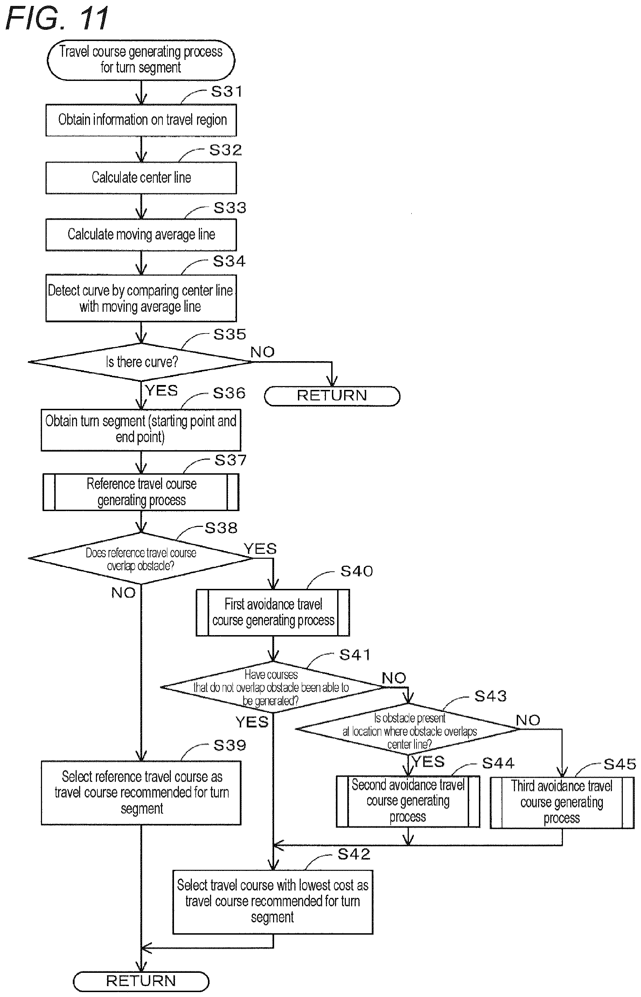

Subsequently, at S27, the CPU 51 performs a travel course generating process for a turn segment (FIG. 11) which will be described later. The travel course calculating process for a turn segment is a process of generating a travel course recommended upon traveling along the recommended route derived at the above-described S25, particularly, for a turn segment in which the vehicle travels with a turn upon traveling along a part of the planned travel path corresponding to a segment ahead in a traveling direction of the vehicle for which a static travel course is to be generated. Here, the turn segment includes, for example, a segment that bends at a predetermined angle such as a right angle and an intersection (junction) segment where the vehicle is to make a left or right turn, in addition to a segment of a road that curves at a predetermined curvature in an arc-shaped manner (also including a shape of a road whose curvature changes). Furthermore, the turn segment also includes a segment where the vehicle travels with a turn not only on a public road but also within a facility such as a parking lot, a segment where the vehicle makes a turn to enter or exit a parking space, a segment where the vehicle travels with a turn to enter a facility from a public road or to enter the public road from within the facility, or the like. Note, however, that in the present embodiment, a lane change made to change driving lanes is excluded from a target for the above-described turn, and a travel course for a segment where a lane change is made is generated at S28 which will be described later. Note that when the planned travel path includes a plurality of turn segments, a recommended travel course is generated for each of the plurality of turn segments. In addition, particularly, when the turn segment includes an obstacle identified by the obstacle information obtained at the above-described S26, a travel course formed to avoid the obstacle is generated.

Thereafter, at S28, the CPU 51 generates, for segments other than the above-described turn segment, travel courses recommended upon traveling along the recommended route derived at the above-described S25. For example, for a travel course for a segment having lane changes, the locations of the lane changes are set such that the lane changes are not continuously made as much as possible and are made at locations away from an intersection. In addition, when a travel course taken upon making a lane change is generated, lateral acceleration (lateral G) occurring in the vehicle is calculated, and courses that are connected as smoothly as possible are calculated using clothoid curves on conditions that the lateral G does not interfere with autonomous driving assistance and does not exceed an upper limit value (e.g., 0.2 G) at which a vehicle's occupant is not given a feeling of discomfort, and the amount of change in lateral G per unit of time does not likewise exceed an upper limit value (e.g., 0.6 m/s³). By performing the above-described process, a travel course recommended for the vehicle to travel along is generated for roads included in the planned travel path. Note that for a block that is neither a turn segment nor a block where a lane change is made, a course that passes through the center of a lane is generated as a travel course recommended for the vehicle to travel along. In addition, particularly, when an obstacle identified by the obstacle information obtained at the above-described S26 is present outside the turn segment, a travel course formed to avoid the obstacle is generated.

At S29, the CPU 51 combines together the travel courses calculated at the above-described S27 and S28, by which a static travel course which is a travel course recommended for the vehicle to travel along is generated for roads included in the planned travel path. The static travel course generated at the above-described S29 is stored in the flash memory 54, etc., as assistance information used for autonomous driving assistance. Thereafter, processing transitions to S4, and various types of driving assistance based on the generated static travel course are provided.

Next, a subprocess of the travel course calculating process for a turn segment performed at the above-described S27 will be described based on FIG. 11. FIG. 11 is a flowchart of a subprocess program of the travel course calculating process for a turn segment. Particularly, the following implementation example describes an example of generating a static travel course for a turn segment where the vehicle travels with a turn on a curved road (including a case of a road that bends at a predetermined angle such as a right angle, in addition to a case of a road that curves in an arc-shaped manner).

First, at S31, the CPU 51 obtains, for a segment ahead in a traveling direction of the vehicle for which a static travel course is to be generated, information that identifies a travel region in which the vehicle travels, based on the high-precision map information 16 obtained at the above-described S2. Specifically, there are obtained information that identifies the locations of left and right markings in a lane in which the vehicle travels when the vehicle travels in accordance with the way of moving into lanes selected at the above-described S25 (for a one-lane road or a road with no marked lanes, road edges); and a road curvature.

Then, at S32, the CPU 51 calculates, for the segment ahead in a traveling direction of the vehicle for which a static travel course is to be generated, a center line of the lane (travel region) in which the vehicle travels, based on the information on the travel region and the road curvature which are obtained at the above-described S31. For a road with no marked lanes, the center line is a center line of the road. For example, from the locations of the left and right markings in the travel region or the road edges, a center line located in the middle therebetween can be calculated. Alternatively, it is also possible to calculate a center line from the road curvature. Note, however, that instead of calculating a center line from markings or a road curvature, it is also possible to calculate, for each lane, a center line in advance and store the center lines in the high-precision map DB 13.

Subsequently, at S33, the CPU 51 calculates, for the segment ahead in a traveling direction of the vehicle for which a static travel course is to be generated, a moving average line for the lane (travel region) in which the vehicle travels, based on the center line calculated at the above-described S32. For a road with no marked lanes, the moving average line is a moving average line of the road. Note that the moving average line is a line obtained by connecting together average points of a predetermined number of consecutive coordinate points placed along the center line of the lane. More specifically, for each of coordinate points set at predetermined spacings along the center line, an average point of five coordinate points including two coordinate points present before and after the coordinate point (a point obtained by averaging latitude and longitude points) is calculated, and a line obtained by connecting together the average points serves as a moving average line. Note, however, that instead of calculating a moving average line from the center line, it is also possible to calculate, for each lane, a moving average line in advance and store the moving average lines in the high-precision map DB 13.

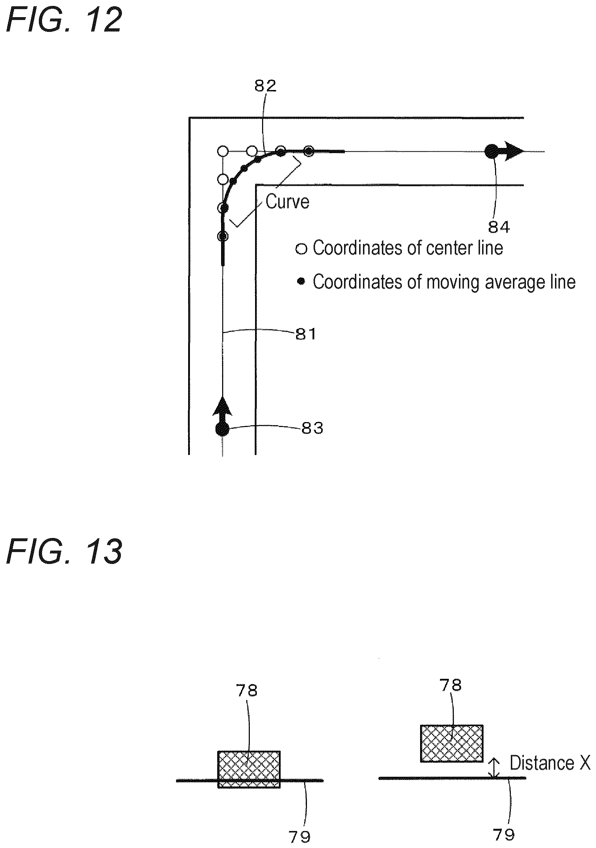

Furthermore, at S34, the CPU 51 compares the center line calculated at the above-described S32 with the moving average line calculated at the above-described S33 to detect an area where the center line does not match the moving average line, as an area where there is a curve. Here, FIG. 12 is a diagram showing an example of a center line 81 and a moving average line 82 which are calculated at the above-described S31 and S32. As described above, the moving average line 82 is a line obtained by calculating, for each of coordinate points set at predetermined spacings along the center line 81, an average point of five coordinate points including two coordinate points present before and after the coordinate point (a point obtained by averaging latitude and longitude points), and connecting together the average points. Thus, in a segment where the center line 81 is linearly placed, the center line 81 matches the moving average line 82, but as shown in FIG. 12, at a location where the road curves in an arc-shaped manner or a location where the road bends at a predetermined angle, there is an area where the center line 81 does not match the moving average line 82. Thus, at the above-described S34, an area where the center line 81 does not match the moving average line 82 is detected as an area where there is a curve.

Note that at the above-described S34, the CPU 51 detects a curve present in the segment ahead in a traveling direction of the vehicle for which a static travel course is to be generated, by comparing the center line 81 with the moving average line 82, but it is also possible to detect a curve based on map information. In that case, the map information is configured to include in advance information that identifies the locations of curves (e.g., information that identifies a link corresponding to a curve, or the coordinates of a starting point and an end point of a curve). Alternatively, an area where the road curvature is greater than or equal to a threshold value may be identified as an area where there is a curve.

Subsequently, at S35, the CPU 51 determines, based on a result of the detection at the above-described S34, whether or not the segment ahead in a traveling direction of the vehicle for which a static travel course is to be generated includes at least one or more curves.

If it is determined that the segment ahead in a traveling direction of the vehicle for which a static travel course is to be generated includes at least one or more curves (S35: YES), then processing transitions to S36. On the other hand, if it is determined that the segment ahead in a traveling direction of the vehicle for which a static travel course is to be generated does not include a curve (S35: NO), then processing transitions to S28 and a travel course recommended upon traveling along the recommended route derived at the above-described S25 is generated.

At S36, the CPU 51 obtains a turn segment (more specifically, a starting point and an end point of a turn segment) including the curve detected as described above. The locations of the starting point and the end point of the turn segment may be changed as appropriate according to the way of moving into lanes selected at the above-described S25, or may be set on a fixed condition, regardless of the way of moving into lanes. For example, it is possible to set, as a starting point of a turn segment, a point a predetermined distance (e.g., 20 m) before a starting point of a segment where the center line 81 begins to not match the moving average line 82, and set, as an end point of the turn segment, a point a predetermined distance ahead, toward a traveling-direction side, of an end point of the segment where the center line 81 begins to not match the moving average line 82. In addition, when a current location of the vehicle is before a curve, the current location of the vehicle may serve as a starting point of a turn segment. In addition, map information may be configured to include in advance information that identifies curves and turn segments (e.g., information that identifies a link included in a turn segment, or the coordinates of a starting point and an end point of a turn segment), and a turn segment may be set based on the map information.

At and after S37, for the turn segment including the curve detected as described above, a travel course recommended upon traveling on the turn segment is generated by the following processes. Note that when a plurality of curves have been detected, the following processes are performed for each of turn segments corresponding to all of the detected curves, by which a travel course is generated.

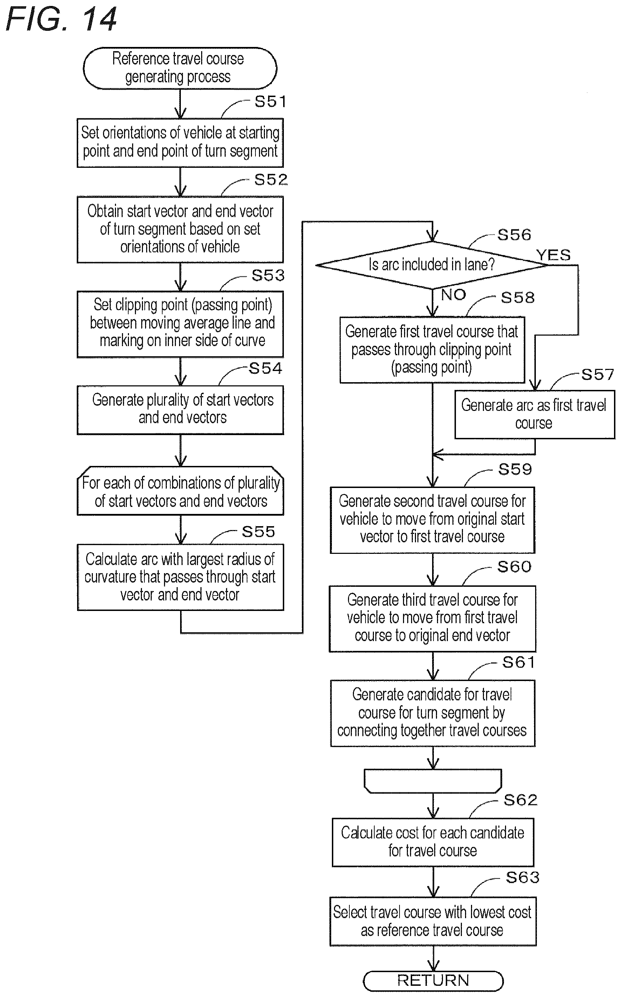

First, at S37, the CPU 51 performs a reference travel course generating process (FIG. 14) which will be described later. The reference travel course generating process is a process of generating, for the turn segment, a travel course recommended upon traveling on the turn segment. Particularly, in the reference travel course generating process, even when the turn segment includes an obstacle identified by the obstacle information obtained at the above-described S26, a travel course recommended upon traveling on the turn segment is generated without taking into account the obstacle. The travel course generated at the above-described S37 that does not take into account the obstacle is hereinafter referred to as reference travel course.

Thereafter, at S38, the CPU 51 determines whether or not the reference travel course generated at the above-described S37 overlaps an obstacle identified by the obstacle information obtained at the above-described S26. Here, as shown in FIG. 3, obstacle information identifies a link ID of a link where an obstacle is located; a distance from a starting point of the link; a lane in which the obstacle is located; and an area (occupied region) in the lane where the obstacle is located, by which it becomes possible to determine whether or not the reference travel course overlaps the obstacle, based on the obstacle information. In addition, the "reference travel course overlaps the obstacle" at the above-described S38 includes a case in which, as shown in a diagram on left of FIG. 13, an area 78 where an obstacle is located overlaps a reference travel course 79, and includes, in addition thereto, a case in which when the vehicle travels along the reference travel course 79, the vehicle overlaps the area 78 where an obstacle is located, i.e., a case in which, as shown in a diagram on right of FIG. 13, a distance X between the area 78 where an obstacle is located and the reference travel course 79 is less than a predetermined distance (e.g., 1/2 of vehicle width + α) is also considered that "the reference travel course overlaps the obstacle".

Then, if it is determined that the reference travel course generated at the above-described S37 does not overlap an obstacle identified by the obstacle information obtained at the above-described S26 (S38: NO), then the reference travel course generated at the above-described S37 is selected as a travel course recommended upon traveling on the turn segment (S39). Note that a case in which the turn segment does not include an obstacle identified by the obstacle information obtained at the above-described S26 is also determined that the reference travel course does not overlap the obstacle. Thereafter, processing transitions to S28, and for segments other than the turn segment, travel courses recommended upon traveling along the recommended route derived at the above-described S25 are generated, and the finally generated travel courses are combined together, by which a static travel course which is a travel course recommended for the vehicle to travel along is generated for roads included in the planned travel path (S29). Furthermore, the generated static travel course is stored in the flash memory 54, etc., as assistance information used for autonomous driving assistance.

On the other hand, if it is determined that the reference travel course generated at the above-described S37 overlaps an obstacle identified by the obstacle information obtained at the above-described S26 (S38: YES), then with the reference travel course, the vehicle cannot travel avoiding the obstacle on the turn segment, and thus, processing transitions to S40 to generate a new travel course for avoiding the obstacle.

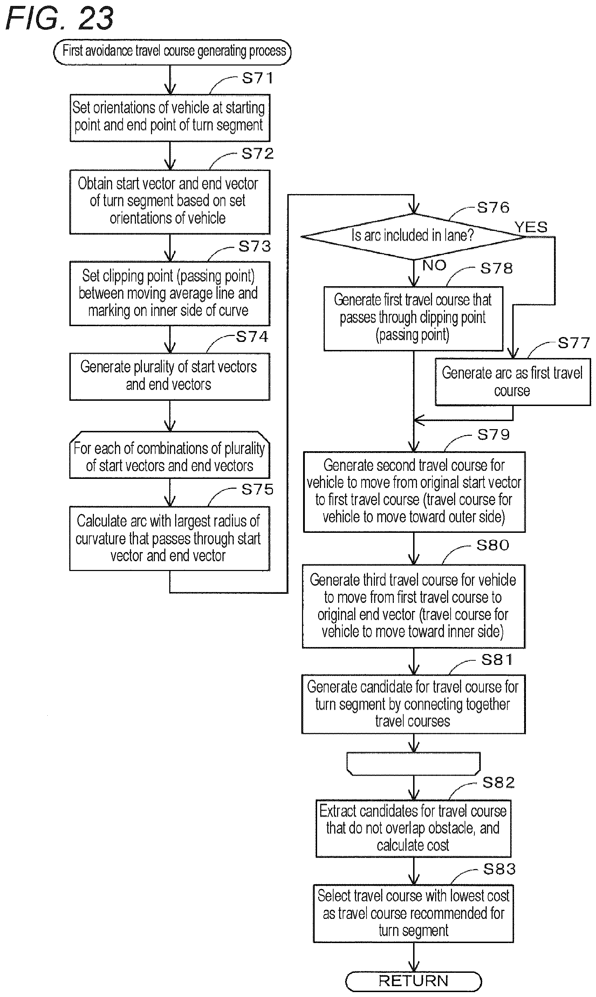

At S40, the CPU 51 performs a first avoidance travel course generating process (FIG. 23) which will be described later. The first avoidance travel course generating process is a process of generating a travel course recommended upon traveling on the turn segment, taking into account the obstacle. The travel course generated at the above-described S40 that takes into account the obstacle is hereinafter referred to as first avoidance travel course.

Thereafter, at S41, the CPU 51 determines whether or not at least one or more first avoidance travel courses that do not overlap an obstacle identified by the obstacle information obtained at the above-described S26 have been able to be generated in the first avoidance travel course generating process at the above-described S40. Note that the "first avoidance travel course overlaps the obstacle" at the above-described S41 includes, as with the above-described S38, a case in which an area where the obstacle is located overlaps the first avoidance travel course, and includes, in addition thereto, a case in which when the vehicle travels along the first avoidance travel course, the vehicle overlaps an area where the obstacle is located, i.e., a case in which a distance X between the area where the obstacle is located and the first avoidance travel course is less than a predetermined distance (e.g., 1/2 of vehicle width + α) is also considered that "the first avoidance travel course overlaps the obstacle".

If it is determined that at least one or more first avoidance travel courses that do not overlap an obstacle identified by the obstacle information obtained at the above-described S26 have been able to be generated in the first avoidance travel course generating process at the above-described S40 (S41: YES), then a travel course with the lowest cost (the highest level of appropriateness) indicating appropriateness as a travel course among the first avoidance travel courses generated at the above-described S40 is selected as a travel course recommended upon traveling on the turn segment (S42). Note that details of calculation of cost will be described later. Thereafter, processing transitions to S28, and for segments other than the turn segment, travel courses recommended upon traveling along the recommended route derived at the above-described S25 are generated, and the finally generated travel courses are combined together, by which a static travel course which is a travel course recommended for the vehicle to travel along is generated for roads included in the planned travel path (S29). Furthermore, the generated static travel course is stored in the flash memory 54, etc., as assistance information used for autonomous driving assistance.

On the other hand, if it is determined that a first avoidance travel course that does not overlap an obstacle identified by the obstacle information obtained at the above-described S26 has not been able to be generated in the first avoidance travel course generating process at the above-described S40 (S41: NO), then with the first avoidance travel course, the vehicle cannot travel avoiding the obstacle on the turn segment, and thus, processing transitions to S43 to generate a new travel course for avoiding the obstacle.

At S43, the CPU 51 determines whether or not an obstacle present on the turn segment that is identified by the obstacle information obtained at the above-described S26 overlaps the center line, which is calculated at the above-described S32, of the lane (travel region) in which the vehicle travels . Here, as shown in FIG. 3, obstacle information identifies a link ID of a link where an obstacle is located; a distance from a starting point of the link; a lane in which the obstacle is located; and an area (occupied region) in the lane where the obstacle is located, by which it becomes possible to determine whether or not the center line overlaps the obstacle, based on the obstacle information.

If it is determined that the obstacle present on the turn segment overlaps the center line of the lane (travel region) in which the vehicle travels (S43: YES), then processing transitions to S44. On the other hand, if it is determined that the obstacle present on the turn segment does not overlap the center line of the lane (travel region) in which the vehicle travels (S43: NO), then processing transitions to S45.

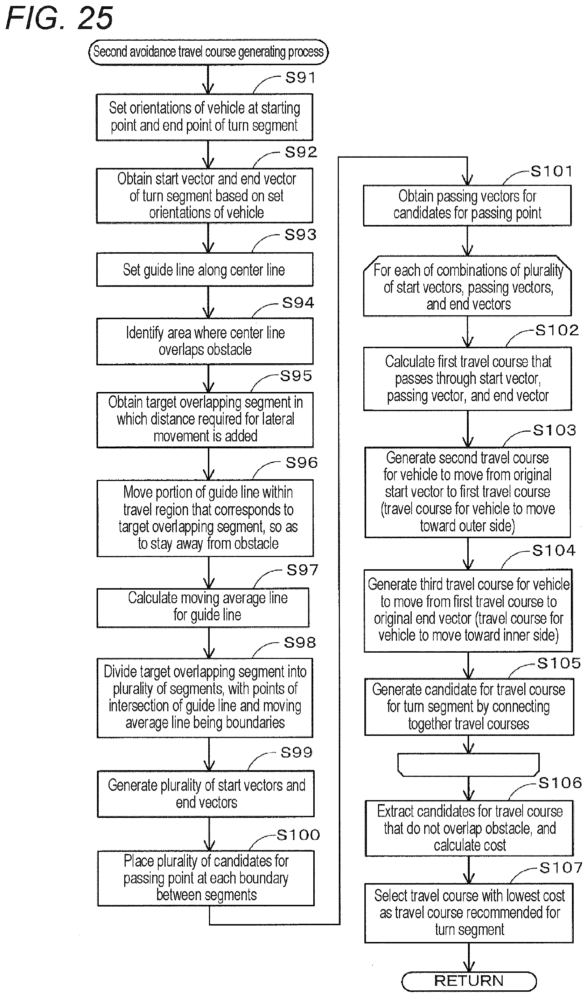

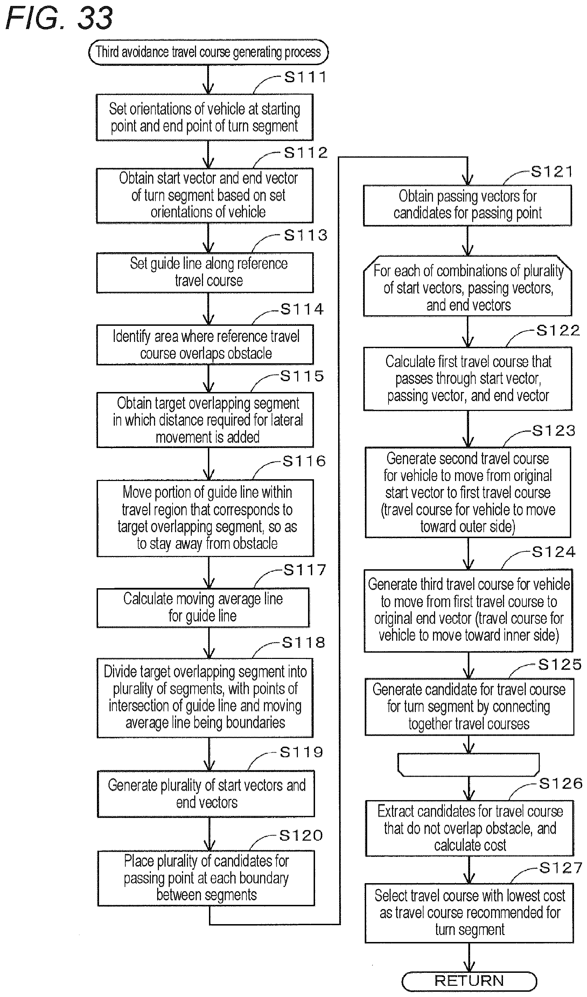

At S44, the CPU 51 performs a second avoidance travel course generating process (FIG. 25) which will be described later. On the other hand, at S45, the CPU 51 performs a third avoidance travel course generating process (FIG. 33) which will be described later. Note that as with the first avoidance travel course generating process at the above-described S40, the second avoidance travel course generating process and the third avoidance travel course generating process are processes of generating a travel course recommended upon traveling on the turn segment, taking into account the obstacle. Note, however, that the second avoidance travel course generating process and the third avoidance travel course generating process differ from the first avoidance travel course generating process in that a guide line based on which a travel course is calculated is set so as not to overlap the obstacle, and a travel course that avoids the obstacle is calculated using the guide line. In addition, the second avoidance travel course generating process and the third avoidance travel course generating process differ from each other in that in the second avoidance travel course generating process, a guide line is set based on the center line of the lane in which the vehicle travels, whereas in the third avoidance travel course generating process, a guide line is set based on the reference travel course calculated at the above-described S37. The travel course generated at the above-described S44 that takes into account the obstacle is hereinafter referred to as second avoidance travel course, and the travel course generated at the above-described S45 that takes into account the obstacle is hereinafter referred to as third avoidance travel course.

Thereafter, a travel course with the lowest cost (the highest level of appropriateness) indicating appropriateness as a travel course among the second avoidance travel courses generated at the above-described S44 and the third avoidance travel courses generated at the above-described S45 is selected as a travel course recommended upon traveling on the turn segment (S42). Note that details of calculation of cost will be described later. Thereafter, processing transitions to S28, and for segments other than the turn segment, travel courses recommended upon traveling along the recommended route derived at the above-described S25 are generated, and the finally generated travel courses are combined together, by which a static travel course which is a travel course recommended for the vehicle to travel along is generated for roads included in the planned travel path (S29). Furthermore, the generated static travel course is stored in the flash memory 54, etc., as assistance information used for autonomous driving assistance.

Next, a subprocess of the reference travel course generating process performed at the above-described S37 will be described based on FIG. 14. FIG. 14 is a flowchart of a subprocess program of the reference travel course generating process.

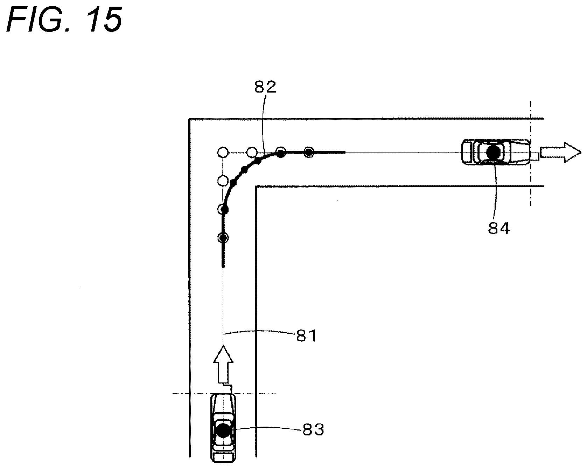

First, at S51, the CPU 51 sets each of an orientation of the vehicle recommended when the vehicle is located at the starting point (target point) of the turn segment and an orientation of the vehicle recommended when the vehicle is located at the end point (target point) of the turn segment. Note that the orientation of the vehicle includes both the orientation (angle) of a vehicle body of the vehicle and a traveling direction of the vehicle (the orientation of tires or steering angle). Note, however, that only either one of the orientations of the vehicle may be set. Here, as shown in FIG. 15, the orientation of the vehicle recommended when the vehicle is located at a starting point 83 of a turn segment is basically set such that the orientation (angle) of the vehicle body of the vehicle is identical to a traveling direction on a road at the starting point 83 of the turn segment (parallel to the road) and that the traveling direction of the vehicle is a straight-ahead direction (the steering angle is 0° (neutral state)). Likewise, the orientation of the vehicle recommended when the vehicle is located at an end point 84 of the turn segment is basically set such that the orientation (angle) of the vehicle body of the vehicle is identical to a traveling direction on the road at the end point 84 of the turn segment (parallel to the road) and that the traveling direction of the vehicle is a straight-ahead direction (the steering angle is 0° (neutral state)). Note, however, that the above description does not apply to a case in which a lane change is required before or after the turn segment, a case in which there is another turn segment adjacent to the turn segment, or the like (e.g., an S-curve), and the orientation (angle) of the vehicle body of the vehicle may be set so as to be inclined relative to the traveling direction on the road, or the traveling direction of the vehicle (the orientation of tires or steering angle) may be set to a direction in which the vehicle turns right or left. Namely, the orientations of the vehicle set at the above-described S51 do not need to be fixed, and it is desirable that each of the orientation of the vehicle recommended when the vehicle is located at the starting point of the turn segment and the orientation of the vehicle recommended when the vehicle is located at the end point of the turn segment when the vehicle travels along the planned travel path be set taking into account the way of moving into lanes selected at the above-described S25.

Then, at S52, the CPU 51 obtains each of a start vector that identifies the location and orientation of the vehicle at the starting point of the turn segment and an end vector that identifies the location and orientation of the vehicle at the end point of the turn segment, based on the locations of the starting point and the end point of the turn segment which are obtained at the above-described S36 and the orientation of the vehicle recommended when the vehicle is located at the starting point of the turn segment and the orientation of the vehicle recommended when the vehicle is located at the end point of the turn segment which are set at the above-described S51.

Here, the locations of the start vector and the end vector in the traveling direction on the road (locations in a forward-backward direction) are locations corresponding to the above-described starting point and end point of the turn segment.

On the other hand, the locations of the start vector and the end vector in a road-width direction are basically the center of a lane in which the vehicle travels (for a one-lane road or a road with no marked lanes, the locations correspond to the center of the road). Note, however, that a case in which a lane change is required before or after the turn segment, a case in which there is another turn segment adjacent to the turn segment, or the like (e.g., an S-curve), is exceptional, and the locations of the start vector and the end vector in the road-width direction may be set more to the left or right than the center of the lane.

Furthermore, the directions of the start vector and the end vector are directions corresponding to the orientations of the vehicle set at the above-described S51.

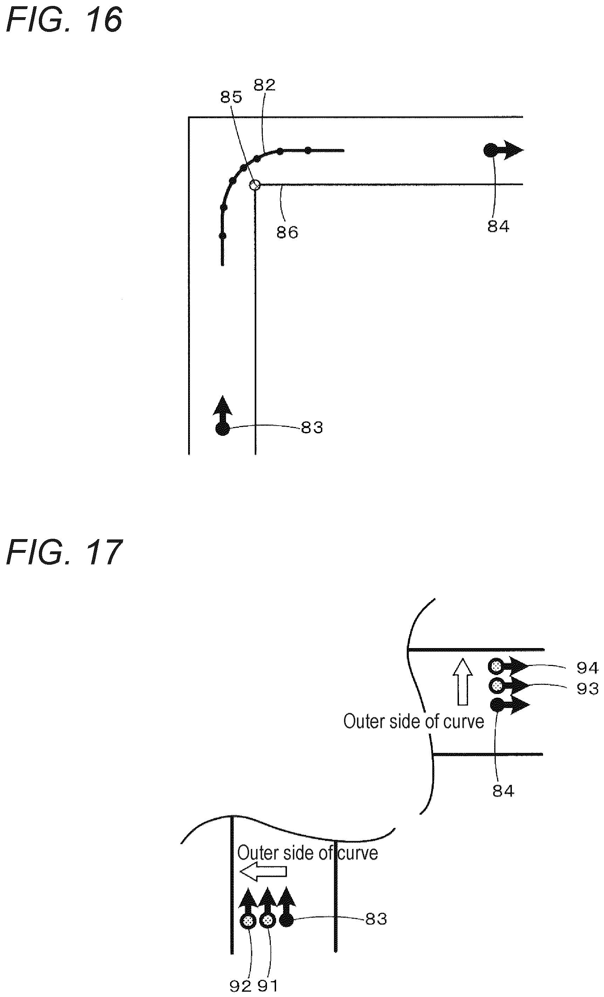

FIG. 16 is a diagram showing an example of a start vector 83 and an end vector 84 which are set for a turn segment including a curve that bends at a right angle. In the example shown in FIG. 16, the start vector 83 is set at a point in the center of a lane that is a predetermined distance before a starting point of a segment where the center line 81 begins to not match the moving average line 82, and the end vector 84 is set at a point in the center of the lane that is a predetermined distance ahead, toward a traveling-direction side, of an end point of the segment where the center line 81 begins to not match the moving average line 82. Note that the directions of the start vector 83 and the end vector 84 are both directions parallel to a traveling direction on the road (road-length direction).

Thereafter, at S53, the CPU 51 sets a clipping point (passing point) 85 between the moving average line calculated at the above-described S33 and a marking on an inner side of the curve. Here, the clipping point 85 can be set as appropriate between any of the coordinate points placed along the center line 81 and the marking on the inner side of the curve, more appropriately, between the moving average line and the marking on the inner side of the curve. For example, as shown in FIG. 16, the closest point of a marking 86 on an inner side of the curve to the moving average line 82 is set as the clipping point 85. Note that as shown in FIG. 12, basically, the moving average line 82 is located closer to the marking on the inner side of the curve than the center line 81, and thus, by setting a clipping point 85 between the moving average line 82 and the marking on the inner side of the curve, the clipping point 85 is located between any of the coordinate points placed along the center line 81 and the marking on the inner side of the curve. Note, however, that the example shown in FIG. 16 is a case in which the vehicle width of the vehicle is considered 0, and if the vehicle width is taken into account, then it is desirable to set the clipping point 85 at a location more to a center-line side by 1/2 of the vehicle width of the vehicle than the closest point of the marking 86 on the inner side of the curve to the moving average line 82, or at a location more to the center-line side by 1/2 of the vehicle width of the vehicle + α (e.g., 30 cm), taking into account an error, etc.

Subsequently, at S54, the CPU 51 generates, in addition to the start vector obtained at the above-described S52, new candidates for a start vector at the starting point of the turn segment for which a travel course is to be generated. Furthermore, in addition to the end vector obtained at the above-described S52, new candidates for an end vector are generated at the end point of the turn segment. For example, in an example shown in FIG. 17, a new start vector 91 is generated at a point moved a predetermined distance (e.g., 1/4 or 1/6 of lane width) more toward a direction of the outer side of the curve than the original start vector 83, and a new start vector 92 is generated at a point further moved a predetermined distance (e.g., 1/4 or 1/6 of lane width) in the direction of the outer side of the curve. Likewise, a new end vector 93 is generated at a point moved a predetermined distance (e.g., 1/4 or 1/6 of lane width) more toward the direction of the outer side of the curve than the original end vector 84, and a new end vector 94 is generated at a point further moved a predetermined distance (e.g., 1/4 or 1/6 of lane width) in the direction of the outer side of the curve. Note that although, in the example shown in FIG. 17, two new candidates are generated for each of the start vector and the end vector, only one or three or more candidates may be generated. Note also that it is also possible to generate candidates in a direction of the inner side of the curve. By generating many new candidates for a start vector and an end vector, a more appropriate travel course can be more likely to be generated; however, since the number of candidates for a travel course increases, processing load on calculation of travel courses increases.

Subsequent processes from S55 to S61 are performed for each of combinations of the start vectors and the end vectors that are obtained at the above-described S52 and that are further newly generated at the above-described S54. For example, in the example shown in FIG. 17, there are three start vectors and three end vectors, and thus, the processes from S55 to S61 are performed for a total of nine (3×3) combinations. After performing the processes from S55 to S61 for all combinations of the start vectors and the end vectors, processing transitions to S62.

First, at S55, the CPU 51 calculates an arc with the largest radius of curvature that passes through a start vector and an end vector, which are processing targets, in traveling directions of the respective vectors (i.e., the tangential directions of the arc match the traveling directions of the respective vectors).

Thereafter, at S56, the CPU 51 determines whether or not the arc calculated at the above-described S55 is included in a portion of the lane (the travel region obtained at the above-described S31) in which the vehicle travels between the start vector and the end vector.

If it is determined that the arc calculated at the above-described S55 is included in a portion of the lane (the travel region obtained at the above-described S31) in which the vehicle travels between the start vector and the end vector (S56: YES), then processing transitions to S57. On the other hand, if it is determined that the arc calculated at the above-described S55 is not included in a portion of the lane (the travel region obtained at the above-described S31) in which the vehicle travels between the start vector and the end vector (S56: NO), then processing transitions to S58.

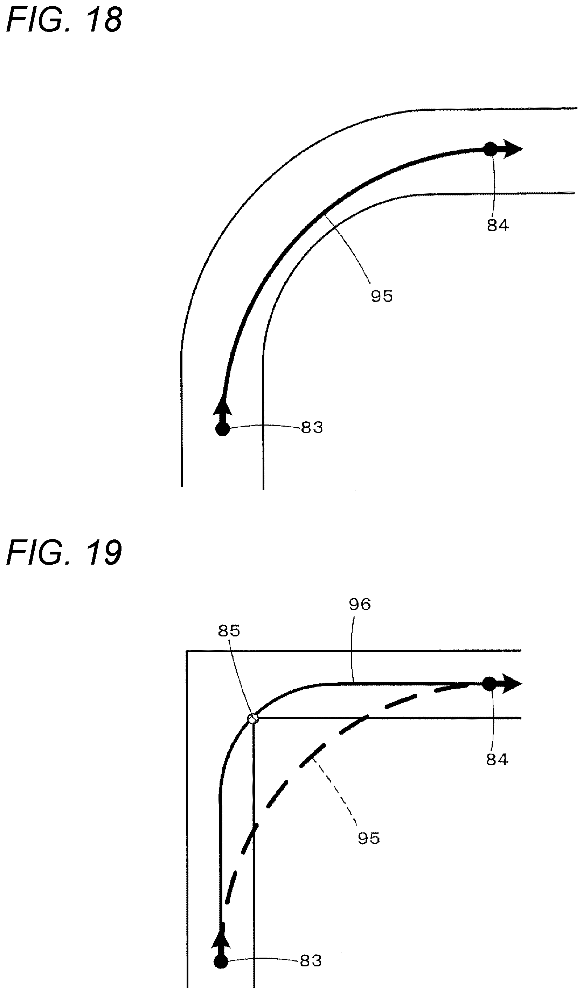

At S57, the CPU 51 generates the arc between the start vector and the end vector calculated at the above-described S55, as a first travel course. For example, an example shown in FIG. 18 is an example case in which an arc 95 calculated at the above-described S55 is included in a portion of a lane (the travel region obtained at the above-described S31) in which the vehicle travels between the start vector 83 and the end vector 84, and the arc 95 is generated as a first travel course. Thereafter, processing transitions to S59.

On the other hand, at S58, since the arc calculated at the above-described S55 is a course that goes out of the travel region and thus cannot be adopted, the CPU 51 generates a new arc that passes through the clipping point 85 set at the above-described S53, and further generates, as a first travel course, a travel course that goes straight ahead in the traveling direction on the road, with the new arc being connected to each of the start vector and the end vector which are processing targets. The first travel course generated at the above-described S58 is a course that passes through the start vector and the end vector in the traveling directions of the respective vectors. For example, an example shown in FIG. 19 is an example case in which an arc 95 calculated at the above-described S55 is not included in a portion of a lane (the travel region obtained at the above-described S31) in which the vehicle travels between the start vector 83 and the end vector 84, and a course 96 that passes through the clipping point 85 is generated as a first travel course. Note that an arc of the course 96 has a condition that the arc has the smallest possible curvature, and the course 96 has a condition that the course 96 has no change in turning direction (the course 96 does not include a plurality of turning operations).

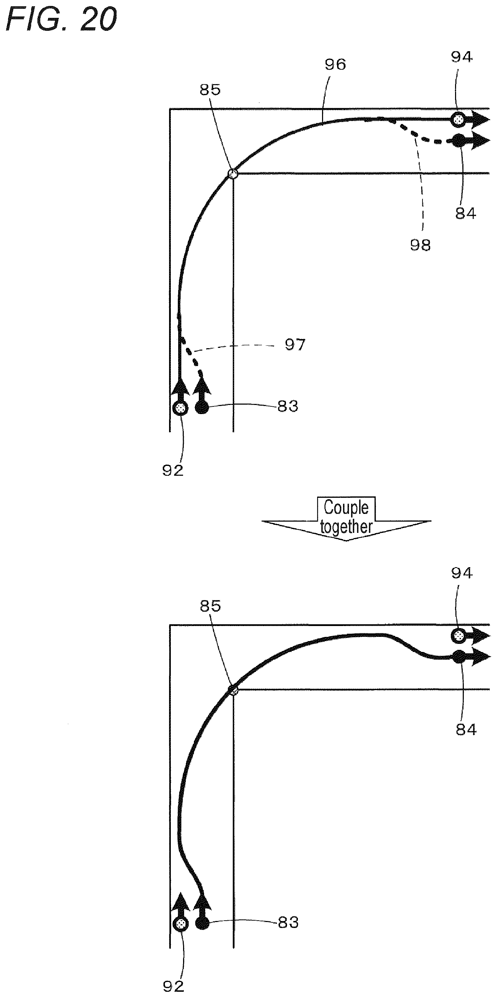

Thereafter, at S59, the CPU 51 generates a second travel course for the vehicle to move from the start vector obtained at the above-described S52 to the first travel course generated at the above-described S57 or S58. Note that when, as shown in FIGS. 18 and 19, the start vector which is a processing target is the start vector obtained at the above-described S52, a second travel course is a part of the first travel course, and thus, the process at S59 is not necessary. On the other hand, when, as shown in FIG. 20, the start vector which is a processing target is not the start vector obtained at the above-described S52 (the start vector is a start vector that is newly added at S54), a second travel course is generated. For example, in the example shown in FIG. 20, a first travel course 96 is generated using, as a processing target, a new start vector 92 that is set more to the left than the center of the lane, and a new second travel course 97 for the vehicle to move from the original start vector 83 to the first travel course 96 is generated. The second travel course 97 generated at the above-described S45 is a course that passes through the start vector 83 in a traveling direction of the start vector 83.

Subsequently, at S60, the CPU 51 generates a third travel course for the vehicle to move from the first travel course generated at the above-described S57 or S58 to the end vector obtained at the above-described S52. Note that when, as shown in FIGS. 18 and 19, the end vector which is a processing target is the end vector obtained at the above-described S52, a third travel course is a part of the first travel course, and thus, the process at S60 is not necessary. On the other hand, when, as shown in FIG. 20, the end vector which is a processing target is not the end vector obtained at the above-described S52 (the end vector is an end vector that is newly added at S54), a third travel course is generated. For example, in the example shown in FIG. 20, the first travel course 96 is generated using, as a processing target, a new end vector 94 that is set more to the left than the center of the lane, and a new third travel course 98 for the vehicle to move from the first travel course 96 to the original end vector 84 is generated. The third travel course 98 generated at the above-described S46 is a course that passes through the end vector 84 in a traveling direction of the end vector 84.

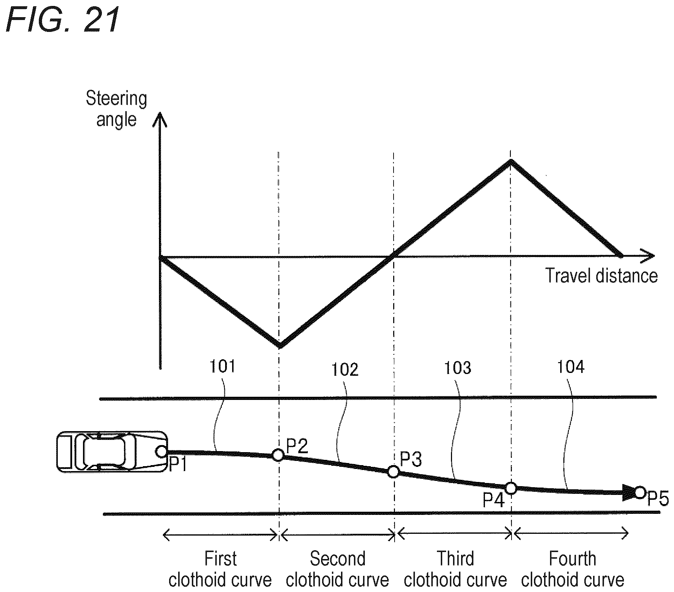

Here, a travel course of the vehicle recommended when the vehicle moves to the right or left of the lane like the above-described second travel course or third travel course includes clothoid curves whose curvatures continuously change. More specifically, the travel course is a course obtained by connecting together a plurality of clothoid curves having different shapes. FIG. 21 is a diagram showing, for example, a travel course of the vehicle recommended when the vehicle moves to the right of a lane (note that when the vehicle moves to the left, the travel course is a left-right symmetric travel course). As shown in FIG. 21, the travel course of the vehicle recommended when the vehicle moves to the right of the lane includes a first clothoid curve 101 where the vehicle travels from a movement starting point P1 to a first relay point P2 while gradually turning the steering in a rightward direction (i.e., while gradually greatly changing the curvature); a second clothoid curve 102 where the vehicle travels from the first relay point P2 to a midway point P3 while gradually bringing the steering back to a straight-ahead direction (i.e., while gradually mildly changing the curvature); a third clothoid curve 103 where the vehicle travels from the midway point P3 to a second relay point P4 while gradually turning the steering in a leftward direction this time (i.e., while gradually greatly changing the curvature); and a fourth clothoid curve 104 where the vehicle thereafter travels from the second relay point P4 to a movement end point P5 while gradually bringing the steering back to the straight-ahead direction (i.e., while gradually mildly changing the curvature). Note that the width of lateral movement of the clothoid curves 101 to 104 is, for the second travel course, a distance where the second travel course overlaps the first travel course at the time point of P5, and is, for the third travel course, a distance where the third travel course overlaps the original end vector 84 at the time point of P5. The CPU 51 calculates the clothoid curves 101 to 104 so as to obtain a course that is as smooth as possible and has the shortest possible distance required for movement within the lane, using the clothoid curves, on conditions that acceleration (lateral G) occurring upon moving within the lane does not exceed an upper limit value (e.g., 0.2 G) at which a vehicle's occupant is not given a feeling of discomfort, and the amount of change in lateral G per unit of time does not likewise exceed an upper limit value (e.g., 0.6 m/s³). Then, by connecting together the calculated clothoid curves 101 to 104, the above-described second travel course or third travel course is calculated.

Thereafter, at S61, the CPU 51 couples together the first travel course generated at the above-described S57 or S58, the second travel course generated at the above-described S59 (only when the second travel course is generated), and the third travel course generated at the above-described S60 (only when the third travel course is generated), by which one travel course is generated. The travel course generated at the above-described S61 is a "candidate for a travel course recommended upon traveling on the turn segment" which is generated for a combination of the start vector and the end vector which are processing targets. Particularly, the travel course is such that the orientation of the vehicle upon reaching the starting point 83 of the turn segment which is a target point is the orientation set at the above-described S51, and the orientation of the vehicle upon reaching the end point 84 of the turn segment which is a target point is the orientation set at the above-described S51. For example, when the vehicle travels along the travel course generated at the above-described S61, the orientations (angles) of the vehicle body of the vehicle at the starting point 83 and the end point 84 of the turn segment are identical to the traveling direction on the road (parallel to the road), and the traveling direction of the vehicle is a straight-ahead direction (the steering angle is 0° (neutral state)). In addition, the travel course generated at the above-described S61 is a course obtained by combining together at least two or more courses including a straight course, an arc course, and a clothoid-curve course, and at least the distance and amount of change in orientation (how the curvature changes) of each course are identified.

Note that in a case of a travel course including only the first travel course generated at the above-described S57 or S58 or a travel course that includes a second travel course and a third travel course but has an arc and straight courses that are directly coupled together, clothoid curves are not inserted between an arc course and each of straight-ahead courses present before and after the arc course, and thus, there is a problem that the curvature does not match before and after a connecting point between each of the straight-ahead courses and the arc course (in order for the vehicle to travel along the travel course, the vehicle needs to temporarily stop at the connecting points between the courses and perform steering wheel operations). Hence, it is desirable to make modifications as shown below such that a clothoid curve is inserted between the arc course and each straight-ahead course. Note, however, that modifications are not necessarily required for a turn segment where there is no problem for the vehicle to stop midway and perform steering wheel operations, such as a turn segment where the vehicle makes a turn to enter (entering) or exit (exiting) a parking space or a turn segment where the vehicle travels with a turn to enter a facility from a public road or to enter the public road from within the facility.

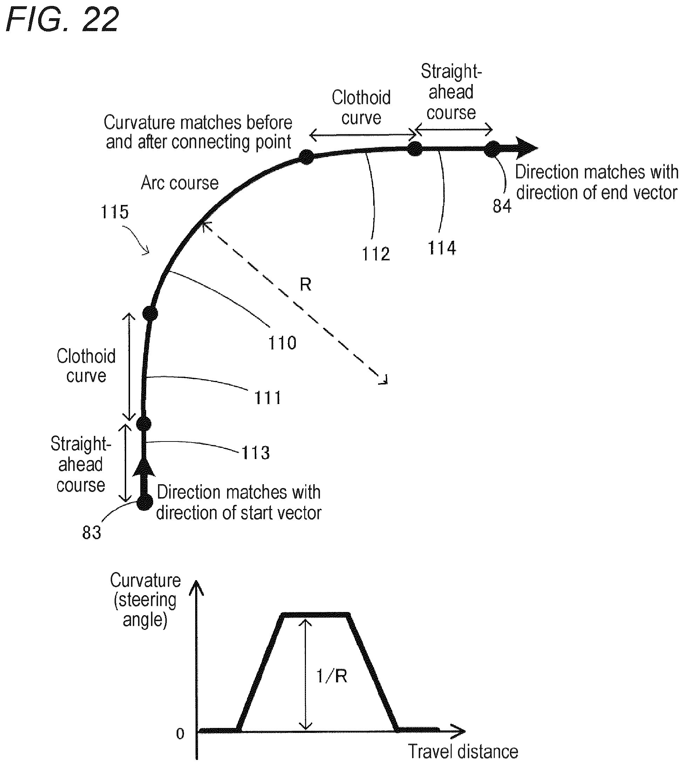

First, as shown in FIG. 22, the radius of curvature R of an arc course 110 included in a candidate for a travel course generated at the above-described S61 is modified as necessary. For example, the radius of curvature R is modified to be smaller by a predetermined percentage (e.g., 80%).

Subsequently, there is calculated each of a first clothoid curve 111 that is formed so as to be connected to the arc course 110 at the same curvature as the arc course 110 from a course that is headed in a direction of a start vector 83 which is a starting point of a turn segment; and a second clothoid curve 112 that is formed so as to be connected to the arc course 110 at the same curvature as the arc course 110, and to be a course that is headed in a direction of an end vector 84 which is an end point of the turn segment. The length Lc and clothoid parameter A of each clothoid curve can be set as appropriate, and for example, Lc = 9.4 m and A = 6.85. Note that the clothoid curve is a curve that is formed when the curvature is changed with respect to the distance at a constant rate (e.g., if the vehicle speed is fixed, then the steering angle is changed at constant angular speed), and can be calculated, for example, by computing Fresnel integrals using Simpson's rule or an approximation method or by substituting by a complex plane. A method of calculating a clothoid curve is already publicly known and thus details thereof are omitted.

Subsequently, the first clothoid curve 111, the arc course 110, and the second clothoid curve 112 are coupled together, and as shown in FIG. 22, straight-ahead courses 113 and 114 that are connected to the coupled-together course (hereinafter, referred to as coupled course) are calculated. For example, the straight-ahead course 113 is a straight course that connects between the starting point (start vector 83) of the turn segment and a starting point of the coupled course, and the straight-ahead course 114 is a straight course that connects between an end point of the coupled course and the end point (end vector 84) of the turn segment. Then, the calculated straight-ahead course 113, coupled course, and straight-ahead course 114 are connected together at the same curvature and coupled together, by which a final candidate for a travel course 115 is generated. The candidate for a travel course 115 has a continuous travel location and direction of the vehicle that travels along the travel course (i.e., the travel course is a continuous line without being disconnected and does not bend midway). Furthermore, as shown in a graph of FIG. 22, the travel course also has a continuous change in the orientation (curvature) of the vehicle that travels; specifically, a smooth course is obtained in which the curvature matches before and after each of connecting points between the straight-ahead course 113 and the first clothoid curve 111, between the first clothoid curve 111 and the arc course 110, between the arc course 110 and the second clothoid curve 112, and between the second clothoid curve 112 and the straight-ahead course 114. Note that instead of having completely matching curvatures (changes in orientation) before and after the connecting point, a condition may be set that the curvatures fall within a predetermined range. Even in that case, the candidate for a travel course 115 is a smooth travel course having continuous orientation changes that fall within a predetermined range.

Note that for a candidate for a travel course obtained by coupling together the first travel course 96, the second travel course 97, and the third travel course 98 such as that shown in FIG. 20, the curvature matches before and after each of connecting points between the travel courses and the curvature also matches before and after each of connecting points between the candidate for a travel course and straight courses present before and after the candidate for a travel course, and thus, without making modifications such as those described above, a smooth travel course having continuous orientation changes that fall within a predetermined range is obtained.

Thereafter, likewise, for each of combinations of the start vectors and the end vectors that are obtained at the above-described S52 and that are further newly generated at the above-described S54, a "candidate for a travel course recommended upon traveling on the turn segment" is generated, and after generating "candidates for a travel course recommended upon traveling on the turn segment" for all combinations of the start vectors and the end vectors, processing transitions to S62.

Thereafter, at S62, the CPU 51 calculates, for each of the plurality of candidates for a travel course generated at the above-described S61, cost required for vehicle's travel, taking into account vehicle behavior taken when the vehicle travels along the travel course. The cost indicates appropriateness as a travel course. A lower cost indicates a higher level of appropriateness as a travel course. An example of a method of calculating cost at the above-described S62 will be described below.

Specifically, by adding together costs calculated based on the following elements (1) to (3), final cost is calculated for each candidate for a travel course:
(1) Moving time (or distance) ... Moving time [s] × 1.0;
(2) Maximum curvature ... Maximum curvature × 0.1; and
(3) Number of changes in the turning direction of the steering ... Number of changes × 5.0.

First, for (1), a cost is determined by the moving time of the travel course. Specifically, a higher cost is calculated for a longer time required for the vehicle to travel along the travel course, i.e., it can be seen that a travel course with a longer time is less likely to be selected as a recommended travel course. Note that if it is assumed that the vehicle speed of the vehicle upon traveling on the turn segment is constant, then the moving time of the travel course also corresponds to the length of the moving distance.

In addition, for (2), the maximum curvature of a curve included in the travel course is calculated. Then, a cost is calculated based on the calculated maximum curvature. Specifically, the larger the maximum curvature of the travel course, a more steep turn is to be performed upon traveling along the travel course, which imposes a great burden on an occupant; thus, a higher cost is calculated, i.e., it can be seen that a travel course with a larger maximum curvature is less likely to be selected as a recommended travel course.

In addition, for (3), a cost is determined according to the number of changes in the turning direction of the steering included in the travel course. Specifically, a higher cost is calculated for a larger number of changes in the turning direction of the steering, i.e., it can be seen that a travel course with a larger number of changes in the turning direction of the steering is less likely to be selected as a recommended travel course.

Note that when cost is calculated for a candidate for a travel course at the above-described S62, the cost may be calculated taking into account only some of the above-described elements (1) to (3), instead of taking into account all of the above-described elements (1) to (3). For example, a total value of costs based on (1) and (2) may be calculated. In addition, cost may be calculated using elements other than the above-described (1) to (3) (e.g., whether or not there is acceleration or deceleration or the amount of turning of the steering).

Thereafter, at S63, the CPU 51 compares the costs calculated at the above-described S62, to select a travel course recommended upon traveling on the turn segment from among the plurality of candidates for a travel course generated at the above-described S61. Basically, a candidate for a travel course with the lowest calculated cost is selected as a travel course recommended upon traveling on the turn segment. Note that the travel course calculated at S63 is a reference travel course that is calculated without taking into account the obstacle. For a case in which the reference travel course does not overlap the obstacle, i.e., a case in which the reference travel course is a travel course that can avoid the obstacle (S38: NO), the reference travel course is determined to be a travel course recommended upon traveling on the turn segment, and thereafter, processing transitions to S28, and for segments other than the turn segment, travel courses recommended upon traveling along the recommended route derived at the above-described S25 are generated, and the finally generated travel courses are combined together, by which a static travel course which is a travel course recommended for the vehicle to travel along is generated for roads included in the planned travel path (S29). Furthermore, the generated static travel course is stored in the flash memory 54, etc., as assistance information used for autonomous driving assistance. On the other hand, for a case in which the reference travel course cannot avoid the obstacle (S38: YES), a first avoidance travel course generating process (S40) which will be described later is performed.

Next, a subprocess of the first avoidance travel course generating process performed at the above-described S40 will be described based on FIG. 23. FIG. 23 is a flowchart of a subprocess program of the first avoidance travel course generating process.

Here, for the following processes from S71 to S81, basically, the same processes as the processes from S51 to S61 of the above-described reference travel course generating process (FIG. 14) are performed. Note, however, that the processes have the following differences.

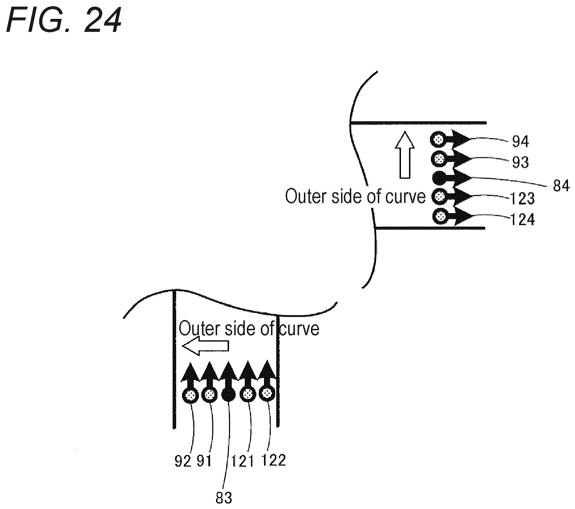

First, when, at S74, new candidates for a start vector are generated at a starting point of a turn segment for which a travel course is to be generated, in addition to a start vector obtained at the above-described S72, as shown in FIG. 24, a new start vector 91 is generated at a point moved a predetermined distance (e.g., 1/4 or 1/6 of lane width) more toward a direction of the outer side of the curve than the original start vector 83, and a new start vector 92 is generated at a point further moved a predetermined distance (e.g., 1/4 or 1/6 of lane width) in the direction of the outer side of the curve. In addition, a new start vector 121 is generated at a point moved a predetermined distance (e.g., 1/4 or 1/6 of lane width) more toward a direction of the inner side of the curve than the original start vector 83, and a new start vector 122 is also generated at a point further moved a predetermined distance (e.g., 1/4 or 1/6 of lane width) in the direction of the inner side of the curve. Likewise, when new candidates for an end vector are generated at an end point of the turn segment, in addition to an end vector 84 obtained at the above-described S72, as shown in FIG. 24, a new end vector 93 is generated at a point moved a predetermined distance (e.g., 1/4 or 1/6 of lane width) more toward a direction of the outer side of the curve than the original end vector 84, and a new end vector 94 is generated at a point further moved a predetermined distance (e.g., 1/4 or 1/6 of lane width) in the direction of the outer side of the curve. In addition, a new end vector 123 is generated at a point moved a predetermined distance (e.g., 1/4 or 1/6 of lane width) more toward a direction of the inner side of the curve than the original end vector 84, and a new end vector 124 is also generated at a point further moved a predetermined distance (e.g., 1/4 or 1/6 of lane width) in the direction of the inner side of the curve. By this, in the first avoidance travel course generating process, a course whose curvature intentionally increases (whose radius of a turn intentionally decreases) upon turning, such as a course where, upon turning, the vehicle turns from the inner side of the road or the vehicle enters the inner side of the road after turning, is also added to candidates for a travel course, by which a course that avoids the obstacle can be generated.

In addition, when a second travel course for the vehicle to move from the start vector obtained at the above-described S72 to a first travel course generated the above-described S77 or S78 (to move toward the outer side of the road) is generated at S79, the CPU 51 calculates a course having the shortest possible distance required for movement within the lane, on conditions that acceleration (lateral G) occurring upon moving within the lane does not exceed an upper limit value (e.g., 0.2 G) at which a vehicle's occupant is not given a feeling of discomfort, and the amount of change in lateral G per unit of time does not likewise exceed an upper limit value (e.g., 0.6 m/s³). This makes it easier to generate a course that avoids the obstacle.

Meanwhile, when a third travel course for the vehicle to move from the first travel course generated the above-described S77 or S78 to the end vector obtained at the above-described S72 (to move toward the inner side of the road) is generated at S80, too, likewise, the CPU 51 calculates a course having the shortest possible distance required for movement within the lane, on conditions that acceleration (lateral G) occurring upon moving within the lane does not exceed an upper limit value (e.g., 0.2 G) at which a vehicle's occupant is not given a feeling of discomfort, and the amount of change in lateral G per unit of time does not likewise exceed an upper limit value (e.g., 0.6 m/s³). This makes it easier to generate a course that avoids the obstacle.

Then, as with the reference travel course generating process, for each of combinations of the start vectors and the end vectors that are obtained at the above-described S72 and that are further newly generated at the above-described S74, a "candidate for a travel course recommended upon traveling on the turn segment" is generated, and after generating "candidates for a travel course recommended upon traveling on the turn segment" for all combinations of the start vectors and the end vectors, processing transitions to S82. Note that compared to the reference travel course generating process, the numbers of candidates for a start vector and an end vector to be generated at the above-described S74 increase, and thus, the number of candidates for a travel course to be generated also increases. For example, in the example shown in FIG. 24, there are five start vectors and five end vectors, and thus, the processes from S75 to S81 are performed for a total of 25 (5×5) combinations, by which a "candidate for a travel course recommended upon traveling on the turn segment" is generated for each combination.

In addition, in a case of a travel course including only the first travel course generated at the above-described S77 or S78 or a travel course that includes a second travel course and a third travel course but has an arc and straight courses that are directly coupled together, clothoid curves are not inserted between an arc course and each of straight-ahead courses present before and after the arc course, and thus, there is a problem that the curvature does not match before and after a connecting point between each of the straight-ahead courses and the arc course (in order for the vehicle to travel along the travel course, the vehicle needs to temporarily stop at the connecting points between the courses and perform steering wheel operations). Thus, as with the above-described reference travel course generating process (FIG. 14), it is desirable to make modifications such that a clothoid curve is inserted between the arc course and each straight-ahead course (see FIG. 22).

Thereafter, at S82, the CPU 51 calculates, for each of the plurality of candidates for a travel course generated at the above-described S81, cost required for vehicle's travel, taking into account vehicle behavior taken when the vehicle travels along the travel course. The cost indicates appropriateness as a travel course. A lower cost indicates a higher level of appropriateness as a travel course. Basically, the process is the same as that at S62, and by adding together costs calculated based on the above-described elements (1) to (3), final cost is calculated for each candidate for a travel course.

Note, however, that at S82, when the CPU 51 calculates cost based on the elements (1) to (3), the CPU 51 first determines, for each of the plurality of candidates for a travel course generated at the above-described S81, whether or not the candidate for a travel course overlaps an obstacle identified by the obstacle information obtained at the above-described S26. Here, as shown in FIG. 3, obstacle information identifies a link ID of a link where an obstacle is located; a distance from a starting point of the link; a lane in which the obstacle is located; and an area (occupied region) in the lane where the obstacle is located, by which it becomes possible to determine whether or not each of the plurality of candidates for a travel course overlaps the obstacle, based on the obstacle information. In addition, the "candidate for a travel course overlaps the obstacle" at the above-described S82 includes a case in which, as with the above-described S38, an area where the obstacle is located overlaps the candidate for a travel course, and includes, in addition thereto, a case in which when the vehicle travels along the candidate for a travel course, the vehicle overlaps an area where the obstacle is located, i.e., a case in which a distance X between the area where the obstacle is located and the candidate for a travel course is less than a predetermined distance (e.g., 1/2 of vehicle width + α) is also considered that the "candidate for a travel course overlaps the obstacle" (see FIG. 13). Then, a candidate for a travel course having been determined to overlap the obstacle is excluded from a cost calculation target, i.e., no longer a candidate for a travel course. Note that for a candidate for a travel course having been determined to overlap the obstacle, instead of leaving the candidate out of a cost calculation target, a very large value may be added to the cost of the candidate.

Thereafter, at S83, the CPU 51 compares the costs calculated at the above-described S82, to select a travel course that avoids the obstacle and that is recommended upon traveling on the turn segment from among the plurality of candidates for a travel course generated at the above-described S81. Basically, a candidate for a travel course with the lowest calculated cost that does not overlap the obstacle is selected as a recommended travel course. Thereafter, processing transitions to S28, and for segments other than the turn segment, travel courses recommended upon traveling along the recommended route derived at the above-described S25 are generated, and the finally generated travel courses are combined together, by which a static travel course which is a travel course recommended for the vehicle to travel along is generated for roads included in the planned travel path (S29). Furthermore, the generated static travel course is stored in the flash memory 54, etc., as assistance information used for autonomous driving assistance. Note, however, that when a course that can avoid the obstacle cannot be generated in the first avoidance travel course generating process (S41: NO), a second avoidance travel course generating process (S44) or a third avoidance travel course generating process (S45) which will be described later is performed.

Next, a subprocess of the second avoidance travel course generating process performed at the above-described S44 will be described based on FIG. 25. FIG. 25 is a flowchart of a subprocess program of the second avoidance travel course generating process.

First, at S91, the CPU 51 sets each of an orientation of the vehicle recommended when the vehicle is located at the starting point (target point) of the turn segment and an orientation of the vehicle recommended when the vehicle is located at the end point (target point) of the turn segment. Details are the same as those at S51 and thus description thereof is omitted.

Then, at S92, the CPU 51 obtains each of a start vector that identifies the location and orientation of the vehicle at the starting point of the turn segment and an end vector that identifies the location and orientation of the vehicle at the end point of the turn segment, based on the locations of the starting point and the end point of the turn segment which are obtained at the above-described S36 and the orientation of the vehicle recommended when the vehicle is located at the starting point of the turn segment and the orientation of the vehicle recommended when the vehicle is located at the end point of the turn segment which are set at the above-described S91. Details are the same as those at S52 and thus description thereof is omitted.

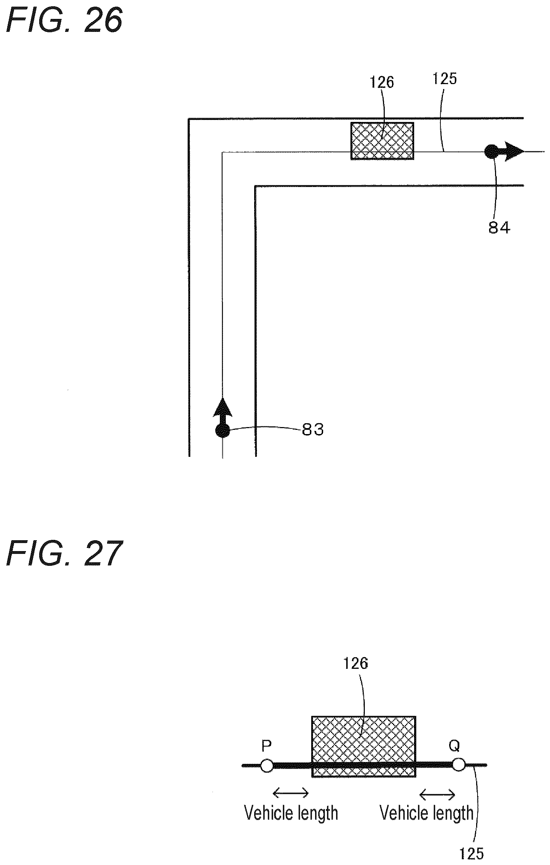

Thereafter, at S93, for the turn segment, the CPU 51 sets a guide line based on which a travel course is calculated, along the center line, which is calculated at the above-described S32, of the lane (travel region) in which the vehicle travels. For example, FIG. 26 is a diagram showing an example of a start vector 83, an end vector 84, and a guide line 125 which are set for a turn segment including a curve that bends at a right angle. As shown in FIG. 26, the guide line 125 is set on a center line of a lane (travel region) in which the vehicle travels. Note that the second avoidance travel course generating process is performed when the turn segment includes an obstacle and the obstacle overlaps the center line (S43: YES), and thus, as shown in FIG. 26, an obstacle 126 and the guide line 125 also overlap each other.

Then, at S94, the CPU 51 identifies an area where the guide line set at the above-described S93 overlaps the obstacle. Here, as shown in FIG. 3, obstacle information obtained from the server device 4 identifies a link ID of a link where an obstacle is located; a distance from a starting point of the link; a lane in which the obstacle is located; and an area (occupied region) in the lane where the obstacle is located, by which it becomes possible to identify an area where the guide line overlaps the obstacle, based on the obstacle information. In addition, the "area where the guide line overlaps the obstacle" at the above-described S94 includes an area where the obstacle 126 overlaps the guide line 125 and includes, in addition thereto, an area where the vehicle located along the guide line 125 overlaps the obstacle, i.e., as shown in FIG. 27, an area obtained by adding the overall length of the vehicle to each of areas in front of and behind the area where the obstacle 126 overlaps the guide line 125. For example, in the example shown in FIG. 27, an area from P to Q is identified as an area where the guide line 125 overlaps the obstacle 126.

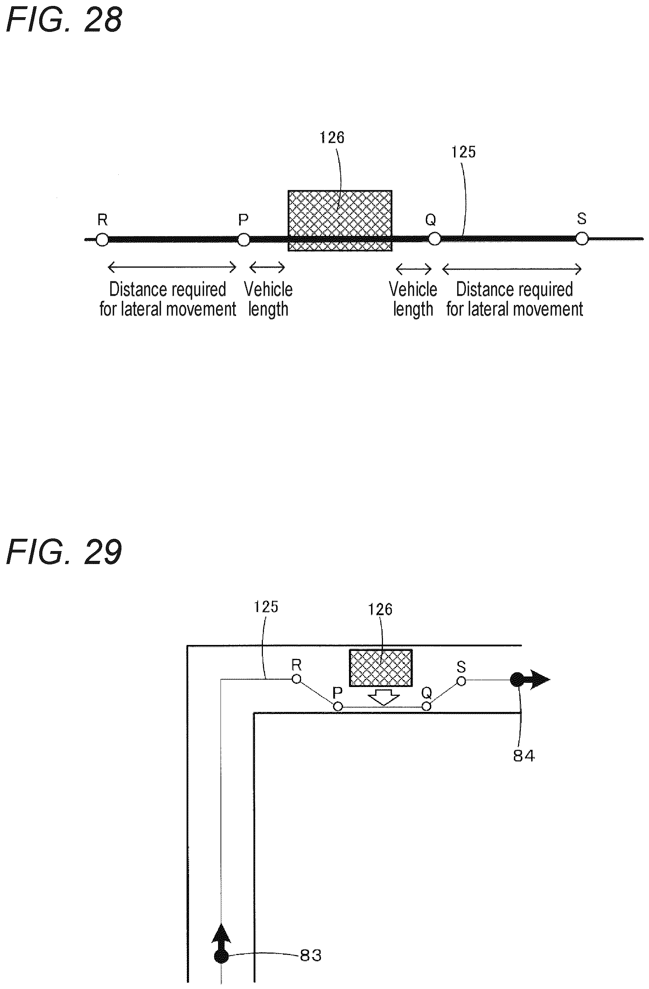

Subsequently, at S95, the CPU 51 identifies, as a target overlapping segment, an area obtained by further adding a distance required for vehicle's lateral movement to each of areas in front of and behind the "area where the guide line overlaps the obstacle" which is identified at the above-described S94. Note that here the "distance required for vehicle's lateral movement" is a distance along a traveling direction on the road that is required for the vehicle to move from the center line (guide line) of the lane to an edge of the lane (even if the distance is one along the traveling direction on the road that is required for the vehicle to move, reversely, from the edge of the lane to the center line of the lane, the distance is the same). Here, a travel course of the vehicle recommended when the vehicle moves to the right or left of the lane includes clothoid curves whose curvatures continuously change. More specifically, the travel course is a course obtained by connecting together a plurality of clothoid curves having different shapes such as those shown in the above-described FIG. 21. For example, assuming that, in FIG. 21, P1 is on the center line and P5 is the location of an edge of the lane, a distance from P1 to P5 along the traveling direction on the road serves as a "distance required for vehicle's lateral movement". Note that a minimum value of the distance required for movement within the lane is calculated on conditions that acceleration (lateral G) occurring upon moving within the lane does not exceed an upper limit value (e.g., 0.2 G) at which a vehicle's occupant is not given a feeling of discomfort, and the amount of change in lateral G per unit of time does not likewise exceed an upper limit value (e.g., 0.6 m/s³). As a result, for example, in an example shown in FIG. 28, an area from R to S obtained by adding a "distance required for vehicle's lateral movement" to each of areas in front of and behind the area from P to Q is identified as a target overlapping segment.

Thereafter, at S96, the CPU 51 modifies a portion of the guide line set at the above-described S93 that corresponds to the target overlapping segment identified at the above-described S95, by moving the portion of the guide line so as to stay away from the obstacle. Specifically, as shown in FIG. 29, P and Q are moved in a sliding manner in a road-width direction toward a road-edge side which is a side that moves away from the obstacle 126 (in the example shown in FIG. 29, a road-edge side in a direction of the inner side of the curve). Particularly, P and Q are moved to an extreme position where there is no possibility of the vehicle contacting the road edge when the vehicle is assumed to travel along the guide line 125. Note that R and P, P and Q, and Q and S each are connected by a straight line; as a result, as shown in FIG. 29, the guide line 125 based on which a travel course is calculated is modified into a shape that does not overlap the obstacle 126.

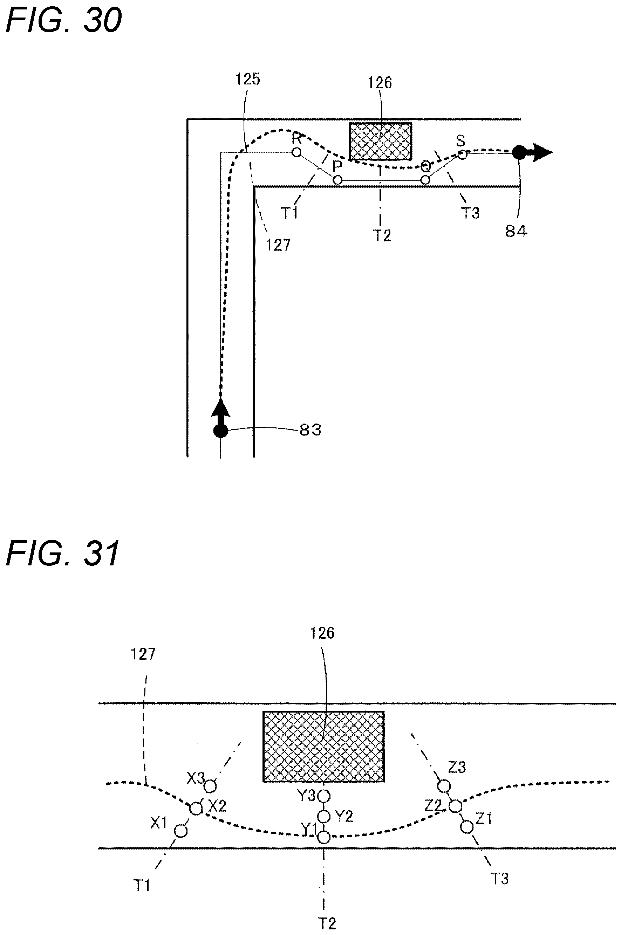

Subsequently, at S97, the CPU 51 calculates, based on the guide line modified at the above-described S96, a moving average line for the guide line for the turn segment. Note that the moving average line is a line obtained by connecting together average points of a predetermined number of consecutive coordinate points placed along the guide line. More specifically, for each of coordinate points set at predetermined spacings along the guide line, an average point of five coordinate points including two coordinate points present before and after the coordinate point (a point obtained by averaging latitude and longitude points) is calculated, and a line obtained by connecting together the average points serves as a moving average line. Note that FIG. 30 shows a moving average line 127 calculated for the guide line 125 shown in FIG. 29.

Thereafter, at S98, the CPU 51 divides the target overlapping segment identified at the above-described S95, with points of intersection of the modified guide line and the moving average line calculated at the above-described S97 being boundaries. For example, in the example shown in FIG. 30, the target overlapping segment is divided with T1 to T3 being boundaries.

Subsequently, at S99, the CPU 51 generates, in addition to the start vector obtained at the above-described S92, new candidates for a start vector at the starting point of the turn segment for which a travel course is to be generated. Furthermore, in addition to the end vector obtained at the above-described S92, new candidates for an end vector are generated at the end point of the turn segment. Specifically, as with S74 of the first avoidance travel course generating process (FIG. 23), as shown in FIG. 24, a new start vector 91 is generated at a point moved a predetermined distance (e.g., 1/4 or 1/6 of lane width) more toward a direction of the outer side of the curve than the original start vector 83, and a new start vector 92 is generated at a point further moved a predetermined distance (e.g., 1/4 or 1/6 of lane width) in the direction of the outer side of the curve. In addition, a new start vector 121 is generated at a point moved a predetermined distance (e.g., 1/4 or 1/6 of lane width) more toward a direction of the inner side of the curve than the original start vector 83, and a new start vector 122 is also generated at a point further moved a predetermined distance (e.g., 1/4 or 1/6 of lane width) in the direction of the inner side of the curve. Likewise, a new end vector 93 is generated at a point moved a predetermined distance (e.g., 1/4 or 1/6 of lane width) more toward a direction of the outer side of the curve than the original end vector 84, and a new end vector 94 is generated at a point further moved a predetermined distance (e.g., 1/4 or 1/6 of lane width) in the direction of the outer side of the curve. In addition, a new end vector 123 is generated at a point moved a predetermined distance (e.g., 1/4 or 1/6 of lane width) more toward a direction of the inner side of the curve than the original end vector 84, and a new end vector 124 is also generated at a point further moved a predetermined distance (e.g., 1/4 or 1/6 of lane width) in the direction of the inner side of the curve.

Furthermore, at S100, the CPU 51 sets candidates for a passing point through which the vehicle passes, at the boundaries T1 to T3 by which the target overlapping segment is divided at the above-described S98. For example, when, as shown in FIG. 31, normals to the moving average line 127 that pass through the points of intersection of the modified guide line and the moving average line calculated at the above-described S97 are the boundaries T1 to T3, candidates for a passing point are set on the boundaries T1 to T3. Note that only one candidate for a passing point may be set for each boundary or a plurality of candidates for a passing point may be set for each boundary. For example, in the example shown in FIG. 31, candidates for a passing point X1 to X3 are set at the boundary T1, candidates for a passing point Y1 to Y3 are set at the boundary T2, and candidates for a passing point Z1 to Z3 are set at the boundary T3, but four or more candidates for a passing point may be set. Note that it is desirable that a candidate for a passing point be set within a lane (travel region) in which the vehicle travels and at a location where the candidate for a passing point does not overlap the obstacle 126. Note also that it is desirable that at least a point of intersection of the guide line and the moving average line be included in candidates for a passing point. Note that by generating many passing points, a more appropriate travel course can be more likely to be generated; however, since the number of candidates for a travel course increases, processing load on calculation of travel courses increases.

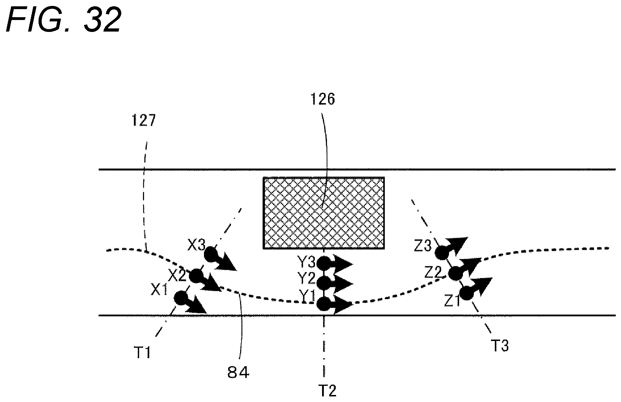

Subsequently, at S101, the CPU 51 obtains, for each of the candidates for a passing point set at the above-described S100, a passing vector that identifies the location and orientation of the vehicle recommended upon passing through the candidate for a passing point. Here, the location of the passing vector is allowed to match that of a corresponding candidate for a passing point set at the above-described S100. In addition, the direction of the passing vector is a direction that intersects a corresponding one of the boundaries T1 to T3, i.e., a tangential direction of the moving average line 127. FIG. 32 shows an example of passing vectors set at the boundaries T1 to T3.

Subsequent processes from S102 to S105 are performed for each of combinations of the start vectors and the end vectors that are obtained at the above-described S92 and that are further newly generated at the above-described S99 and the passing vectors obtained at the above-described S101. For example, in the examples shown in FIGS. 24 and 32, there are five start vectors, five end vectors, and 3×3×3 passing vectors, and thus, the processes from S102 to S105 are performed for a total of 675 (5×3×3×3×5) combinations. After performing the processes from S102 to S105 for all combinations of the start vectors and the end vectors and the passing vectors, processing transitions to S106.

First, at S102, the CPU 51 generates, as a first travel course, a travel course that passes through a start vector, an end vector, and a passing vector, which are processing targets, in traveling directions of the respective vectors. Note that an arc of a course to be generated has a condition that the arc has the smallest possible curvature. Here, for generation of a first travel course at the above-described S102, for example, a segment from the starting point of the turn segment to the boundary T1 is considered a first turn segment, a segment from the boundary T1 to the boundary T2 is considered a second turn segment, a segment from the boundary T2 to the boundary T3 is considered a third turn segment, and a segment from the boundary T3 to the end point of the turn segment is considered a fourth turn segment, and a recommended travel course that passes through vectors present at a starting point and an end point of each of the first to fourth turn segments, in directions of the respective vectors is calculated, and a course obtained by finally connecting together the recommended travel courses may be generated as a first travel course. In that case, the passing vectors X1 to X3 set at the boundary T1 serve as end vectors of the first turn segment and as start vectors of the second turn segment, the passing vectors Y1 to Y3 set at the boundary T2 serve as end vectors of the second turn segment and as start vectors of the third turn segment, and the passing vectors Z1 to Z3 set at the boundary T3 serve as end vectors of the third turn segment and as start vectors of the fourth turn segment. Note that a travel course recommended for a segment from a start vector to an end vector of each of the first to fourth turn segments can be calculated by the same process as the reference travel course generating process (FIG. 14) which is already described.

Thereafter, at S103, the CPU 51 generates a second travel course for the vehicle to move from the start vector obtained at the above-described S92 to the first travel course generated at the above-described S102 (to move toward the outer side of the road). Note that details are the same as those of the above-described processes at S59 and S79 and thus description thereof is omitted.

Subsequently, at S104, the CPU 51 generates a third travel course for the vehicle to move from the first travel course generated at the above-described S102 to the end vector obtained at the above-described S92 (to move toward the inner side of the road). Note that details are the same as those of the above-described processes at S59 and S79 and thus description thereof is omitted.

Thereafter, at S105, the CPU 51 couples together the first travel course generated at the above-described S102, the second travel course generated at the above-described S103 (only when the second travel course is generated), and the third travel course generated at the above-described S104 (only when the third travel course is generated), by which one travel course is generated. The travel course generated at the above-described S105 is a "candidate for a travel course recommended upon traveling on the turn segment" which is generated for a combination of the start vector, the end vector, and the passing vector which are processing targets. Particularly, the travel course is such that the orientation of the vehicle upon reaching the starting point 83 of the turn segment which is a target point is the orientation set at the above-described S91, and the orientation of the vehicle upon reaching the end point 84 of the turn segment which is a target point is the orientation set at the above-described S91. For example, when the vehicle travels along the travel course generated at the above-described S105, the orientations (angles) of the vehicle body of the vehicle at the starting point 83 and the end point 84 of the turn segment are identical to the traveling direction on the road (parallel to the road), and the traveling direction of the vehicle is a straight-ahead direction (the steering angle is 0° (neutral state)). In addition, the travel course generated at the above-described S105 is a travel course generated with reference to the center line and modified such that a portion of the travel course corresponding to target overlapping segment does not overlap the obstacle, the target overlapping segment including an area where a portion of the center line overlaps the obstacle.

Note that when, in the travel course generated at the above-described S105, clothoid curves are not inserted between an arc course and each of straight-ahead courses present before and after the arc course, there is a problem that the curvature does not match before and after a connecting point between each of the straight-ahead courses and the arc course (in order for the vehicle to travel along the travel course, the vehicle needs to temporarily stop at the connecting points between the courses and perform steering wheel operations). Thus, as with the above-described reference travel course generating process (FIG. 14), it is desirable to make modifications such that a clothoid curve is inserted between the arc course and each straight-ahead course (see FIG. 22).

Thereafter, at S106, the CPU 51 calculates, for each of the plurality of candidates for a travel course generated at the above-described S105, cost required for vehicle's travel, taking into account vehicle behavior taken when the vehicle travels along the travel course. The cost indicates appropriateness as a travel course. A lower cost indicates a higher level of appropriateness as a travel course. Basically, the process is the same as that at S62, and by adding together costs calculated based on the above-described elements (1) to (3), final cost is calculated for each candidate for a travel course.

Note, however, that at S106, upon calculation of cost based on the elements (1) to (3), the CPU 51 first determines, for each of the plurality of candidates for a travel course generated at the above-described S105, whether or not the candidate for a travel course overlaps an obstacle identified by the obstacle information obtained at the above-described S26. Here, as shown in FIG. 3, obstacle information identifies a link ID of a link where an obstacle is located; a distance from a starting point of the link; a lane in which the obstacle is located; and an area (occupied region) in the lane where the obstacle is located, by which it becomes possible to determine whether or not each of the plurality of candidates for a travel course overlaps the obstacle, based on the obstacle information. In addition, the "candidate for a travel course overlaps the obstacle" at the above-described S106 includes, as with the above-described S38, a case in which an area where the obstacle is located overlaps the candidate for a travel course, and includes, in addition thereto, a case in which when the vehicle travels along the candidate for a travel course, the vehicle overlaps an area where the obstacle is located, i.e., a case in which a distance X between the area where the obstacle is located and the candidate for a travel course is less than a predetermined distance (e.g., 1/2 of vehicle width + α) is also considered that the "candidate for a travel course overlaps the obstacle" (see FIG. 13). Then, a candidate for a travel course having been determined to overlap the obstacle is excluded from a cost calculation target, i.e., no longer a candidate for a travel course. Note that for a candidate for a travel course having been determined to overlap the obstacle, instead of leaving the candidate out of a cost calculation target, a very large value may be added to the cost of the candidate.

Thereafter, at S107, the CPU 51 compares the costs calculated at the above-described S106, to select a travel course that avoids the obstacle and that is recommended upon traveling on the turn segment from among the plurality of candidates for a travel course generated at the above-described S105. Basically, a candidate for a travel course with the lowest calculated cost that does not overlap the obstacle is selected as a recommended travel course. Thereafter, processing transitions to S28, and for segments other than the turn segment, travel courses recommended upon traveling along the recommended route derived at the above-described S25 are generated, and the finally generated travel courses are combined together, by which a static travel course which is a travel course recommended for the vehicle to travel along is generated for roads included in the planned travel path (S29). Furthermore, the generated static travel course is stored in the flash memory 54, etc., as assistance information used for autonomous driving assistance. Note that in the second avoidance travel course generating process, it is premised that at least one or more candidates for a travel course that can avoid the obstacle are generated at the above-described S105, but when a candidate for a travel course that can avoid the obstacle cannot be generated, if the obstacle can be avoided by changing lanes in which the vehicle travels, then the lanes in which the vehicle travels are changed, and if the obstacle cannot be avoided even by changing the lanes in which the vehicle travels, then it is desirable to suggest changing the planned travel path.

Next, a subprocess of the third avoidance travel course generating process performed at the above-described S45 will be described based on FIG. 33. FIG. 33 is a flowchart of a subprocess program of the third avoidance travel course generating process.

First, at S111, the CPU 51 sets each of an orientation of the vehicle recommended when the vehicle is located at the starting point (target point) of the turn segment and an orientation of the vehicle recommended when the vehicle is located at the end point (target point) of the turn segment. Details are the same as those at S51 and thus description thereof is omitted.

Then, at S112, the CPU 51 obtains each of a start vector that identifies the location and orientation of the vehicle at the starting point of the turn segment and an end vector that identifies the location and orientation of the vehicle at the end point of the turn segment, based on the locations of the starting point and the end point of the turn segment which are obtained at the above-described S36 and the orientation of the vehicle recommended when the vehicle is located at the starting point of the turn segment and the orientation of the vehicle recommended when the vehicle is located at the end point of the turn segment which are set at the above-described S111. Details are the same as those at S52 and thus description thereof is omitted.

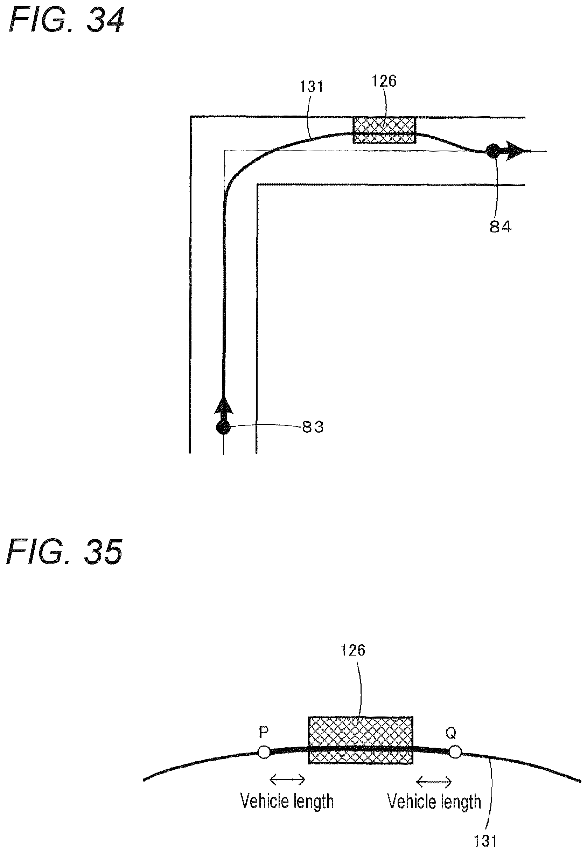

Thereafter, at S113, the CPU 51 sets, for the turn segment, a guide line based on which a travel course is calculated, along the reference travel course calculated at the above-described S37. Note that the reference travel course is a travel course that is generated without taking into account the obstacle and that is recommended upon traveling on the turn segment. For example, FIG. 34 is a diagram showing an example of a start vector 83, an end vector 84, and a guide line 131 which are set for a turn segment including a curve that bends at a right angle. As shown in FIG. 34, the guide line 131 is set on the reference travel course. Note that the third avoidance travel course generating process is performed when the turn segment includes an obstacle and the obstacle does not overlap the center line but overlaps the reference travel course (S38: YES and S43: NO), and thus, as shown in FIG. 34, an obstacle 126 and the guide line 131 also overlap each other.

Then, at S114, the CPU 51 identifies an area where the guide line set at the above-described S113 overlaps the obstacle. Here, as shown in FIG. 3, obstacle information obtained from the server device 4 identifies a link ID of a link where an obstacle is located; a distance from a starting point of the link; a lane in which the obstacle is located; and an area (occupied region) in the lane where the obstacle is located, by which it becomes possible to identify an area where the guide line overlaps the obstacle, based on the obstacle information. In addition, the "area where the guide line overlaps the obstacle" at the above-described S114 includes an area where the obstacle 126 overlaps the guide line 131 and includes, in addition thereto, an area where the vehicle located along the guide line 131 overlaps the obstacle, i.e., as shown in FIG. 35, an area obtained by adding the overall length of the vehicle to each of areas in front of and behind the area where the obstacle 126 overlaps the guide line 131. For example, in the example shown in FIG. 35, an area from P to Q is identified as an area where the guide line 131 overlaps the obstacle 126.

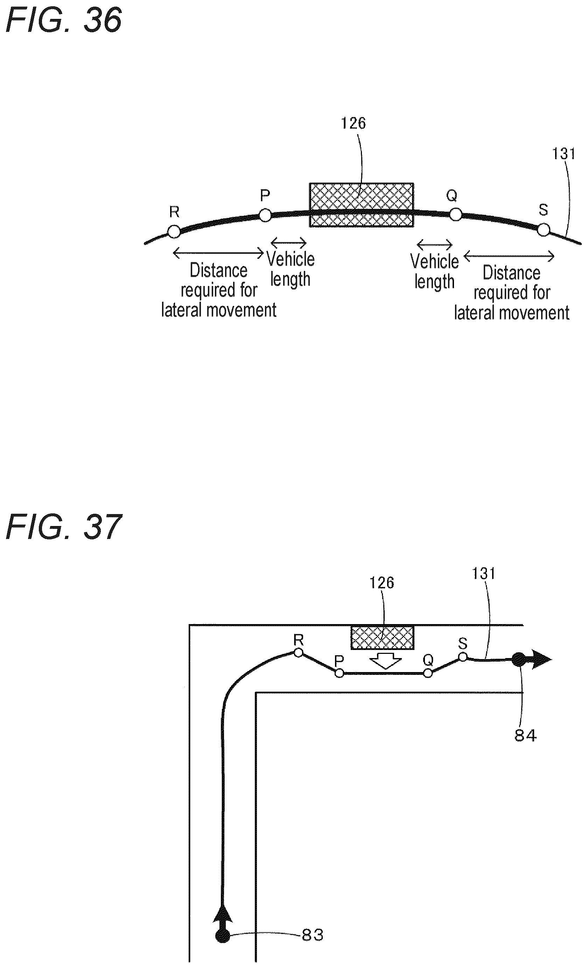

Subsequently, at S115, the CPU 51 identifies, as a target overlapping segment, an area obtained by further adding a distance required for vehicle's lateral movement to each of areas in front of and behind the "area where the guide line overlaps the obstacle" which is identified at the above-described S114. Note that here the "distance required for vehicle's lateral movement" is a distance along the traveling direction on the road that is required for the vehicle to move from the reference travel course (guide line) to a location within the lane where the vehicle can avoid the obstacle (e.g., a midway location between the obstacle and an edge of the lane) (even if the distance is one along the traveling direction on the road that is required for the vehicle to move, reversely, from the midway location to the reference travel course, the distance is the same). Here, a travel course of the vehicle recommended when the vehicle moves to the right or left of the lane includes clothoid curves whose curvatures continuously change. More specifically, the travel course is a course obtained by connecting together a plurality of clothoid curves having different shapes such as those shown in the above-described FIG. 21. For example, assuming that, in FIG. 21, P1 is on the reference travel course and P5 is the midway location between the obstacle and the edge of the lane, a distance from P1 to P5 along the traveling direction on the road serves as the "distance required for vehicle's lateral movement". Note that a minimum value of the distance required for movement within the lane is calculated on conditions that acceleration (lateral G) occurring upon moving within the lane does not exceed an upper limit value (e.g., 0.2 G) at which a vehicle's occupant is not given a feeling of discomfort, and the amount of change in lateral G per unit of time does not likewise exceed an upper limit value (e.g., 0.6 m/s³). As a result, for example, in an example shown in FIG. 36, an area from R to S obtained by adding a "distance required for vehicle's lateral movement" to each of areas in front of and behind the area from P to Q is identified as a target overlapping segment.

Thereafter, at S116, the CPU 51 modifies a portion of the guide line set at the above-described S113 that corresponds to the target overlapping segment identified at the above-described S115, by moving the portion of the guide line so as to stay away from the obstacle. Specifically, as shown in FIG. 37, P and Q are moved in a sliding manner in a road-width direction toward a road-edge side which is a side that moves away from the obstacle 126 (in the example shown in FIG. 37, a road-edge side in a direction of the inner side of the curve). Particularly, P and Q are moved to a midway location between the obstacle 126 and the road edge. Note that R and P, P and Q, and Q and S each are connected by a straight line; as a result, as shown in FIG. 37, the guide line 131 based on which a travel course is calculated is modified into a shape that does not overlap the obstacle 126.

Subsequently, at S117, the CPU 51 calculates, based on the guide line modified at the above-described S116, a moving average line for the guide line for the turn segment. Note that the moving average line is a line obtained by connecting together average points of a predetermined number of consecutive coordinate points placed along the guide line. Details are the same as those at S97 and thus description thereof is omitted (see FIG. 30).

Thereafter, at S118, the CPU 51 divides the target overlapping segment identified at the above-described S115, with points of intersection of the modified guide line and the moving average line calculated at the above-described S117 being boundaries.

Subsequently, at S119, the CPU 51 generates, in addition to the start vector obtained at the above-described S112, new candidates for a start vector at the starting point of the turn segment for which a travel course is to be generated. Furthermore, in addition to the end vector obtained at the above-described S112, new candidates for an end vector are generated at the end point of the turn segment. Specifically, as with S74 of the first avoidance travel course generating process (FIG. 23), as shown in FIG. 24, a new start vector 91 is generated at a point moved a predetermined distance (e.g., 1/4 or 1/6 of lane width) more toward a direction of the outer side of the curve than the original start vector 83, and a new start vector 92 is generated at a point further moved a predetermined distance (e.g., 1/4 or 1/6 of lane width) in the direction of the outer side of the curve. In addition, a new start vector 121 is generated at a point moved a predetermined distance (e.g., 1/4 or 1/6 of lane width) more toward a direction of the inner side of the curve than the original start vector 83, and a new start vector 122 is also generated at a point further moved a predetermined distance (e.g., 1/4 or 1/6 of lane width) in the direction of the inner side of the curve. Likewise, a new end vector 93 is generated at a point moved a predetermined distance (e.g., 1/4 or 1/6 of lane width) more toward a direction of the outer side of the curve than the original end vector 84, and a new end vector 94 is generated at a point further moved a predetermined distance (e.g., 1/4 or 1/6 of lane width) in the direction of the outer side of the curve. In addition, a new end vector 123 is generated at a point moved a predetermined distance (e.g., 1/4 or 1/6 of lane width) more toward a direction of the inner side of the curve than the original end vector 84, and a new end vector 124 is also generated at a point further moved a predetermined distance (e.g., 1/4 or 1/6 of lane width) in the direction of the inner side of the curve.

Furthermore, at S120, the CPU 51 sets candidates for a passing point through which the vehicle passes, at the boundaries T1 to T3 by which the target overlapping segment is divided at the above-described S118. Details are the same as those at S100 and thus description thereof is omitted (see FIG. 31).

Subsequently, at S121, the CPU 51 obtains, for each of the candidates for a passing point set at the above-described S120, a passing vector that identifies the location and orientation of the vehicle recommended upon passing through the candidate for a passing point. Here, the location of the passing vector is allowed to match that of a corresponding candidate for a passing point set at the above-described S 120. In addition, the direction of the passing vector is a direction that intersects a corresponding one of the boundaries T1 to T3, i.e., a tangential direction of the moving average line 127 (see FIG. 32).

Subsequent processes from S122 to S125 are performed for each of combinations of the start vectors and the end vectors that are obtained at the above-described S112 and that are further newly generated at the above-described S119 and the passing vectors obtained at the above-described S121. For example, in the examples shown in FIGS. 24 and 32, there are five start vectors, five end vectors, and 3×3×3 passing vectors, and thus, the processes from S122 to S125 are performed for a total of 675 (5×3×3×3×5) combinations. After performing the processes from S122 to S125 for all combinations of the start vectors and the end vectors and the passing vectors, processing transitions to S126.

First, at S122, the CPU 51 generates, as a first travel course, a travel course that passes through a start vector, an end vector, and a passing vector, which are processing targets, in traveling directions of the respective vectors. Note that an arc of a course to be generated has a condition that the arc has the smallest possible curvature. Here, for generation of a first travel course at the above-described S122, for example, a segment from the starting point of the turn segment to the boundary T1 is considered a first turn segment, a segment from the boundary T1 to the boundary T2 is considered a second turn segment, a segment from the boundary T2 to the boundary T3 is considered a third turn segment, and a segment from the boundary T3 to the end point of the turn segment is considered a fourth turn segment, and a recommended travel course that passes through vectors present at a starting point and an end point of each of the first to fourth turn segments, in directions of the respective vectors is calculated, and a course obtained by finally connecting together the recommended travel courses may be generated as a first travel course. In that case, the passing vectors X1 to X3 set at the boundary T1 serve as end vectors of the first turn segment and as start vectors of the second turn segment, the passing vectors Y1 to Y3 set at the boundary T2 serve as end vectors of the second turn segment and as start vectors of the third turn segment, and the passing vectors Z1 to Z3 set at the boundary T3 serve as end vectors of the third turn segment and as start vectors of the fourth turn segment. Note that a travel course recommended for a segment from a start vector to an end vector of each of the first to fourth turn segments can be calculated by the same process as the reference travel course generating process (FIG. 14) which is already described.

Thereafter, at S123, the CPU 51 generates a second travel course for the vehicle to move from the start vector obtained at the above-described S112 to the first travel course generated at the above-described S122 (to move toward the outer side of the road). Note that details are the same as those of the above-described processes at S59 and S79 and thus description thereof is omitted.

Subsequently, at S124, the CPU 51 generates a third travel course for the vehicle to move from the first travel course generated at the above-described S122 to the end vector obtained at the above-described S112 (to move toward the inner side of the road). Note that details are the same as those of the above-described processes at S59 and S79 and thus description thereof is omitted.

Thereafter, at S125, the CPU 51 couples together the first travel course generated at the above-described S122, the second travel course generated at the above-described S123 (only when the second travel course is generated), and the third travel course generated at the above-described S124 (only when the third travel course is generated), by which one travel course is generated. The travel course generated at the above-described S125 is a "candidate for a travel course recommended upon traveling on the turn segment" which is generated for a combination of the start vector, the end vector, and the passing vector which are processing targets. Particularly, the travel course is such that the orientation of the vehicle upon reaching the starting point 83 of the turn segment which is a target point is the orientation set at the above-described S111, and the orientation of the vehicle upon reaching the end point 84 of the turn segment which is a target point is the orientation set at the above-described S111. For example, when the vehicle travels along the travel course generated at the above-described S125, the orientations (angles) of the vehicle body of the vehicle at the starting point 83 and the end point 84 of the turn segment are identical to the traveling direction on the road (parallel to the road), and the traveling direction of the vehicle is a straight-ahead direction (the steering angle is 0° (neutral state)). In addition, the travel course generated at the above-described S125 is a travel course generated with reference to the reference travel course and modified such that a portion of the travel course corresponding to the target overlapping segment does not overlap the obstacle, the target overlapping segment including an area where a portion of the reference travel course overlaps the obstacle.

Note that when, in the travel course generated at the above-described S125, clothoid curves are not inserted between an arc course and each of straight-ahead courses present before and after the arc course, there is a problem that the curvature does not match before and after a connecting point between each of the straight-ahead courses and the arc course (in order for the vehicle to travel along the travel course, the vehicle needs to temporarily stop at the connecting points between the courses and perform steering wheel operations). Thus, as with the above-described reference travel course generating process (FIG. 14), it is desirable to make modifications such that a clothoid curve is inserted between the arc course and each straight-ahead course (see FIG. 22).

Thereafter, at S126, the CPU 51 calculates, for each of the plurality of candidates for a travel course generated at the above-described S125, cost required for vehicle's travel, taking into account vehicle behavior taken when the vehicle travels along the travel course. The cost indicates appropriateness as a travel course. A lower cost indicates a higher level of appropriateness as a travel course. Basically, the process is the same as that at S62, and by adding together costs calculated based on the above-described elements (1) to (3), final cost is calculated for each candidate for a travel course.

Note, however, that at S126, upon calculation of cost based on the elements (1) to (3), the CPU 51 first determines, for each of the plurality of candidates for a travel course generated at the above-described S125, whether or not the candidate for a travel course overlaps an obstacle identified by the obstacle information obtained at the above-described S26. Here, as shown in FIG. 3, obstacle information identifies a link ID of a link where an obstacle is located; a distance from a starting point of the link; a lane in which the obstacle is located; and an area (occupied region) in the lane where the obstacle is located, by which it becomes possible to determine whether or not each of the plurality of candidates for a travel course overlaps the obstacle, based on the obstacle information. In addition, the "candidate for a travel course overlaps the obstacle" at the above-described S126 includes, as with the above-described S38, a case in which an area where the obstacle is located overlaps the candidate for a travel course, and includes, in addition thereto, a case in which when the vehicle travels along the candidate for a travel course, the vehicle overlaps an area where the obstacle is located, i.e., a case in which a distance X between the area where the obstacle is located and the candidate for a travel course is less than a predetermined distance (e.g., 1/2 of vehicle width + α) is also considered that the "candidate for a travel course overlaps the obstacle" (see FIG. 13). Then, a candidate for a travel course having been determined to overlap the obstacle is excluded from a cost calculation target, i.e., no longer a candidate for a travel course. Note that for a candidate for a travel course having been determined to overlap the obstacle, instead of leaving the candidate out of a cost calculation target, a very large value may be added to the cost of the candidate.

Thereafter, at S127, the CPU 51 compares the costs calculated at the above-described S126, to select a travel course that avoids the obstacle and that is recommended upon traveling on the turn segment from among the plurality of candidates for a travel course generated at the above-described S125. Basically, a candidate for a travel course with the lowest calculated cost that does not overlap the obstacle is selected as a recommended travel course. Thereafter, processing transitions to S28, and for segments other than the turn segment, travel courses recommended upon traveling along the recommended route derived at the above-described S25 are generated, and the finally generated travel courses are combined together, by which a static travel course which is a travel course recommended for the vehicle to travel along is generated for roads included in the planned travel path (S29). Furthermore, the generated static travel course is stored in the flash memory 54, etc., as assistance information used for autonomous driving assistance. Note that in the second avoidance travel course generating process, it is premised that at least one or more candidates for a travel course that can avoid the obstacle are generated at the above-described S125, but when a candidate for a travel course that can avoid the obstacle cannot be generated, if the obstacle can be avoided by changing lanes in which the vehicle travels, then the lanes in which the vehicle travels are changed, and if the obstacle cannot be avoided even by changing the lanes in which the vehicle travels, then it is desirable to suggest changing the planned travel path.

Note that although the above-described implementation example describes an example of generating a static travel course for a turn segment where the vehicle travels with a turn on a curved road (including a case of a road that bends at a predetermined angle such as a right angle, in addition to a case of a road that curves in an arc-shaped manner), there are other segments: an intersection (junction) segment where the vehicle is to make a left or right turn; a segment where the vehicle travels with a turn within a facility such as a parking lot; a segment where the vehicle makes a turn to enter (entering) or exit (exiting) a parking space; and a segment where the vehicle travels with a turn to enter a facility from a public road or to enter the public road from within the facility. Only some of the above-described segments may serve as target turn segments. Alternatively, segments other than those described above may also be included in turn segments. For example, a segment where a lane change is made may also be included in turn segments.

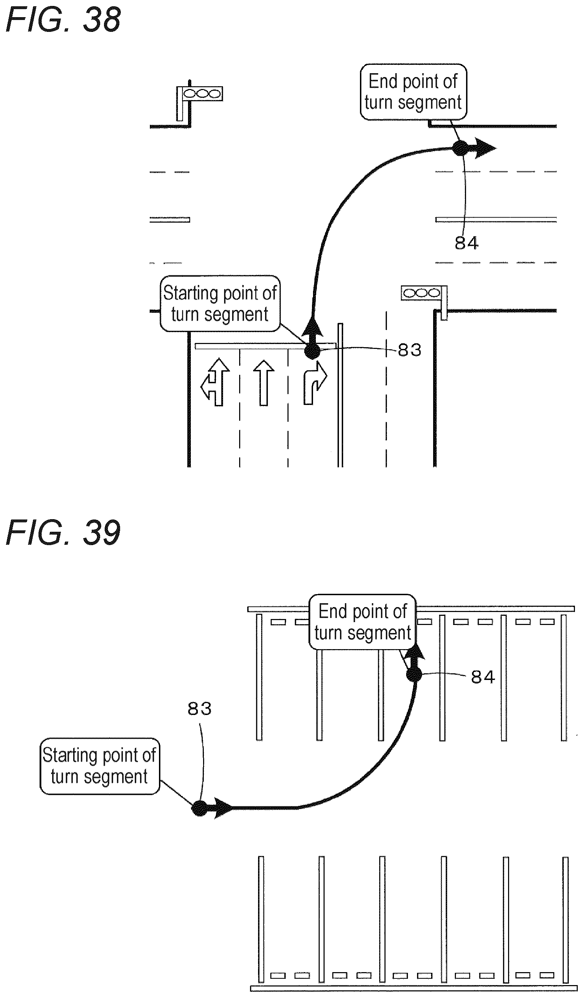

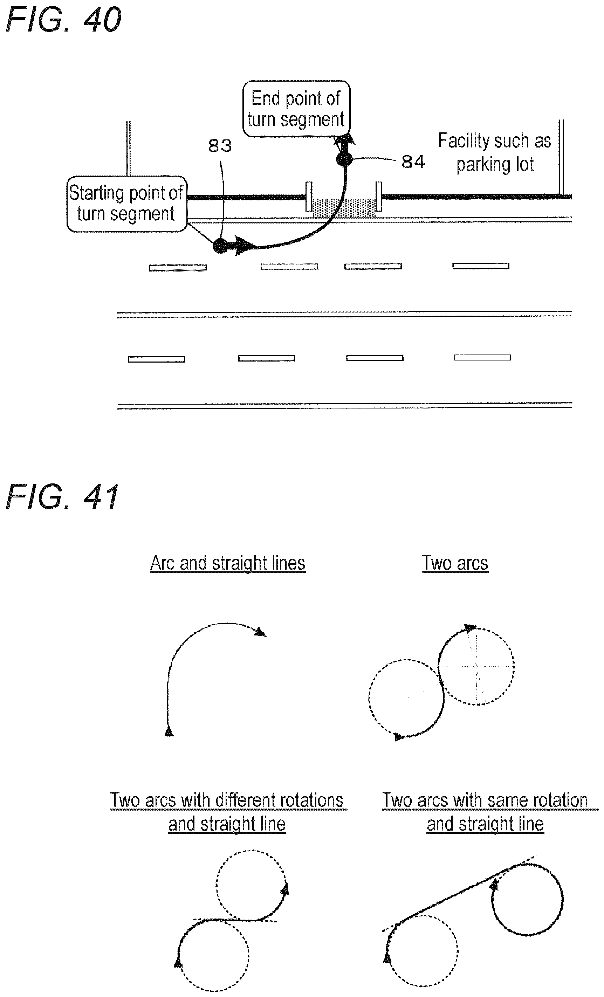

In addition, it is desirable that the locations of a starting point and an end point of a turn segment (locations where a start vector and an end vector are set) be set based on different standards for different types of turn segments. For example, as shown in FIG. 38, for an intersection (junction) segment where the vehicle is to make a left or right turn, a point where the vehicle starts entering the intersection (a stop line if there is one) serves as a starting point of the turn segment, and a point where the vehicle has completed exiting the intersection serves as an end point of the turn segment. In addition, as shown in FIG. 39, for an entry into a parking space, a point on a vehicle road that is a predetermined distance before a parking space where the vehicle is to be parked serves as a starting point of a turn segment, and the parking space where the vehicle is to be parked serves as an end point of the turn segment. In addition, for an exit from a parking space, a parking space where the vehicle is parked serves as a starting point of a turn segment, and a point on a vehicle road and on a traveling-direction side that is a predetermined distance from the parking space serves as an end point of the turn segment. In addition, as shown in FIG. 40, for an entry into a facility from a public road, a point on the public road that is predetermined distance before an entrance to the facility serves as a starting point of a turn segment, and a point where the vehicle has entered the facility a predetermined distance from the entrance to the facility serves as an end point of the turn segment. In addition, for an exit from within the facility into the public road, a point where the vehicle has entered the facility a predetermined distance from the entrance to the facility serves as a starting point of a turn segment, and a point on the public road and on a traveling-direction side that is a predetermined distance from the entrance to the facility serves as an end point of the turn segment.

In addition, for an intersection such as that shown in FIG. 38, there are no lanes within the intersection, but by considering road surface markings painted on a road surface such as guide lines (white guide lines) and a rhombic guide zone (diamond marking) placed at the center of the intersection, and structures such as poles, as edge parts of lanes, the above-described travel course is generated.

In addition, for an entry or exit into/from a parking space such as that shown in FIG. 39, by considering markings that separate parking spaces in addition to markings on a vehicle road, as edge parts of lanes, the above-described travel course is generated. Furthermore, when, as shown in FIG. 39, a parking space serves as a starting point or an end point of a turn segment, the directions of a start vector and an end vector which are set at the starting point and the end point of the turn segment are directions parallel to the parking space. Note, however, that for a travel course for the vehicle to enter a parking space, a traveling direction of the vehicle (the orientation of tires or steering angle) at an end point does not necessarily need to be parallel to the parking space, i.e., clothoid curves such as those shown in FIG. 19 are not necessary, and the travel course may end with an arc course.

In addition, for an entry into a facility from a public road or an exit from within the facility such as that shown in FIG. 40, by considering edge parts of the entrance to the facility facing the public road (edge parts of a region between the public road and the facility where the vehicle can pass) as edge parts of a lane, the above-described travel course is generated. In addition, for a turn segment where the vehicle enters a facility from a public road or exits the facility, the vehicle needs to temporarily stop before entering a sidewalk, and thus, a travel course is obtained that is premised on temporary stop before a turn. The same also applies to a turn segment where a turn is made at an intersection with a stop line.

In addition, for a course that connects between two vectors (a start vector and an end vector) set at any two points, as shown in FIG. 41, there are (A) a combination of an arc course (which may include clothoid curves; the same also applies hereinafter) and straight courses connected before and after the arc course; (B) a combination of two arc courses; (C) a combination of two arc courses with different rotations and a straight course connected between the two arc courses; and (D) a combination of two arc courses with the same rotation and a straight course connected between the two arc courses. In the above-described implementation example, only (A) is generated as a candidate for a travel course that connects between a start vector and an end vector, but if a situation allows generation of travel courses (B) to (D), then the travel courses (B) to (D) may also be generated as candidates for a travel course. With the candidates for a travel course being generated, at the above-described S63, S82, S106, and S126, costs are compared between the candidates for a travel course to select a finally recommended travel course.

As described in detail above, in the navigation device 1 and a computer program executed by the navigation device 1 according to the present embodiment, a planned travel path along which a vehicle travels is obtained (S1); obstacle information about an obstacle present on the planned travel path is also obtained (S26); when, upon traveling along the planned travel path, there is included a turn segment where the vehicle travels with a turn, orientations of the vehicle taken when the vehicle reaches a starting point and an end point of the turn segment are set based on the planned travel path (S51, S71, S91, S111); a travel course that avoids the obstacle on the turn segment and that is recommended for the vehicle to travel along on the turn segment is generated using the obstacle information, on condition that orientations of the vehicle upon reaching the starting point and the end point of the turn segment coincide with the set orientations (S37 to S42); and driving assistance for the vehicle is provided based on the generated travel course (S9, S10). Thus, when, particularly, a travel course that avoids an obstacle is generated for a turn segment, it becomes possible to generate a travel course recommended for the vehicle that prevents the vehicle from performing unnatural behavior at at least one of a starting point and an end point of the turn segment, by which a sudden speed change or lateral acceleration is suppressed. As a result, it becomes possible to provide appropriate driving assistance that does not impose a burden on a vehicle's occupant.

In addition, when the turn segment is a segment where the vehicle travels with a turn on a curved road, it is determined whether or not the obstacle is present at a location where the obstacle overlaps a center line of a lane in which the vehicle is planning to travel (S43), and when the obstacle is present at the location where the obstacle overlaps the center line, a travel course generated with reference to the center line and modified such that a portion of the travel course corresponding to a target overlapping segment does not overlap the object is generated as a travel course recommended for the vehicle to travel along, the target overlapping segment including an area where a portion of the center line overlaps the obstacle (S44). Thus, it becomes possible to generate a travel course where the vehicle avoids an obstacle with minimum vehicle operation while traveling near a center line of a lane in which the vehicle is planning to travel.

In addition, when the turn segment is a segment where the vehicle travels with a turn on a curved road, it is determined whether or not the obstacle is present at a location where the obstacle overlaps a center line of a lane in which the vehicle is planning to travel (S43), and when the obstacle is present at a location where the obstacle does not overlap the center line, a travel course generated with reference to a reference travel course and modified such that a portion of the travel course corresponding to a target overlapping segment does not overlap the obstacle is generated as a travel course recommended for the vehicle to travel along, the reference travel course being a travel course that is generated without taking into account the obstacle and that is recommended for the vehicle to travel along on the turn segment, and the target overlapping segment including an area where a portion of the reference travel course overlaps the obstacle (S45). Thus, it becomes possible to generate a travel course where the vehicle avoids an obstacle with minimum vehicle operation while traveling near a travel course that is recommended for travel when it is assumed that there is no obstacle.

In addition, each of a start vector that identifies the location and orientation of the vehicle at the starting point of the turn segment and an end vector that identifies the location and orientation of the vehicle at the end point of the turn segment is obtained (S92, S112); the target overlapping segment is divided into a plurality of segments; a candidate for a passing point through which the vehicle passes is set at a boundary between the plurality of divided segments; and a travel course that passes from the start vector to the end vector via the candidate for a passing point in directions of the respective vectors is generated as a travel course recommended for the vehicle to travel along, the candidate for a passing point being present at the boundary between the segments (S102, S122). Thus, it becomes possible to generate a travel course which does not overlap an obstacle in a target overlapping segment and in which the orientations of the vehicle upon reaching a starting point and an end point of a turn segment coincide with recommended orientations.

In addition, a plurality of candidates for a passing point through which the vehicle passes are set at a boundary between the plurality of segments (S100, S120); for each candidate for a passing point, a travel course that passes from the start vector to the end vector via the candidate for a passing point in directions of the respective vectors is generated as a candidate for a travel course, the candidate for a passing point being present at the boundary between the segments (S105, S125); and the plurality of candidates for a travel course generated for the respective candidates for a passing point are compared to select a candidate for a travel course that does not overlap the obstacle and that is determined to be the most recommended travel course for the vehicle to travel along (S107, S127), and a travel course recommended for the vehicle to travel along is generated using the selected candidate for a travel course. Thus, it becomes possible to suggest a plurality of candidates for a travel course that do not overlap an obstacle in a target overlapping segment, and select a more recommended travel course from among the suggested candidates for a travel course.

Cost is calculated for each of the plurality of candidates for a travel course which are generated for the respective candidates for a passing point, and the calculated costs are compared to select, from among the plurality of candidates for a travel course, a candidate for a travel course that does not overlap the obstacle and that is determined to be the most recommended travel course for the vehicle to travel along (S107, S127). Thus, it becomes possible to select a more recommended travel course from among candidates for a travel course that do not overlap an obstacle in a target overlapping segment, by comparing costs.

A plurality of start vectors, each identifying the location and orientation of the vehicle at the starting point of the turn segment are obtained and a plurality of end vectors, each identifying the location and orientation of the vehicle at the end point of the turn segment are obtained (S74); for each of combinations of the start vectors and the end vectors, a travel course that passes from a corresponding start vector to a corresponding end vector in directions of the respective vectors is generated as a candidate for a travel course (S75 to S81); a candidate for a travel course that does not overlap the obstacle and that is determined to be the most recommended travel course for the vehicle to travel along is selected from among the generated candidates for a travel course (S83); and a travel course recommended for the vehicle to travel along is generated using the selected candidate for a travel course. Thus, by obtaining a plurality of candidates for a start vector and an end vector, it becomes possible to generate many candidates for a travel course that pass through corresponding start vectors and corresponding end vectors in directions of the respective vectors, and a travel course that can avoid an obstacle can be selected from among the candidates for a travel course.

Note that the present invention is not limited to the above-described embodiment, and it is, of course, possible to make various modifications and alterations thereto without departing from the spirit and scope of the present invention.

For example, in the present embodiment, orientations of the vehicle taken when the vehicle reaches a starting point and an end point of a turn segment both are set (S51, S71, S91, S111), but an orientation of the vehicle taken when the vehicle reaches only either one of the starting point and the end point of the turn segment may be set. For example, when a travel course for a turn segment is generated with a current location of the vehicle being a starting point of the turn segment, only an orientation of the vehicle taken when the vehicle reaches an end point of the turn segment is set. In addition, an orientation of the vehicle taken when the vehicle reaches a point (e.g., a clipping point 85 or a midway point) other than the starting point and the end point of the turn segment may be set.

In addition, in the present embodiment, a center line 81 and a moving average line 82 are identified based on map information, and the presence of a curve is identified by comparing the center line 81 with the moving average line 82 (S34), but for example, the presence of a curve may be identified by performing an image recognition process on an image captured with an exterior camera.

In addition, in the present embodiment, the center line 81 serves as a center line of a lane in which the vehicle travels, but for a one-lane road or a road with no marked lanes, the center line 81 may serve as a center line of the road.

In addition, in the present embodiment, travel courses for a turn segment are generated using a plurality of patterns that can be taken by the vehicle, and a finally recommended travel course is determined by comparing costs of the generated travel courses, but a travel course for a turn segment may be generated using only one pattern that is recommended most as a result of taking into account in advance the geometry of a lane in which the vehicle travels, etc.

In addition, in the present embodiment, after generating a travel course, vehicle control for traveling along the generated travel course is performed (S9, S10), but it is also possible to omit processes related to the vehicle control at and after S9. For example, the navigation device 1 may be a device that provides a user with guidance on a recommended travel course, without performing vehicle control based on a travel course.

In addition, in the present embodiment, a lane network and an intra-parking-lot network are generated using high-precision map information 16 and facility information 17 (S23), but networks for roads and parking lots across the country may be stored in advance in a DB, and the networks may be read from the DB as necessary.

In addition, in the present embodiment, high-precision map information provided in the server device 4 includes both information about the lane geometries of roads (lane-by-lane road geometries, curvatures, lane widths, etc.) and information about markings (centerlines, lane lines, edge lines, guide lines, etc.) painted on the roads, but may include only the information about markings or may include only the information about the lane geometries of roads. For example, even when only the information about markings is included, it is possible to estimate information corresponding to the information about the lane geometries of roads, based on the information about markings. In addition, even when only the information about the lane geometries of roads is included, it is possible to estimate information corresponding to the information about markings, based on the information about the lane geometries of roads. In addition, the "information about markings" may be information that identifies the types and layout of markings themselves that mark off lanes, or may be information that identifies whether or not a lane change can be made between adjacent lanes, or may be information that directly or indirectly identifies the geometries of lanes.

In addition, in the present embodiment, as means for reflecting a dynamic travel course in a static travel course, a part of the static travel course is replaced by the dynamic travel course (S7), but instead of replacement, the static travel course may be modified to approximate to the dynamic travel course.

In addition, in the present embodiment, controlling, by the vehicle control ECU 40, of all of an accelerator operation, a brake operation, and a steering wheel operation which are operations related to vehicle behavior among vehicle's operations is described as autonomous driving assistance for performing autonomous travel independently of user's driving operations. However, the autonomous driving assistance may refer to controlling, by the vehicle control ECU 40, of at least one of an accelerator operation, a brake operation, and a steering wheel operation which are operations related to vehicle behavior among vehicle's operations. On the other hand, manual driving by user's driving operations is described as the user performing all of an accelerator operation, a brake operation, and a steering wheel operation which are operations related to vehicle behavior among vehicle's operations.

In addition, driving assistance of the present invention is not limited to autonomous driving assistance related to vehicle's autonomous driving. For example, it is also possible to provide driving assistance by displaying a static travel course generated at the above-described S3 or a dynamic travel course generated at the above-described S6 on a navigation screen and providing guidance (e.g., guidance on a lane change or guidance on a recommended vehicle speed) using voice, a screen, etc. In addition, user's driving operations may be assisted by displaying a static travel course or a dynamic travel course on a navigation screen.

In addition, in the present embodiment, a configuration is adopted in which the autonomous driving assistance program (FIG. 5) is executed by the navigation device 1, but a configuration may be adopted in which the autonomous driving assistance program is executed by an in-vehicle device other than the navigation device 1 or by the vehicle control ECU 40. In that case, a configuration is adopted in which the in-vehicle device or the vehicle control ECU 40 obtains a current location of the vehicle, map information, etc., from the navigation device 1 or the server device 4. Furthermore, the server device 4 may perform some or all of the steps of the autonomous driving assistance program (FIG. 5). In that case, the server device 4 corresponds to a driving assistance device of the present application.

In addition, the present invention can also be applied to mobile phones, smartphones, tablet terminals, personal computers, etc. (hereinafter, referred to as portable terminals, etc.) in addition to navigation devices. In addition, it becomes also possible to apply the present invention to a system including a server and a portable terminal, etc. In that case, a configuration may be adopted in which each step of the above-described autonomous driving assistance program (see FIG. 5) is performed by either one of the server and the portable terminal, etc. Note, however, that when the present invention is applied to a portable terminal, etc., a vehicle that can provide autonomous driving assistance needs to be connected to the portable terminal, etc., such that they can communicate with each other (it does not matter whether they are connected by wire or wirelessly).

### [Summary of the present embodiment]

The present embodiment has at least the following configurations:
There are included planned travel path obtaining means (51) for obtaining a planned travel path along which a vehicle (5) travels; turn travel segment obtaining means (51) for obtaining a turn segment where the vehicle travels with a turn upon traveling along the planned travel path; obstacle information obtaining means (51) for obtaining obstacle information about an obstacle (126) present on the planned travel path; orientation setting means (51) for setting an orientation of the vehicle taken when the vehicle reaches a target point including at least one of a starting point and an end point of the turn segment, based on the planned travel path; travel course generating means (51) for generating, using the obstacle information, a travel course (96, 97, 98) that avoids the obstacle on the turn segment and that is recommended for the vehicle to travel along on the turn segment, on condition that an orientation of the vehicle upon reaching the target point coincides with the orientation set by the orientation setting means; and driving assistance means (51) for providing driving assistance for the vehicle, based on the travel course generated by the travel course generating means.

According to this configuration, when, particularly, a travel course that avoids an obstacle is generated for a turn segment, it becomes possible to generate a travel course recommended for the vehicle that prevents the vehicle from performing unnatural behavior at at least one of a starting point and an end point of the turn segment, by which a sudden speed change or lateral acceleration is suppressed. As a result, it becomes possible to provide appropriate driving assistance that does not impose a burden on a vehicle's occupant.

In addition, in the present embodiment, it is preferred that there be included overlapping determining means (51) for determining, when the turn segment is a segment where the vehicle (5) travels with a turn on a curved road, whether or not the obstacle (126) is present at a location where the obstacle (126) overlaps a center line of a lane in which the vehicle is planning to travel, and when the obstacle is present at the location where the obstacle overlaps the center line, the travel course generating means (51) generate, as a travel course recommended for the vehicle to travel along, a travel course generated with reference to the center line and modified such that a portion of the travel course corresponding to a target overlapping segment does not overlap the obstacle, the target overlapping segment including an area where a portion of the center line overlaps the obstacle.

According to this configuration, it becomes possible to generate a travel course where the vehicle avoids an obstacle with minimum vehicle operation while traveling near a travel course that is recommended for travel when it is assumed that there is no obstacle.

In addition, in the present embodiment, it is preferred that there be included overlapping determining means (51) for determining, when the turn segment is a segment where the vehicle (5) travels with a turn on a curved road, whether or not the obstacle (126) is present at a location where the obstacle (126) overlaps a center line (125) of a lane in which the vehicle is planning to travel, and when the obstacle is present at a location where the obstacle does not overlap the center line, the travel course generating means (51) generate, as a travel course recommended for the vehicle to travel along, a travel course generated with reference to a reference travel course (131) and modified such that a portion of the travel course corresponding to a target overlapping segment does not overlap the object, the reference travel course (131) being a travel course that is generated without taking into account the obstacle and that is recommended for the vehicle to travel along on the turn segment, and the target overlapping segment including an area where a portion of the reference travel course overlaps the obstacle.

According to this configuration, it becomes possible to generate a travel course where the vehicle avoids an obstacle with minimum vehicle operation while traveling near a travel course that is recommended for travel when it is assumed that there is no obstacle.

In addition, in the present embodiment, it is preferred that there be included start vector obtaining means (51) for obtaining a start vector (83) that identifies the location and orientation of the vehicle at the starting point of the turn segment, based on a corresponding one of the orientations of the vehicle (5) set by the orientation setting means (51); and end vector obtaining means (51) for obtaining an end vector (84) that identifies the location and orientation of the vehicle at the end point of the turn segment, based on a corresponding one of the orientations of the vehicle set by the orientation setting means, and the travel course generating means (51) divide the target overlapping segment into a plurality of segments; set a candidate for a passing point (X1 to X3, Y1 to Y3, Z1 to Z3) through which the vehicle passes, at a boundary between the plurality of divided segments; and generate a travel course that passes from the start vector to the end vector via the candidate for a passing point in directions of the respective vectors, as a travel course recommended for the vehicle to travel along, the candidate for a passing point being present at the boundary between the segments.

According to this configuration, it becomes possible to generate a travel course which does not overlap an obstacle in a target overlapping segment and in which the orientations of the vehicle upon reaching a starting point and an end point of a turn segment coincide with recommended orientations.

In addition, in the present embodiment, it is preferred that the travel course generating means (51) set a plurality of candidates for a passing point (X1 to X3, Y1 to Y3, Z1 to Z3) through which the vehicle (5) passes, at the boundary between the plurality of segments; generate, for each of the candidates for a passing point, a travel course that passes from the start vector (83) to the end vector (84) via the candidate for a passing point in directions of the respective vectors, as a candidate for the travel course, the candidate for a passing point being present at the boundary between the segments; and compare the plurality of candidates for a travel course generated for the respective candidates for a passing point, to select a candidate for a travel course that does not overlap the obstacle (126) and that is determined to be the most recommended travel course for the vehicle to travel along, and generate a travel course recommended for the vehicle to travel along, using the selected candidate for a travel course.

According to this configuration, it becomes possible to suggest a plurality of candidates for a travel course that do not overlap an obstacle in a target overlapping segment, and select a more recommended travel course from among the suggested candidates for a travel course.

In addition, in the present embodiment, the travel course generating means (51) calculates cost for each of the plurality of candidates for a travel course generated for the respective candidates for a passing point (X1 to X3, Y1 to Y3, Z1 to Z3), and compares the calculated costs to select, from among the plurality of candidates for a travel course, a candidate for a travel course that does not overlap the obstacle (126) and that is determined to be the most recommended travel course for the vehicle to travel along.

According to this configuration, it becomes possible to select a more recommended travel course from among candidates for a travel course that do not overlap an obstacle in a target overlapping segment, by comparing costs.

In addition, in the present embodiment, it is preferred that there be included start vector obtaining means (51) for obtaining a plurality of start vectors (83), each identifying the location and orientation of the vehicle at the starting point of the turn segment, based on a corresponding one of the orientations of the vehicle (5) set by the orientation setting means (51); and end vector obtaining means (51) for obtaining a plurality of end vectors (84), each identifying the location and orientation of the vehicle at the end point of the turn segment, based on a corresponding one of the orientations of the vehicle set by the orientation setting means, and the travel course generating means (51) generate, for each of combinations of the start vectors and the end vectors, a travel course that passes from a corresponding one of the start vectors to a corresponding one of the end vectors in directions of the respective vectors, as a candidate for the travel course; and select a candidate for a travel course that does not overlap the obstacle (126) and that is determined to be the most recommended travel course for the vehicle to travel along, from among the generated candidates for a travel course, and generate a travel course recommended for the vehicle to travel along, using the selected candidate for a travel course.

According to this configuration, by obtaining a plurality of candidates for a start vector and an end vector, it becomes possible to generate many candidates for a travel course that pass through corresponding start vectors and corresponding end vectors in directions of the respective vectors, and a travel course that can avoid an obstacle can be selected from among the candidates for a travel course.

### REFERENCE SIGNS LIST

1: Navigation device (Driving assistance device), 2: Driving assistance system, 3: Information delivery center; 4: Server device, 5: Vehicle, 16: High-precision map information; 33: Navigation ECU, 40: Vehicle control ECU, 51: CPU, 83: Start vector (Starting point of a turn segment), 84: End vector (End point of the turn segment), 85: Clipping point, 96: First travel course, 97: Second travel course, 98: Third travel course, 125: Guide line (Center line of a lane), 126: Obstacle, 127: Moving average line for a guide line, and 131: Guide line (Reference travel course)

## Claims

1. A driving assistance device comprising:
planned travel path obtaining means for obtaining a planned travel path along which a vehicle travels;
turn travel segment obtaining means for obtaining a turn segment where the vehicle travels with a turn upon traveling along the planned travel path;
obstacle information obtaining means for obtaining obstacle information about an obstacle present on the planned travel path;
orientation setting means for setting an orientation of the vehicle taken when the vehicle reaches a target point including at least one of a starting point and an end point of the turn segment, based on the planned travel path;
travel course generating means for generating, using the obstacle information, a travel course that avoids the obstacle on the turn segment and that is recommended for the vehicle to travel along on the turn segment, on condition that an orientation of the vehicle upon reaching the target point coincides with the orientation set by the orientation setting means; and
driving assistance means for providing driving assistance for the vehicle, based on the travel course generated by the travel course generating means.

2. The driving assistance device according to claim 1, comprising:
overlapping determining means for determining, when the turn segment is a segment where a vehicle travels with a turn on a curved road, whether or not the obstacle is present at a location where the obstacle overlaps a center line of a lane in which the vehicle is planning to travel,
wherein
when the obstacle is present at a location where the obstacle overlaps the center line,
the travel course generating means generates, as the travel course recommended for the vehicle to travel along, a travel course generated with reference to the center line and modified such that a portion of the travel course corresponding to a target overlapping segment does not overlap the obstacle, the target overlapping segment including an area where a portion of the center line overlaps the obstacle.

3. The driving assistance device according to claim 1, comprising overlapping determining means for determining, when the turn segment is a segment where the vehicle travels with a turn on a curved road, whether or not the obstacle is present at a location where the obstacle overlaps a center line of a lane in which the vehicle is planning to travel,
wherein
when the obstacle is present at a location where the obstacle does not overlap the center line,
the travel course generating means generates, as the travel course recommended for a vehicle to travel along, a travel course generated with reference to a reference travel course and modified such that a portion of the travel course corresponding to a target overlapping segment does not overlap the object, the reference travel course being a travel course that is generated without taking into account the obstacle and that is recommended for the vehicle to travel along on the turn segment, and the target overlapping segment including an area where a portion of the reference travel course overlaps the obstacle.

4. The driving assistance device according to claim 2 or 3, comprising:
start vector obtaining means for obtaining a start vector that identifies a location and an orientation of the vehicle at the starting point of the turn segment, based on a corresponding one of the orientations of the vehicle set by the orientation setting means; and
end vector obtaining means for obtaining an end vector that identifies a location and an orientation of the vehicle at the end point of the turn segment, based on a corresponding one of the orientations of the vehicle set by the orientation setting means,
wherein
the travel course generating means
divides the target overlapping segment into a plurality of segments; sets a candidate for a passing point through which the vehicle passes, at a boundary between the plurality of divided segments; and
generates a travel course that passes from the start vector to the end vector via the candidate for a passing point in directions of the respective vectors, as the travel course recommended for the vehicle to travel along, the candidate for a passing point being present at the boundary between the segments.

5. The driving assistance device according to claim 4, wherein
the travel course generating means
sets a plurality of candidates for a passing point through which the vehicle passes, at the boundary between the plurality of segments;
generates, for each of the candidates for a passing point, a travel course that passes from the start vector to the end vector via the candidate for a passing point in directions of the respective vectors, as a candidate for the travel course, the candidate for a passing point being present at the boundary between the segments; and
compares the plurality of candidates for a travel course generated for the respective candidates for a passing point, selects a candidate for a travel course that does not overlap an obstacle and that is determined to be a most recommended travel course for the vehicle to travel along, and generates a travel course recommended for the vehicle to travel along, using the selected candidate for a travel course.

6. The driving assistance device according to claim 5, wherein
the travel course generating means
calculates a cost for each of the plurality of candidates for a travel course generated for the respective candidates for a passing point; and
compares the calculated costs to select, from among the plurality of candidates for a travel course, a candidate for a travel course that does not overlap an obstacle and that is determined to be a most recommended travel course for the vehicle to travel along.

7. The driving assistance device according to claim 1, comprising:
start vector obtaining means for obtaining a plurality of start vectors, each identifying a location and an orientation of the vehicle at the starting point of the turn segment, based on a corresponding one of the orientations of the vehicle set by the orientation setting means; and
end vector obtaining means for obtaining a plurality of end vectors, each identifying a location and an orientation of the vehicle at the end point of the turn segment, based on a corresponding one of the orientations of the vehicle set by the orientation setting means,
wherein
the travel course generating means
generates, for each of combinations of the start vectors and the end vectors, a travel course that passes from a corresponding one of the start vectors to a corresponding one of the end vectors in directions of the respective vectors, as a candidate for the travel course; and
selects a candidate for a travel course that does not overlap an obstacle and that is determined to be a most recommended travel course for the vehicle to travel along, from among the generated candidates for a travel course, and generates a travel course recommended for the vehicle to travel along, using the selected candidate for a travel course.

8. A computer program for causing a computer to function as:
planned travel path obtaining means for obtaining a planned travel path along which a vehicle travels;
turn travel segment obtaining means for obtaining a turn segment where the vehicle travels with a turn upon traveling along the planned travel path;
obstacle information obtaining means for obtaining obstacle information about an obstacle present on the planned travel path;
orientation setting means for setting an orientation of the vehicle taken when the vehicle reaches a target point including at least one of a starting point and an end point of the turn segment, based on the planned travel path;
travel course generating means for generating, using the obstacle information, a travel course that avoids the obstacle on the turn segment and that is recommended for the vehicle to travel along on the turn segment, on condition that an orientation of the vehicle upon reaching the target point coincides with the orientation set by the orientation setting means; and
driving assistance means for providing driving assistance for the vehicle, based on the travel course generated by the travel course generating means.
